(19) Europäisches Patentamt
European Patent Office
Office européen des brevets

(11) EP 0 946 100 B1

(12) EUROPÄISCHE PATENTSCHRIFT

(45) Veröffentlichungstag und Bekanntmachung des Hinweises auf die Patenterteilung:
**25.06.2003 Patentblatt 2003/26**

(21) Anmeldenummer: **97951222.5**

(22) Anmeldetag: **18.11.1997**

(51) Int Cl.[7]: **A01N 47/36**

(86) Internationale Anmeldenummer:
**PCT/EP97/06416**

(87) Internationale Veröffentlichungsnummer:
**WO 98/024320 (11.06.1998 Gazette 1998/23)**

(54) **HERBIZIDE MITTEL MIT N-[(4,6-DIMETHOXYPYRIMIDIN-2-YL)AMINOCARBONYL]-5-METHYLSULFONAMIDOMETHYL-2-ALKOXYCARBONYLBENZOLSULFONAMIDEN**

HERBICIDES CONTAINING N-[(4,6-DIMETHOXYPYRIMIDINE-2-YL)AMINOCARBONYL]-5-METHYLSULPHONAMIDOMETHYL-2-ALKOXYCARBONYLBENZENE SULPHONAMIDES

HERBICIDES CONTENANT DES N-[(4,6-DIMETHOXYPYRIMIDINE-2-YL)AMINOCARBONYL]-5-METHYLSULFONAMIDOMETHYL-2-ALCOXYCARBONYLBENZENESULFONAMIDES

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **07.12.1996 DE 19650955**

(43) Veröffentlichungstag der Anmeldung:
**06.10.1999 Patentblatt 1999/40**

(73) Patentinhaber: **Bayer CropScience GmbH**
**65929 Frankfurt/Main (DE)**

(72) Erfinder:
- **HACKER, Erwin**
**D-65239 Hochheim (DE)**
- **BIERINGER, Hermann**
**D-65817 Eppstein (DE)**
- **LORENZ, Klaus**
**D-64331 Weiterstadt (DE)**

(74) Vertreter: **Mai, Peter M.**
**Luderschmidt, Schüler & Partner GbR**
**Patentanwälte**
**Postfach 3929**
**65029 Wiesbaden (DE)**

(56) Entgegenhaltungen:
**WO-A-95/10507**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf das technische Gebiet der Pflanzenschutzmittel, insbesondere betrifft die Erfindung herbizide Mittel mit N-[(4,6-Dimethoxypyrimidin-2-yl)aminocarbonyl]-5-methylsulfonamidomethyl-2-alkoxycarbonylbenzolsulfonamiden und/oder ihren Salzen.

Aus der WO 95/10507 (PCT/EP94/03369) sind Phenylsulfonylharnstoffe der allgemeinen Formel 1 und deren Salze bekannt,

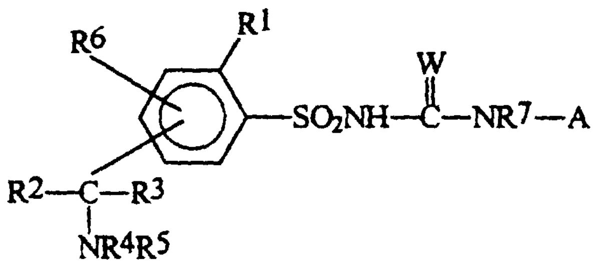

(1),

wobei von der allgemeinen Formel 1 durch die umfangreiche und breite Definition der Reste A, W, $R^1$, $R^2$, $R^3$, $R^4$, $R^5$, $R^6$ und $R^7$ eine Vielzahl von möglichen Einzelverbindungen umfaßt werden.

In Tabelle 1 der WO 95/10507 werden Verbindungen der Formel 1a aufgezählt

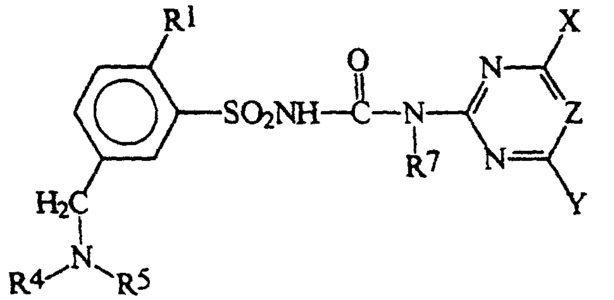

(1a),

wobei sich die Beispiele mit den Nummern 105, 209, 217, 395, 399, 403, 407, 497 und 536 auf solche Verbindungen der Formel 1a beziehen, worin Z für CH, X und Y für Methoxy, $R^7$ für Wasserstoff, $R^1$ für Alkoxycarbonyl, $R^4$ für Wasserstoff und $R^5$ für einen eine Sulfonylgruppe enthaltenden Rest ($SO_2CH_3$, $SO_2NHCH_3$, $SO_2N(CH_3)_2$, $SO_2N(CH_3)_2$, $SO_2CH_2F$, $SO_2CF_3$, $SO_2C_2H5$, $SO_2$-n-$C_3H_7$, $SO_2CH_3$ bzw. $SO_2CH_3$) stehen. Allerdings ist nur bei den Beispielen 105 ($R^1$=Methoxycarbonyl, $R^5$=Methylsulfonyl) und 217 ($R^1$=Methoxycarbonyl, $R^5$= $SO_2N(CH_3)_2$) sowie dem Beispiel 536 (Na-Salz der Verbindung 105) ein Schmelzpunkt angegeben.

Biologische Beispiele werden für die oben einzeln genannten Verbindungen in der WO 95/10507 insofern aufgeführt, als pauschal angegeben wird, daß die Verbindungen der Beispiele 105, 217 und 536 - neben einer ganzen Reihe anderer Verbindungen - sehr gute Wirkung gegen Schadpflanzen wie Sinapis alba, Stellaria media, Chrysanthemum segetum und Lolium multiflorum im Vor- und im Nachauflaufverfahren bei einer Aufwandmenge von 0,3 kg bis 0,005 kg Aktivsubstanz pro Hektar aufweisen. Die Kulturpflanzenverträglichkeit der Verbindungen der Formel 1 ist in der genannten Internationalen Offenlegungsschrifft nicht mit Beispielen belegt.

Weiters wird ein pauschaler Hinweis auf die Möglichkeit gegeben, daß die Verbindungen der Formel 1 mit weiteren Herbiziden angewendet werden können. Diesem Hinweis folgt eine beispielhafte Aufzählung von mehr als ca. 250 verschiedenen Standardwirkstoffen, wobei wörtlich unter anderem Amidosulfuron, Bentazone, Bifenox, Bromoxynil, Cafentrazon (ICI-A0051), Chlortoluron, Chlorsulfuron, Clodinafop und dessen Esterderivate (z.B. Clodinafop-Propargyl), Dicamba, Dichlorprop, Diclofop und dessen Ester wie Diclofop-methyl, Difenzoquat, Diflufenican, Fenoxaprop und Fenoxaprop-P sowie deren Ester wie z.B. Fenoxaprop-P-ethyl und Fenoxaprop-ethyl, Flamprop-methyl, Fluoroglycofen-ethyl, Fluroxypyr, Flurtamone, Fomesafen, Glufosinate, Glyphosate, Imazamethabenz-methyl, Ioxynil, Isoproturon, Lactofen, MCPA, Mecoprop, Methabenzthiazuron, Metribuzin, Metsulfuron-methyl, Pendimethalin, Prosulfocarb, Thifensulfuron-methyl, Tralkoxydim, Triasulfuron und Tribenuron-methyl Erwähnung finden. Über die bloße Erwähnung der Substanzen hinausgehende Informationen hinsichtlich des besonderen Sinnes und Zweckes einer gemeinsamenen Anwendung sind der WO 95/10507 ebensowenig entnehmbar, wie etwa eine Motivation zur gezielten Auswahl und Kombination bestimmter Wirkstoffe.

Die aus der WO 95/10507 gemäß Formel 1 und 1a bekannten Phenylsulfonylharnstoffe weisen zwar größtenteils eine brauchbare bis gute Wirksamkeit gegen ein breites Spektrum wirtschaftlich wichtiger mono- und dikotyler Schadpflanzen auf und auch unter den spezifischen Kulturbedingungen im Reis vorkommende Unkräuter, wie z. B. Sagittaria, Alisma, Eleocharis, Scirpus, Cyperus etc., werden mit Hilfe von Wirkstoffen der allgemeinen Formeln 1 oder 1a bekämpft, zur Bekämpfung des in der landwirtschaftlichen Praxis vor allem in Getreide oder Mais, aber auch in anderen Kulturarten auftretenden Spektrums an mono- und dikotylen Unkräutern reichen die Einzelwirkstoffe jedoch oft nicht aus.

Angesichts des hierin angegebenen und diskutierten Standes der Technik war es mithin Aufgabe der Erfindung neue Mischungen mit herbizider Wirksamkeit anzugeben, um den Praktiker in die Lage zu versetzen, mit einer Applikation bzw. wenigen Applikationen von Herbiziden das Unkrautspektrum oder einzelne schwer zu bekämpfende Unkrautspezies in Getreide u. a. Kulturarten zu kontrollieren. Des weiteren sollen die Mischungen aus grundsätzlich bekannten herbiziden Wirkstoffen dazu beitragen, sogenannte "Wirkungslücken" zu schließen und nach Möglichkeit gleichzeitig die Aufwandmengen der Einzelwirkstoffe zu reduzieren sowie die zeitliche Anwendungsflexibilität zu erhöhen.

Gelöst werden diese sowie weitere nicht einzeln aufgeführte Aufgaben durch herbizide Mittel mit den Merkmalen des Anspruchs 1. So sind Gegenstand der Erfindung herbizide Mittel, enthaltend

A) mindestens einen herbiziden Wirkstoff aus der Gruppe der substituierten Phenylsulfonylharnstoffe der allgemeinen Formel I und deren landwirtschaftlich akzeptierten, d.h. annehmbaren oder einsetzbaren Salze

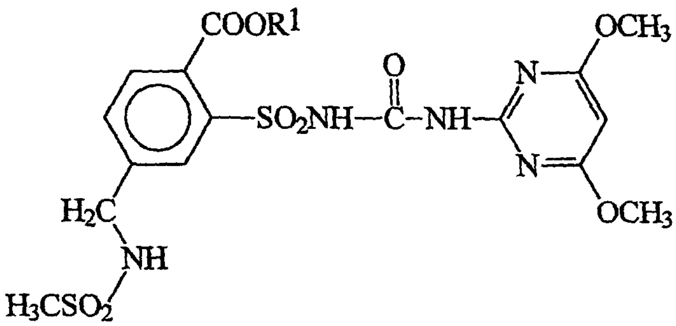

(I),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet

und

B) mindestens eine herbizid wirksame Verbindung aus der Gruppe der Verbindungen, welche aus

Ba) selektiv in Getreide gegen Gräser wirksamen Herbiziden aus der Gruppe, die aus

B1) Fenoxaprop, Fenoxaprop-P

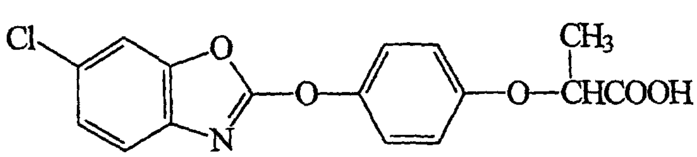

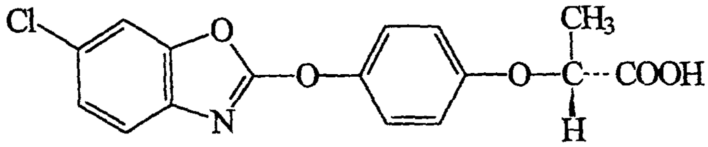

,

B2) Isoproturon

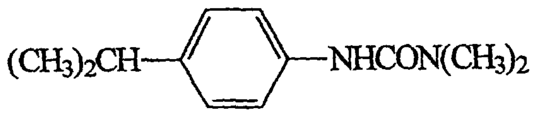

,

B3) Diclofop

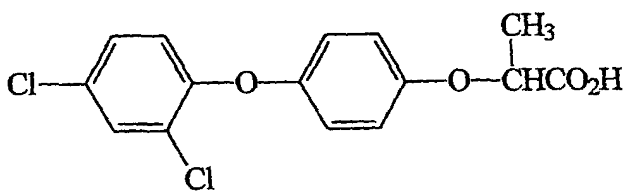

,

B4) Clodinafop

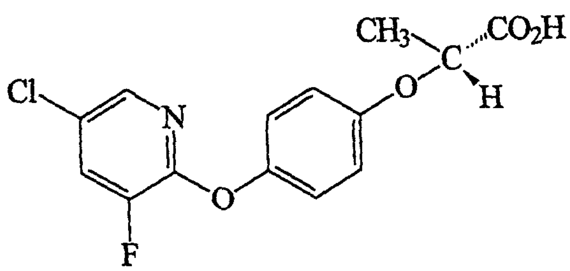

,

B5) Mischungen aus B4) und Cloquintocet

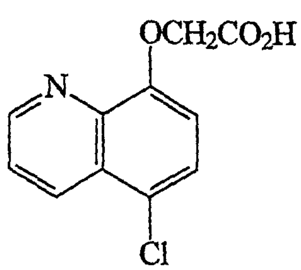

,

B6) Chlorotoluron

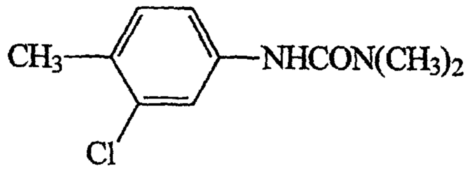

,

B7) Methabenzthiazuron

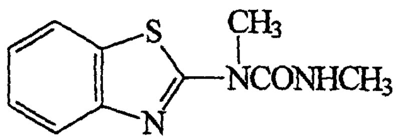

,

B8) Imazamethabenz

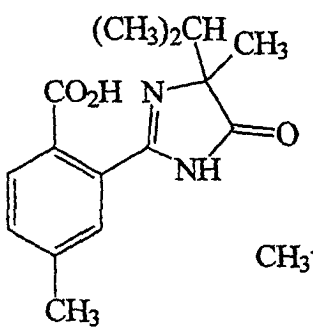

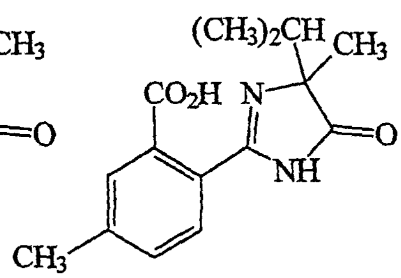

,

B9) Tralkoxydim

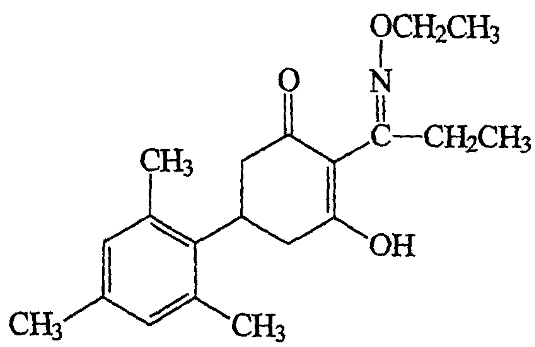

,

B10)Difenzoquat

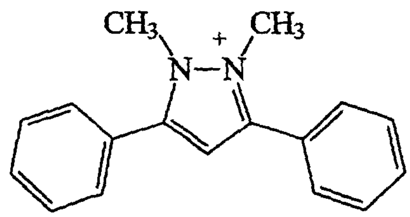

,

B11)Flamprop, Flamprop-M

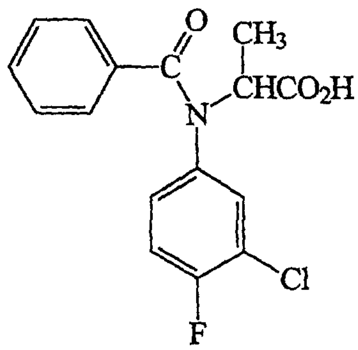

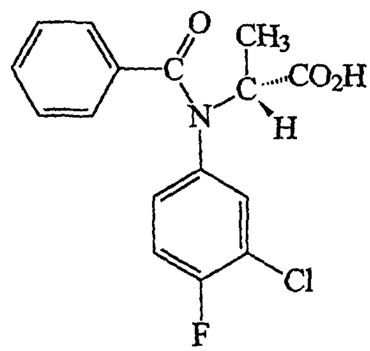

und

B12)Pendimethalin

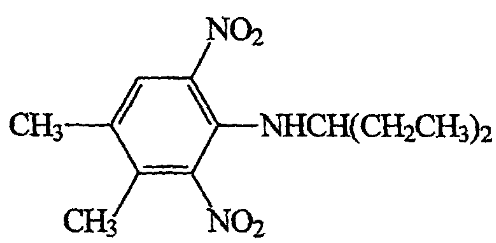

besteht,

Bb) selektiv in Getreide gegen Dikotyle wirksamen Herbiziden aus der Gruppe, die aus

B13)Mecoprop, Mecoprop-P

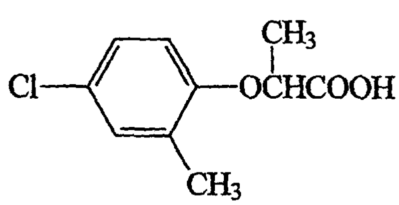

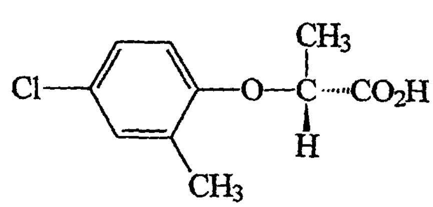

,

B14)MCPA

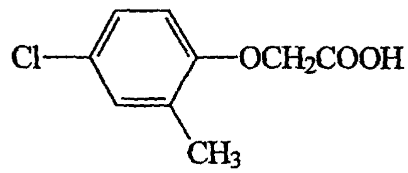

,

B15)Dichlorprop, Dichlorprop-P

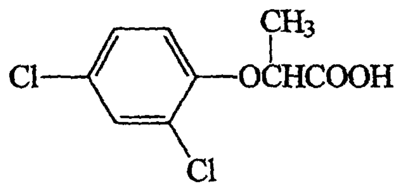

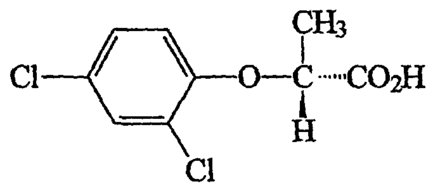

,

B16)2,4-D

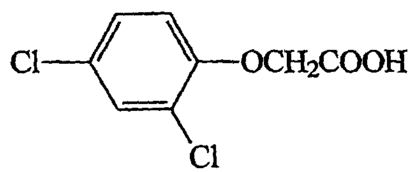

,

B17)Dicamba

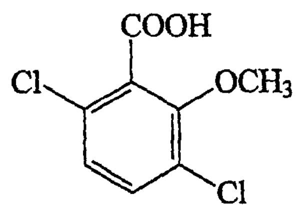

,

B18)Fluroxypyr

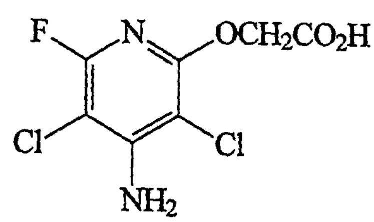

,

B19)Ioxynil

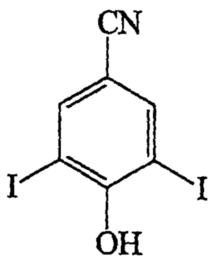

,

B20)Bromoxynil

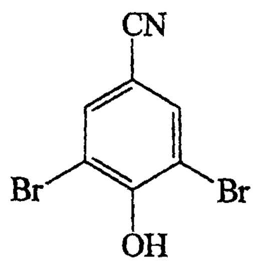

,

B21)Bifenox
Methyl-5-(2,4-Dichlorphenoxy)-2-nitrobenzoat

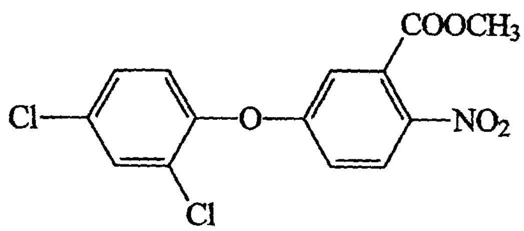

,

B22)Fluoroglycofen

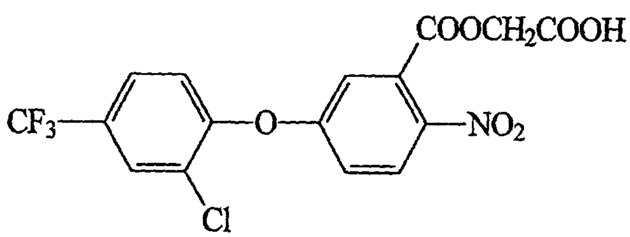

,

B23)Lactofen

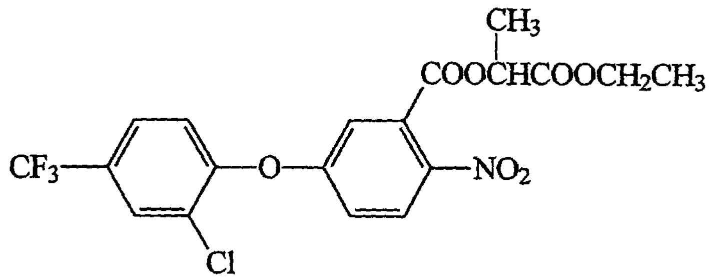

,

B24)Fomesafen

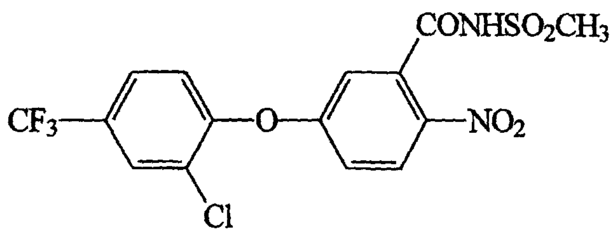

,

B25) Oxyfluorfen

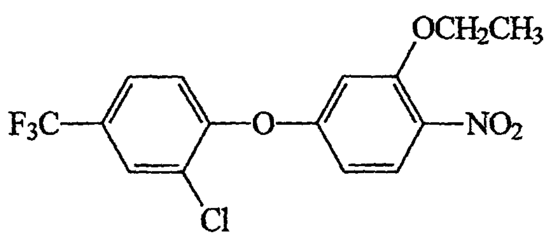

,

B26)ET-751

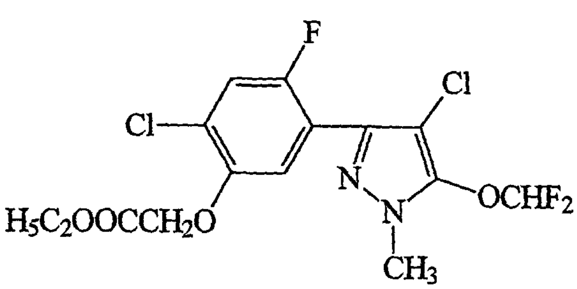

,

B27)Azolen der allgemeinen Formel II

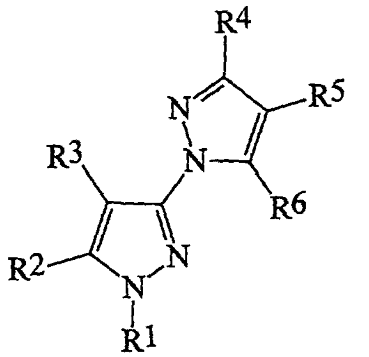

(II),

,

worin

| | |
|---|---|
| $R^1$ | $(C_1\text{-}C_4)$-Alkyl ist, |
| $R^2$ | $(C_1\text{-}C_4)$-Alkyl, $(C_1\text{-}C_4)$-Alkylthio oder $(C_1\text{-}C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1\text{-}C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1\text{-}C_4)$Alkyl, $(C_1\text{-}C_4)$-Alkylthio oder $-NR^{11}R^{12}$ ist, |
| $R^7$ und $R^8$ | gleich oder verschieden Wasserstoff oder $(C_1\text{-}C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1\text{-}C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1\text{-}C_4)$-Alkyl oder $(C_1\text{-}C_4)$ -Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

B28) F 8426

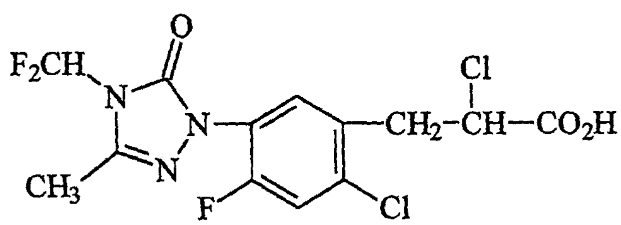

,

B29)Diflufenican

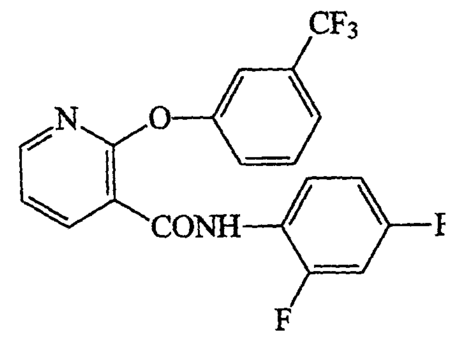

und

B30)Bentazon

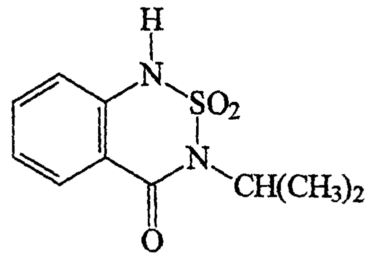

besteht,

Bc) selektiv in Getreide gegen Gräser und Dikotyle wirksamen Herbiziden aus der Gruppe, die aus

B31)Metribuzin

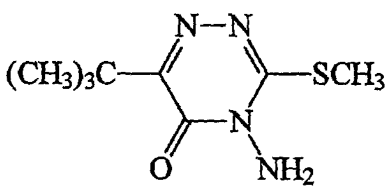

,

B32)Metosulam

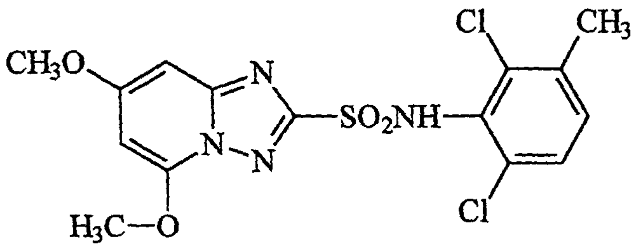

,

B32a)Flupoxam

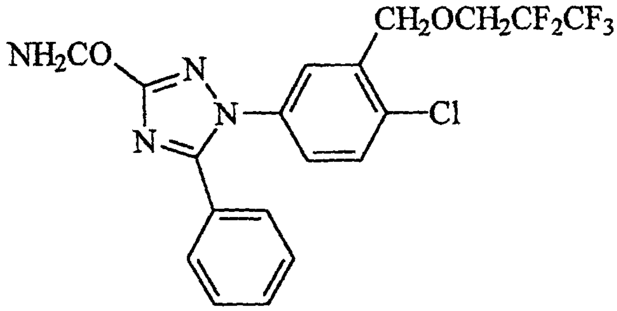

,

B33)Prosulfocarb

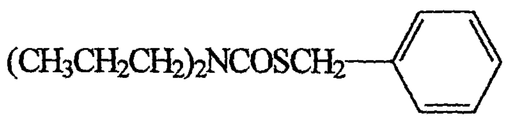

,

B34)Flurtamone

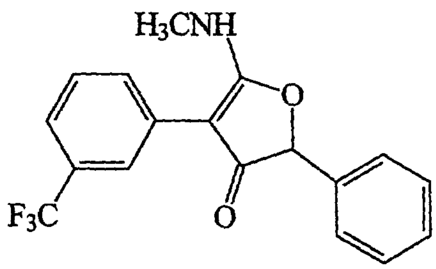

,

B35)Amidosulfuron

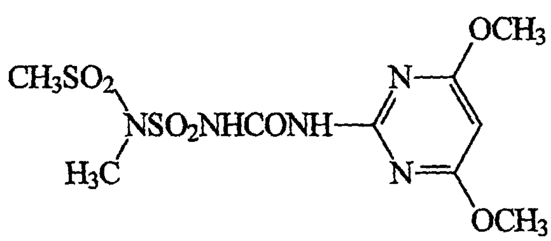

,

B36)Metsulfuron

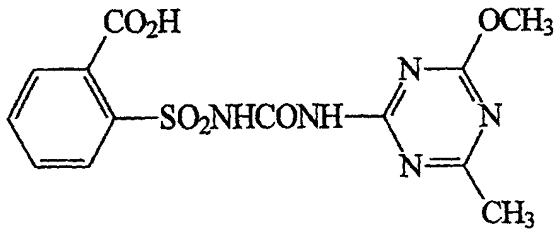

,

B37)Tribenuron

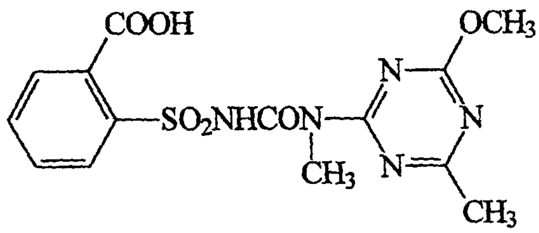

,

B38)Thifensulfuron

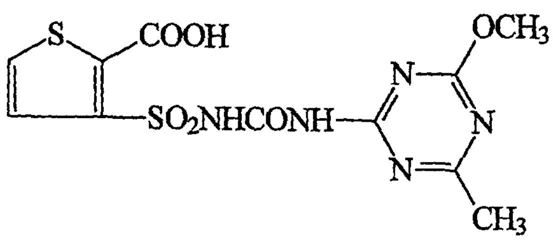

,

B39)Triasulfuron

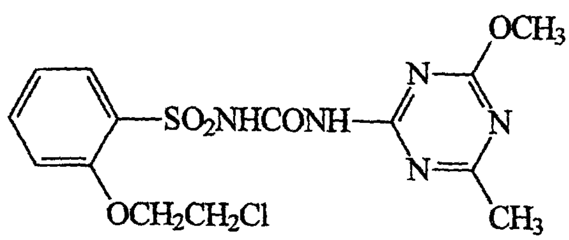

,

B40)Chlorsulfuron

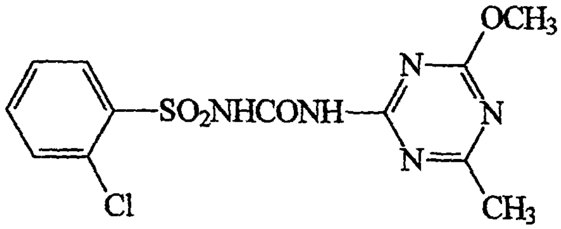

,

B41)Sulfonylharnstoffe der allgemeinen Formel III

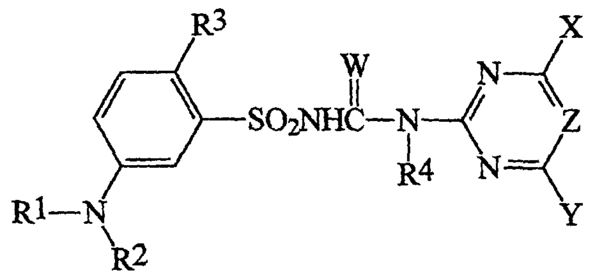

(III),

worin

| | |
|---|---|
| $R^1$ | Methyl, Ethyl, n-Propyl, i.Propyl oder Allyl ist, |
| $R^2$ | CO-$R^5$, COO$R^6$, CO-N$R^8R^9$, CS-N$R^{10}R^{11}$, $SO_2R^{14}$ oder $SO_2NR^{15}R^{16}$ |
| $R^3$ | COR$^{17}$, COOR$^{18}$, CONR$^{19}$R$^{20}$ oder CO-ON=CR$^{22}$R$^{23}$ ist, |
| $R^4$ | Wasserstoff oder ($C_1$-$C_4$)-Alkyl ist, |
| $R^5$ | Wasserstoff, ($C_1$-$C_4$)-Alkyl, ($C_1$-$C_2$)-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind, |
| $R^6$ | ($C_1$-$C_4$)-Alkyl, Allyl, Propargyl oder Cyclopropyl ist, |
| $R^8$ | Wasserstoff, ($C_1$-$C_4$)-Alkyl, ($C_1$-$C_4$)-Haloalkyl oder ($C_1$-$C_4$-Alkoxy)-carbonyl ist |
| $R^9$-$R^{11}$ | unabhängig voneinander gleich oder verschieden H oder ($C_1$-$C_4$)-Alkyl sind, |
| $R^{14}$ | ($C_1$-$C_4$)-Alkyl ist, |
| $R^{15}$ u. $R^{16}$ | unabhängig voneinander gleich oder verschieden Wasserstoff oder ($C_1$-$C_4$)-Alkyl sind, |
| $R^{17}$ | Wasserstoff, ($C_1$-$C_4$)-Alkyl, ($C_1$-$C_4$)-Haloalkyl, ($C_3$-$C_6$)-Cycloalkyl, Phenyl oder Heteroaryl ist, wobei die letztgenannten zwei Reste unsubstituiert oder substituiert sind, |
| $R^{18}$ | Wasserstoff, ($C_1$-$C_4$)-Alkyl, ($C_2$-$C_6$)-Alkenyl oder ($C_2$-$C_6$)-Alkinyl , wobei die letztgenannten drei Reste unsubstituiert oder durch einen oder mehrere Reste aus der Gruppe Halogen, ($C_1$-$C_4$)-Alkoxy, ($C_1$-$C_4$)-Alkylthio und $NR^{31}R^{32}$ substituiert sind, oder ($C_3$-$C_6$)-Cycloalkyl oder ($C_3$-$C_6$) -Cycloalkyl- ($C_1$-$C_3$)-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder ($C_1$-$C_2$)-Alkyl sind, |
| $R^{31}$ u. $R^{32}$ | unabhängig voneinander gleich oder verschieden Wasserstoff oder ($C_1$-$C_4$)-Alkyl sind, |
| W | Sauerstoff oder Schwefel ist, |
| X | ($C_1$-$C_4$)-Alkyl, ($C_1$-$C_4$)-Alkoxy, ($C_1$-$C_4$)-Haloalkyl, ($C_1$-$C_4$)-Alkylthio, Halogen oder Mono- oder Di-($C_1$-$C_2$-alkyl)-amino ist, |
| Y | ($C_1$-$C_4$)-Alkyl, ($C_1$-$C_4$)-Alkoxy, ($C_1$-$C_4$)-Haloalkyl oder ($C_1$-$C_4$)-Alkylthio ist, und |
| Z | CH oder N |

bedeutet,

B42)Sulfonylharnstoffe der allgemeinen Formel IV und deren landwirtschaftlich verträglichen und akzep-

tierten Salze

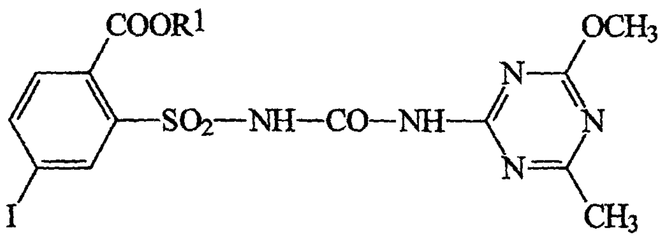

(IV),

worin

$R^1$ $(C_1-C_8)$-Alkyl, $(C_3-C_4)$-Alkenyl, $(C_3-C_4)$-Alkinyl oder $(C_1-C_4)$-Alkyl, das ein- bis vierfach durch Reste aus der Gruppe Halogen und $(C_1-C_2)$-Alkoxy substituiert ist, bedeutet,

wobei im Herbizid der Formel (IV) oder dessen Salz besonders bevorzugt

$R^1$ Methyl ist;

und wobei auch Salze besonders günstig Wirksamkeit zeigen, wobei das Salz des Herbizids der Formel (IV) durch Ersatz des Wasserstoffs der $-SO_2$-NH-CO-Gruppe durch ein Kation aus der Gruppe der Alkalimetalle, Erdalkalimetalle und Ammonium, bevorzugt Natrium, gebildet wird,
B43)Flupyrsulfuron (DPX-KE459)

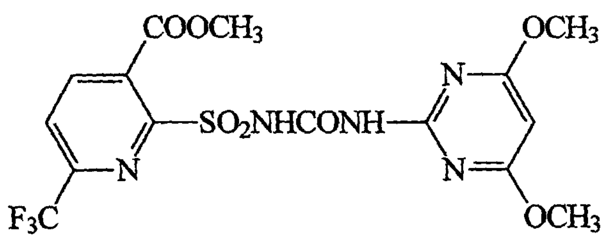

,

B44)MON 48500 und
B45)Sulfosulfuron (MON37500)

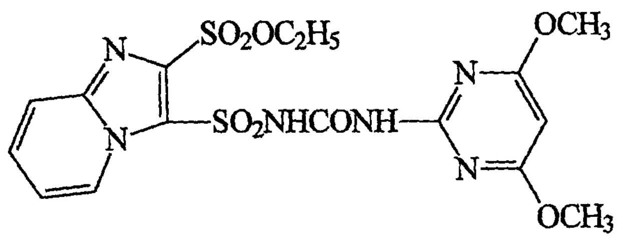

besteht,

und

Bd) im Nichtkulturland oder in Dauerkulturen (Plantagen) nichtselektiven und/oder in transgenen Kulturen selektiven Herbiziden mit Wirkung gegen Ungräser und Unkräuter aus der Gruppe, die aus

B46)Glufosinate, Glufosinate-P

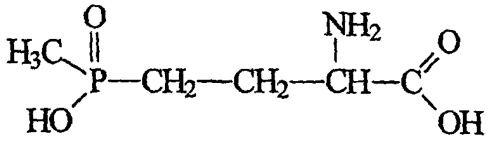
,

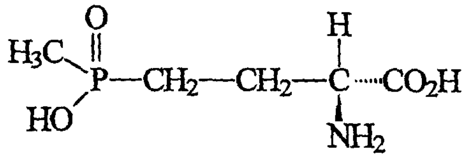

und

B47)Glyphosate

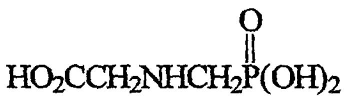

besteht,

besteht,
wobei sie die Verbindungen der Formel I oder deren Salze (Typ-A-Verbindungen) und die Verbindungen aus der Gruppe B in einem Gewichtsverhältnis von 1:2500 bis 20:1 in einer synergistisch wirksamen Menge enthalten.

Durch die erfindungsgemäßen Kombinationen aus herbiziden Wirkstoffen der Typen A und B gelingt es besonders vorteilhaft, die vom Praktiker geforderte Kontrolle des Unkrautspektrums zu erreichen, wobei auch einzelne schwer zu bekämpfende Arten erfasst werden. Darüberhinaus läßt sich mit den erfindungsgemäßen Kombinationen der Aufwand an Wirkstoffmengen der einzelnen in der Kombination enthaltenen Kombinationspartner reduzieren, was ökonomischere Lösungsansätze seitens der Anwender erlaubt. Schließlich konnten in nicht ohne weiteres vorhersehbarer Weise Wirkungssteigerungen erzielt werden, die über das zu erwartende Maß hinausgehen, womit die herbiziden Mittel der Erfindung in breitem Umfang synergistische Aktivitäten zeigen.

Darüberhinaus hat es sich im Rahmen der Erfindung besonders überraschend herausgestellt, daß die in 5-Stellung des Phenylringes einen Methylsulfonylamidomethyl-Substituenten tragenden Sulfonylharnstoffe der allgemeinen Formel I in Kombination mit anderen Herbiziden hervorragend dazu geeignet sind, schwer zu bekämpfende Unkrautspezies wirkungsvoll zu kontrollieren. Insbesondere traten dabei unerwartete spezielle Wirkungseffekte gegen resistente Ungräser auf.

Insgesamt ist auch die Qualität der bei den erfindungsgemäßen Kombinationen gefundenen Wirkungen im allgemeinen besser als etwa bei vergleichbaren Kombinationen, die Sulfonylharnstoffe des nächstliegenden Standes der Technik enthalten, wie er z. B. durch in 4-Stellung des Phenylringes Iodsubstitution tragende Phenylsulfonylharnstoffe gemäß der allgemeinen Formel 2 aus der WO 92/13845

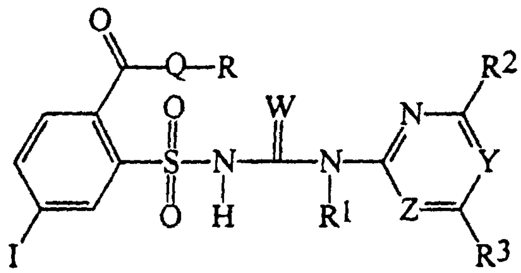

(2),

verkörpert wird, wobei in der allgemeinen Formel 2 die Reste gemäß dem Stand der Technik u. a. Q = O, R = Methyl, W = O, $R^1$ = H, $R^2$ = $OCH_3$, R3 = $CH_3$, Z und Y = N sind.

Im Hinblick auf die speziell substituierten Phenylsulfonylharnstoffe der allgemeinen Formel I gemäß der Erfindung ist festzustellen, daß sie zwar grundsätzlich z. B. von der allgemeinen Formel 1 aus der WO 95/10507 umfaßt sind, deren herausragende Eignung als Kombinationspartner für synergistische Mischungen mit anderen Herbiziden dem Stand der Technik allerdings nicht entnehmbar ist. Insbesondere gibt es keine Anhaltspunkte in der bekannt gewordenen Literatur, daß der eng begrenzten und klar umrissenen Gruppe der gegebenenfalls in Form ihrer Salze vorliegenden N-[(4,6-Dimethoxypyrimidin-2-yl)aminocarbonyl]-5-methylsulfonamidomethyl-2-alkoxycarbonylbenzolsulfonamide eine solche Ausnahmestellung zukommt. Zugleich sind dem Stand der Technik auch die Aufwandmengen sowie die Verhältnisse der einzusetzenden Mengen der Einzelverbindungen in den erfindungsgemäßen Kombinationen nicht entnehmbar. Schließlich sind die erfindungsgemäßen Kombinationen vorteilhaft gegenüber anderen herbiziden Kombinationen mit Sulfonylharnstoffen ähnlicher Art.

Von besonderem Interesse für die Kombinationen der Erfindung sind als Kombinationspartner vom Typ A Verbindungen der allgemeinen Formel I oder deren Salze, worin $R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet.

In ganz besonders bevorzugter Ausführungsform enthalten erfindungsgemäße herbizide Mittel eine Typ A-Verbindung der allgemeinen Formel I oder deren Salz, worin $R^1$ Methyl bedeutet.

Die Verbindungen vom Typ A (allgemeine Formel I) können Salze bilden, bei denen der Wasserstoff der $-SO_2$-NH-CO-Gruppe durch ein für die Landwirtschaft geeignetes Kation ersetzt wird. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel I erfolgen. Geeignet hierfür sind z. B. HCl, $HNO_3$, Trichloressigsäure, Essigsäure oder Palmitinsäure.

Besonders vorteilhafte Typ A Verbindungen sind solche, bei denen das Salz des Herbizids der Formel (I) durch Ersatz des Wasserstoffs der $-SO_2$-NH-CO-Gruppe durch ein Kation aus der Gruppe der Alkalimetalle, Erdalkalimetalle und Ammonium, bevorzugt Natrium, gebildet wird.

Sofern die Verbindungen der Formel I ein oder mehrere asymetrische C-Atome oder auch Doppelbindungen enthalten, die in der allgemeinen Formel nicht gesondert angegeben sind, gehören diese doch zu den Typ-A Verbindungen. Die durch ihre spezifische Raumform definierten möglichen Stereoisomeren, wie Enantiomere, Diastereoisomere, Z- und E-Isomere sind alle von der Formel I umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

Die Kombinationspartner vom Typ B sind in der Regel Standardherbizide, die jedoch unter bestimmten Kriterien ausgewählt sind. So handelt es sich bis auf zwei Ausnahmen (Untergruppe Bd)) um selektiv in Getreide gegen unerwünschte Pflanzen wirkende Herbizide. Zu den zu bekämpfenden Schadpflanzen gehören dabei vor allem Gräser und/oder Dikotyle. Zu den vor allem bekämpften Gräsern gehören u. a. Alopecurus myosuroides, Avena fatua, Apera spica venti, Lolium ssp., Phalares ssp., Setaria ssp., Agropyron repens, Bromus ssp., Sorghum ssp.; Zu den besonders wirksam zu bekämpfenden dikotylen Schadpflanzen gehören u. a. Lamium ssp., Veronica ssp., Viola ssp., Stellaria media, Matricaria ssp., Galium aparine, Sinapis album, Raphanus raphanistrum, Myosotes arcensis, Polygonum ssp., Chenopodium ssp., Rochia ssp./Cirsium, Galeopsis tetra., Capsella bursa pastoris, Paphaver rhoeas, Physallis angulata, Brassica napus, Descurainia richardsonii, Oxalis ssp.; besonders günstig wirken die erfindungsgemäßen Kombinationen unter anderem bei der Bekämpfung und Kontrolle von Lolium multiflorum, Avena fatua, Apera spica venti, Galium aparine, Oxalis spp, Fhalaris minor, Descurainia richardssonii, Capsella bursa pastoris, Polygonum convovulus, Chenopdium album, Paphaver rhoeas, Physalis angulata, Brassica napus, Lamium purpreum, Kochia scorp., etc.

Hinsichtlich der Wirksamkeit der Standardherbizide vom Typ B wiederum kann man wiederum eine Abstufung

oder Einteilung in Bezug auf den Schwerpunkt der bekämpften Pflanzen vornehmen. So ist ein Teil der Typ-B Herbizide annähernd ausschließlich gegen Gräser wirksam, ein anderer Teil vorwiegend gegen Dikotyle, während die Herbizide vom Typ B aus der Untergruppe Bc) sowohl gegen Gräser als auch Dikocyle eingesetzt werden. In jedem Falle ergibt sich jedoch für die erfindungsgemäßen Kombinationen ein optimiertes Wirkungsspektrum durch Ergänzung und Intensivierung der herbiziden Eigenschaften der Verbindungen vom Typ A, die für sich allein gesehen über ein besonders vorteilhaftes Eigenschaftsspektrum bei der Bekämpfung von Schadpflanzen in Getreide aufweisen. Die Intensivierung und Ergänzung des Wirkungsspektrums gilt nicht zuletzt auch für die Typ B Verbindungen aus der Gruppe Bd), welche die im Nichtkulturland oder in Dauerkulturen (Plantagen) nichtselektiven und/oder in transgenen Kulturen selektiven Herbizide mit Wirkung gegen Ungräser und Unkräuter umfaßt.

In einer bevorzugten Variante kennzeichnet sich ein erfindungsgemäßes Mittel dadurch, daß es als Herbizid (e) vom Typ B ein oder mehrere in Getreide selektiv gegen Gräser wirksame Herbizide aus der Gruppe enthält, welche die 2-(4-Aryloxyphenoxy)propionsäuren und deren Ester, Harnstoffe, Cyclohexandionoxime, Arylalanine, 2,6-Dinitroaniline, Imidazolinone und Difenzoquat umfaßt. Neben den erwähnten Einzelsubstanzen finden sich in den genannten chemischen Substanzklassen eine Reihe Gräserherbizide, die als Kombinationspartner für die Verbindungen vom Typ A geeignet sind.

Bevorzugte erfindungsgemäße Mittel enthalten als Herbizide vom Typ B ein oder mehrere selektiv in Getreide gegen Gräser wirksame Herbizide aus der Gruppe, die aus

B1) Fenoxaprop, Fenoxaprop-P

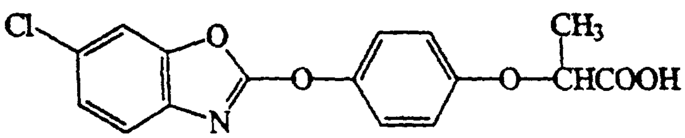

(±)-2-[4-(6-Chlor-1,3-benzoxazol-2-yloxy)phenoxy]propionsäure,
umfassend u. a. die Anwendungsform als Fenoxaprop-ethyl,

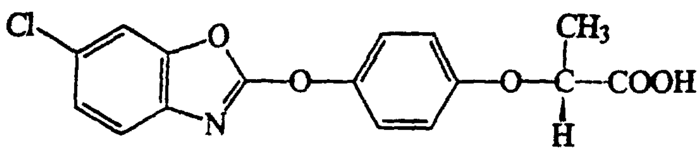

(*R*)-2-[4-(6-Chlor-1,3-benzoxazol-2-yloxy)phenoxy]propionsäure,
umfassend u.a. die häufigste Anwendungsform Fenoxaprop-P-ethyl,
wobei die vorgenannten Verbindungen B1) aus Pesticide Manual, 10. Aufl. 1994, S.439-441 u. 441-442 bekannt sind,

B2) Isoproturon

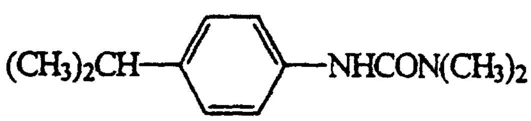

3-(4-Isopropylphenyl)-1,1-dimethylharnstoff
Pesticide Manual, 10. Aufl. 1994, S.611-612,

B3) Diclofop,

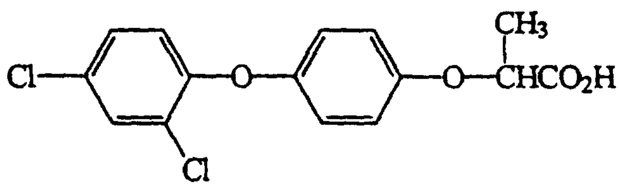

(*RS*)-2-[4-(2,4-Dichlorphenoxy)phenoxy]propionsäure umfassend u.a. als wichtigste Anwendungsform den Methylester, das Diclofop-methyl

Pesticide Manual, 10. Aufl. 1994, S.315-317;

B4) Clodinafop,

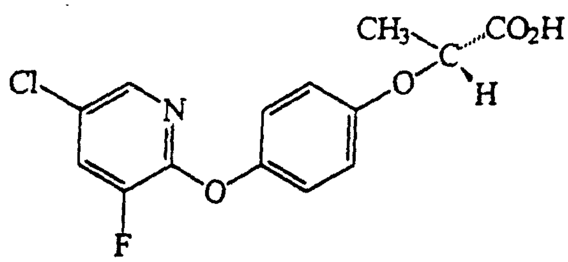

(*R*)-2- [4-(5-Chlor-3-fluor-2-pyridyloxy)phenoxy]propionsäure umfassend insbesondere auch die Anwendungsform als Clodinafop-propargyl

Pesticide Manual, 10. Aufl. 1994, S.216-217

B5) Mischungen aus B4) und

Cloquintocet,

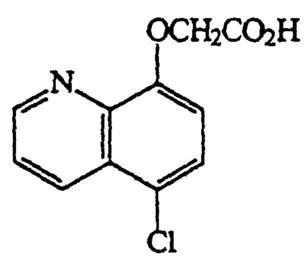

(5-Chlorchinolin-8-yloxy)essigsäure,

welches auch als Cloquintocet-mexyl eingesetzt wird und einen besonders bevorzugten Safener für B4) darstellt, Pesticide Manual, 10. Aufl. 1994, S.226-227,

B6) Chlortoluron

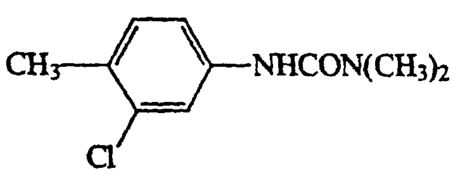

3-(3-Chlor-*p*-tolyl)-1,1-dimethylharnstoff Pesticide Manual, 10. Aufl. 1994, S.195-196,

B7) Methabenzthiazuron

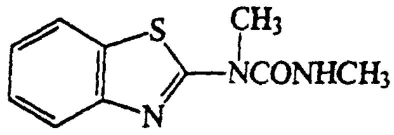

1-(1,3-Benzothiazol-2-yl)-1,3-dimethylharnstoff Pesticide Manual, 10. Aufl. 1994, S.670-671,

B8) Imazamethabenz,

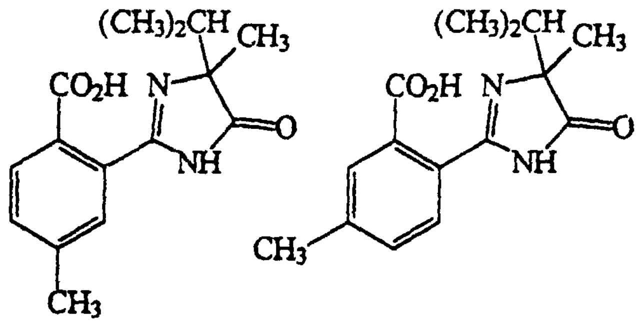

Reaktionsprodukt, aufweisend
(±)-6-(4-Isopropyl-4-methyl-4-oxo-2-imidazolin-2-yl)-*m*toluylsäure und (±)-6-(4-Isopropyl-4-methyl-4-oxo-2-imidazolin-2-yl)-*p*-toluylsäure,
wobei jeweils auch die unter der Bezeichnung Imazamethabenz-methyl bekannten Methylester eingesetzt werden können
Pesticide Manual, 10. Aufl. 1994, S.582-584,

B9) Tralkoxydim

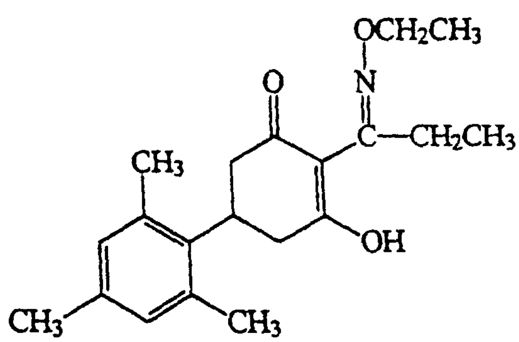

2-[1-(Ethoxyimino)propyl]-3-hydroxy-5-mesitylcyclohex-2-enon
Pesticide Manual, 10. Aufl. 1994, S.995-996,

B10) Difenzoquat,

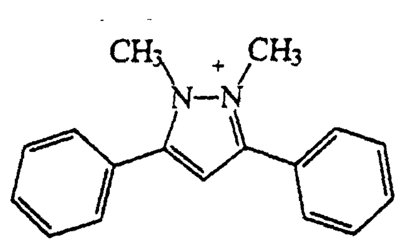

1,2-Dimethyl-3,5-diphenylpyrazolium
z.B. auch als Difenzoquat-metilsulfat
Pesticide Manual, 10. Aufl. 1994, S.330-331

B11)Flamprop, Flamprop-M,

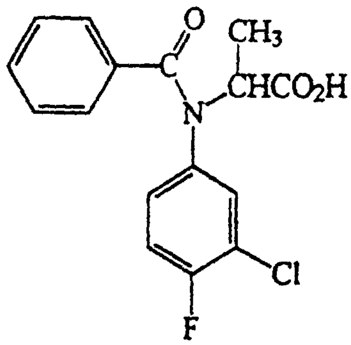
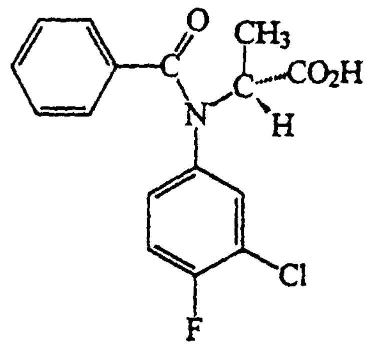

*N*-Benzoyl-*N*-(3-chlor-4-fluorophenyl)-DL-alanin *N*-Benzoyl-*N*-(3-chlor-4-fluorophenyl)-D-alanin umfassend u. a. auch Flamprop-methyl, Flamprop-Mmethyl, Flamprop-M-isopropyl
Pesticide Manual, 10. Aufl. 1994, S.464-465 und 466-468
und

B12)Pendimethalin

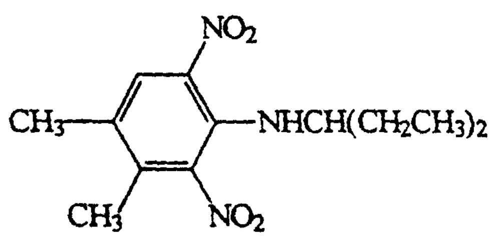

*N*-(1-Ethylpropyl)-2,6-dinitro-3,4-xylidin Pesticide Manual, 10. Aufl. 1994, S.779-780
besteht.

Bei den Verbindungen B1) bis B12) handelt es sich um beispielsweise aus der bei der jeweiligen Verbindung angegebenen Quelle bekannte, speziell in Getreide selektiv gegen Gräser wirksame Herbizide. Neben der Grundsubstanz, deren Formel regelmäßig zur Verdeutlichung mit angegeben ist, wird auch auf üblicherweise eingesetzte Abwandlungen der Grundsubstanzen hingewiesen. So wird beispielsweise B4) (Clodinafop) üblicherweise in Form des Propargylesters und Diclofop (B3)) als Methylester eingesetzt usw.. Sofern optische aktive Formen der Typ-B-Verbindungen üblich sind, wurde auch auf diese Formen Bezug genommen (z.B. Fenoxaprop-ethyl und Fenoxaprop-P-ethyl etc.).

Die Verbindungen B1), B3) und B4) gehören zur chemischen Substanzklasse der 2-(4-Aryloxyphenoxy)propionsäuren bzw. zu den Esterderivaten. B2), B6) und B7) sind Harnstoffe, während es sich bei B8) um einen Vertreter der Imidazolinone, bei B9) um ein Cyclohexandionoxim, bei B11) um ein Arylalanin und bei B12) um ein 2,6-Dinitroanilin handelt. Obwohl die Vertreter dieser Gruppe also durchaus relativ unterschiedliche chemische Strukturen aufweisen, bilden sie dennoch aufgrund ihres Wirkungsspektrums sowie der Tatsache, daß sie Synergisten für die Verbindungen der Formel I darstellen, eine zusammengehörige Untergruppe.

Besonders vorteilhafte Mischungen ergeben sich im Rahmen der Erfindung, wenn als Typ-B-Verbindungen Diclofop-methyl, Fenoxaprop-P-ethyl, Isoproturon, Mischungen von Clodinafop-propargyl mit Cloquintocet-mexyl (bekannt unter der geschützten Bezeichnung Topik®) und/oder Imazamethabenz-methyl in der erfindungsgemäßen Kombination enthalten sind.

Weitere zur Erfindung gehörende Mittel sind solche, die Herbizide vom Typ B aus der Untergruppe Bb) enthalten. Hierbei finden besonders vorteilhaft ein oder mehrere selektiv in Getreide gegen Dikotyle wirksame Herbizide

aus derjenigen Gruppe Anwendung, welche Aryloxyalkylcarbonsäuren, Hydroxybenzonitrile, Diphenylether, Azole und Pyrazole, Diflufenican und Bentazon umfaßt.

Unter den möglichen Aryloxyalkylcarbonsäuren wiederum sind solche Herbizide bevorzugt, die aus der Gruppe ausgewählt sind, die aus

B13)Mecoprop, Mecoprop-P

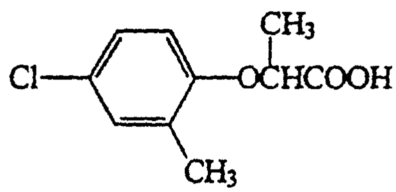

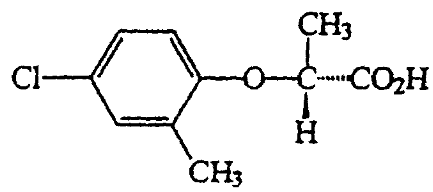

(*RS*)-2-(4-Chlor-*o*-tolyloxy)propionsäure (*R*)-2-(4-Chlor-*o*-tolyloxy)propionsäure
Pesticide Manual, 10. Aufl. 1994, S.646-647 und 647-648,

B14)MCPA

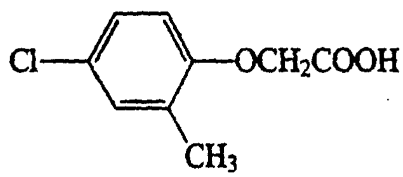

(4-Chlor-2-methylphenoxy)essigsäure,

vorwiegend eingesetzte Formen sind u. a. MCPA-butotyl, MCPA-dimethylammonium, MCPA-isoctyl, MCPA-Kalium, MCPA-Natrium,

Pesticide Manual, 10. Aufl. 1994, S.638-640,

B15)Dichlorprop, Dichlorprop-P

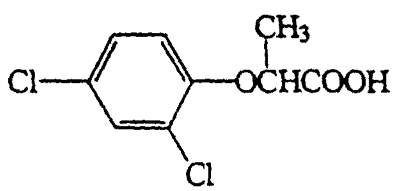

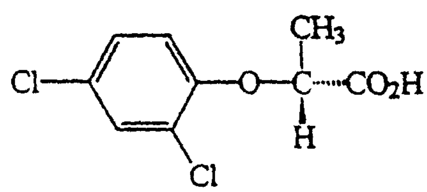

(*RS*)-2-(2,4-Dichlorphenoxy)propionsäure
(*R*)-2-(2,4-Dichlorphenoxy)propionsäure

gebräuchlich sind u. a. auch Dichlorprop-butotyl, Dichlorprop-ethylammonium, Dichlorprop-iso-octyl, Dichlorprop-Kalium

Pesticide Manual, 10. Aufl. 1994, S.309-311 und 311-312,

B16)2,4-D

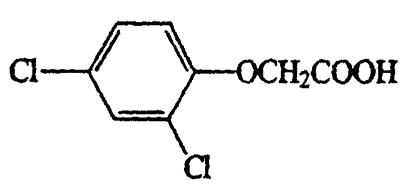

(2,4-Dichlorphenoxy)essigsäure
häufig eingesetzte Formen: 2,4-D-butotyl, 2,4-D-butyl, 2,4-D-dimethylammonium, 2,4-D-diolamin, 2,4-D-isooctyl, 2,4-D-isopropyl, 2,4-D-trolamin,
Pesticide Manual, 10. Aufl. 1994, S.271-273,

B17)Dicamba

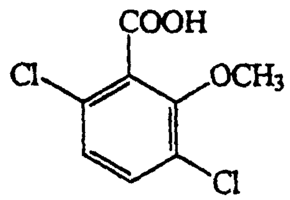

3,6-Dichlor-*o*-anissäure
angewendet u.a. als Dicamba-dimethylammonium, Dicamba-Kalium, Dicamba-Natrium, Dicamba-trolamin,
Pesticide Manual, 10. Aufl. 1994, S.298-300 und

B18)Fluroxypyr

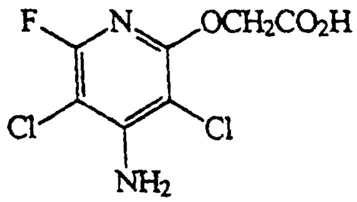

4-Amino-3, 5-dichlor-6-fluor-2-pyridyloxyessigsäure, weitere Anwendungsform: Fluroxypyr-meptyl sowie besonders bevorzugt: Fluroxypyr-butoxypropylester Pesticide Manual, 10. Aufl. 1994, S.505-507

besteht.

Von besonderem Interesse sind auch herbizide Mittel mit selektiv in Getreide gegen Dikotyle wirksamen Hydroxybenzonitrilen. Hierzu gehören bevorzugt

B19)Ioxynil

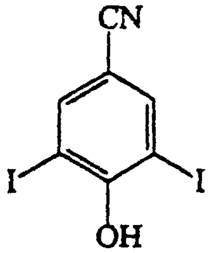

4-Hydroxy-3,5-di-iodobenzonitril,
häufige Anwendungsformen: Ioxynil-octanoat, Ioxynil-Natrium,
Pesticide Manual, 10. Aufl. 1994, S.598-600 und

B20)Bromoxynil

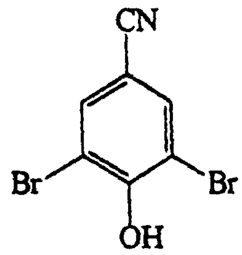

3,5-Dibromo-4-hydroxy-benzonitril
häufig angewendet als Bromoxynil-octanoat, Bromoxynil-Kalium,
Pesticide Manual, 10. Aufl. 1994, S.121-123. Weitere vorteilhafte erfindungsgemäße Mittel zeichnen sich dadurch aus, daß sie als Herbizide vom Typ B) ein oder mehrere selektiv in Getreide gegen Dikotyle wirksame Diphenylether enthalten, welche aus den Herbiziden

B21)Bifenox

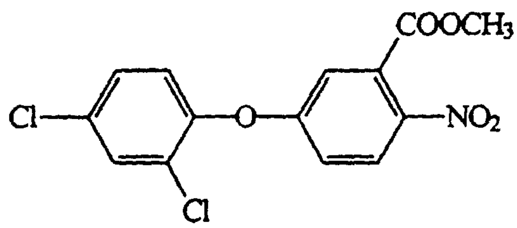

Methyl-5-(2,4-Dichlorphenoxy)-2-nitrobenzoat Pesticide Manual, 10. Aufl. 1994, S.94-96,

B22)Fluoroglycofen

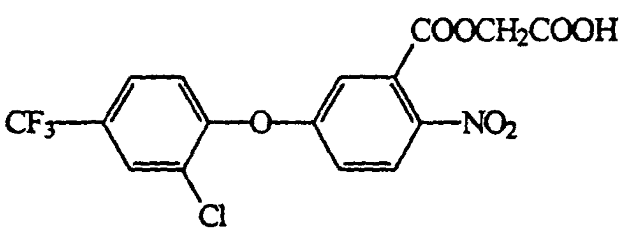

-*O*-[5-(2-Chlor-α,α,α-trifluor-*p*-tolyloxy)-2-nitrobenzoyl]glycolsäure,
weitere Einsatzform: Fluoroglycofen-ethyl,
Pesticide Manual, 10. Aufl. 1994, S.492-494,

B23)Lactofen

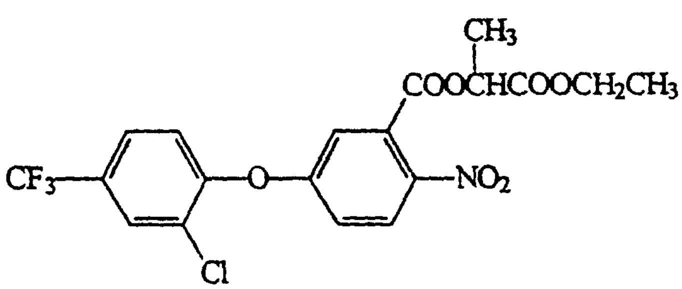

Ethyl-*O*-[5-(2-Chlor-α,α,α-trifluor-*p*-tolyloxy)-2-nitrobenzoyl]-DL-lactat

Pesticide Manual, 10. Aufl. 1994, S.623,

B24)Fomesafen

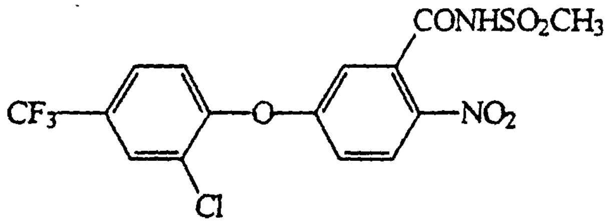

5-(2-Chlor-α,α,α-trifluor-*p*-tolyloxy)-*N*-methylsulfonyl-2-nitrobenzamid,
eingesetzt auch als Fomesafen-Natrium,
Pesticide Manual, 10. Aufl. 1994, S.520-521 und

B25) Oxyfluorfen

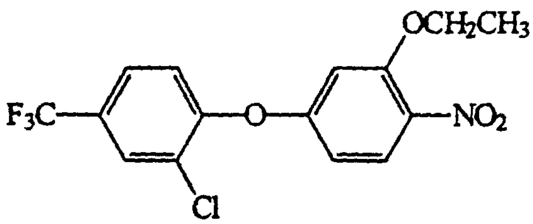

2-Chlor-α,α,α-trifluoro-*p*-tolyl-3-ethoxy-4-nitrophenylether
Pesticide Manual, 10. Aufl. 1994, S.764-765

ausgewählt sind.

Auch noch von besonderem Interesse sind herbizide Mittel, die als Verbindung vom Typ B ein oder mehrere selektiv in Getreide gegen Dikotyle wirksame Azole und Pyrazole enthalten, welche aus der Gruppe ausgewählt sind, die aus den Herbiziden

B26)ET-751

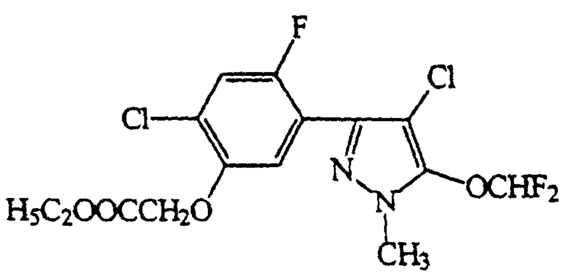

Ethyl 2-Chlor-5-(4-chlor-5-difluoromethoxy-1-methylpyrazol-3-yl)-4-fluorophenoxyacetat Pesticide Manual, 10. Aufl. 1994, S.400;

B27)Azolen der allgemeinen Formel II

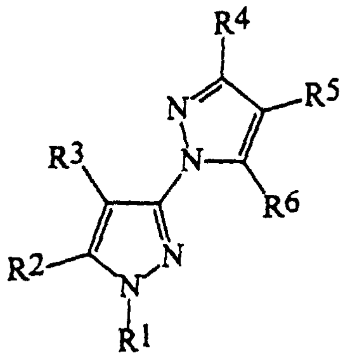

(II),

worin

$R^1$ $(C_1-C_4)$-Alkyl ist,
$R^2$ $(C_1-C_4)$ -Alkyl, $(C_1-C_4)$-Alkylthio oder $(C_1-C_4)$-Alkoxy ist, von denen jeder Rest durch ein oder mehrere Halogenatome substituiert sein kann, oder
$R^1$ und $R^2$ zusammen die Gruppe $(CH_2)_m$ bilden mit m = 3 oder 4,
$R^3$ Wasserstoff oder Halogen ist,
$R^4$ Wasserstoff oder $(C_1-C_4)$-Alkyl ist,
$R^5$ Wasserstoff, Nitro, Cyano oder eine der Gruppen $-COOR^7$, $-C(=X)NR^7R^8$ oder $-C(=X)R^{10}$ ist,
$R^6$ Wasserstoff, Halogen, Cyano, $(C_1-C_4)$-Alkyl, $(C_1-C_4)$-Alkylthio oder $-NR^{11}R^{12}$ ist,
$R^7$ und $R^8$ gleich oder verschieden Wasserstoff oder $(C_1-C_4)$-Alkyl sind, oder
$R^7$ und $R^8$ zusammen mit dem Stickstoff, an den sie gebunden sind einen gesättigten 5 oder 6 gliedrigen carbozyklischen Ring bilden,
$R^{10}$ Wasserstoff oder $(C_1-C_4)$-Alkyl ist, wobei letztere gegebenenfalls mit einem oder mehreren Halogenatomen substituiert sein können, und
$R^{11}$ u. $R^{12}$ gleich oder verschieden Wasserstoff, $(C_1-C_4)$-Alkyl oder $(C_1-C_4)$-Alkoxycarbonyl sind, wobei
$R^{11}$ u. $R^{12}$ zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann;

wobei die Azole der allgemeinen Formel II u. a. aus der WO 94/08999 bekannt sind; und

B28)F 8426

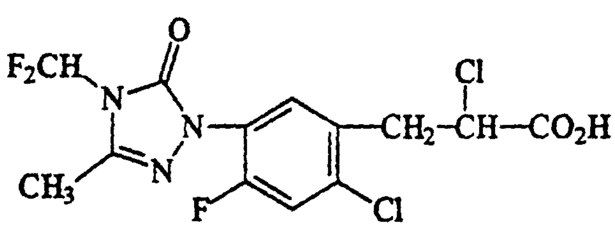

2-Chloro-3-[2-chloro-4-fluoro-5-(4-difluoromethyl-4,5-dihydro-3-methyl-5-oxo-1*H*-1,2,4-triazol-1-ylphenyl] propionsäureethylester Pesticide Manual, 10. Aufl. 1994, S.421

besteht.

Bevorzugt als Typ B Verbindung ist auch

B29)Diflufenican

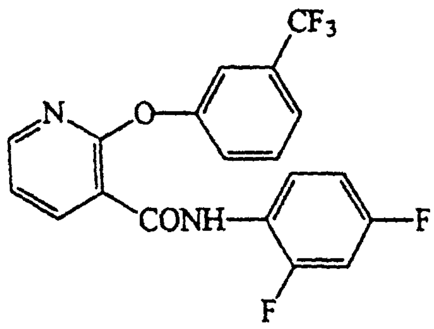

2',4'-Difluor-2-(α,α,α-trifluoro-mtolyloxy)nicotinanilid
Pesticide Manual, 10. Aufl. 1994, S.335-336.

Eine weitere vorteilhafte Ausführungsform der Erfindung kennzeichnet sich dadurch, daß ein herbizides Mittel als Herbizid vom Typ B

B30)Bentazon

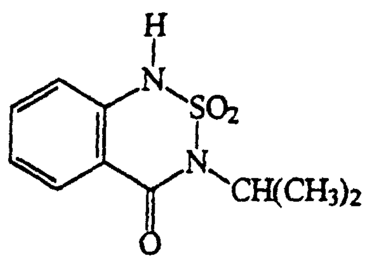

3-Isopropyl-1*H*-2,1,3-benzothiadiazin-4(3*H*)-on-2, 2-dioxid
Pesticide Manual, 10. Aufl. 1994, S.90-91,

enthält.

Von den Typ B Verbindungen mit Selektivität in Getreide und Wirksamkeit gegen Dikotyle {Untergruppe Bb) mit den herbiziden Wirkstoffen B13) - B30) sowie deren gebräuchlichen Abbkömmlingen} eignen sich MCPA, Mecoprop, Dicamba, Fluroxypyr, Diflufenican, Ioxynil und/oder Fluoroglycofen als Bestandteil eines erfindungsgemäßen herbiziden Mittels ganz besonders.

Eine dritte Untergruppe von Verbindungen, deren Zumischung zu Verbindungen des Typs A die Erzielung von herbiziden Mitteln mit herausragenden Eigenschaften gestattet, ist die Untergruppe Bc) der selektiv in Getreide gegen Gräser und Dikotyle wirksamen Herbizide. Typ-B-Substanzen mit diesem Wirkungsprofil finden sich bevorzugt in den chemischen Substanzklassen der Triazinderivate, Chloracetanilide und der Sulfonylharnstoffe, die von den in Formel I angegebenen Sulfonylharnstoffen verschieden sind. Weitere Substanzklassen sind unter anderem Triazole, (Thio)carbamate und Furanone.

Zu bevorzugten Vertretern gehört u.a. das herbizid wirksame Triazinderivat

B31)Metribuzin

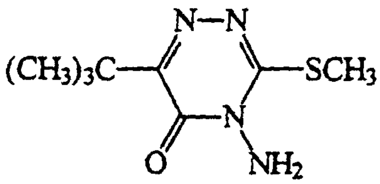

4-Amino-6-*tert*-butyl-4,5-dihydro-3-methylthio-1,2,4-triazin-5-on

Pesticide Manual, 10. Aufl. 1994, S.699-700.

Zweckmäßige Triazole und Thiocarbamate sind u. a.

B32)Metosulam

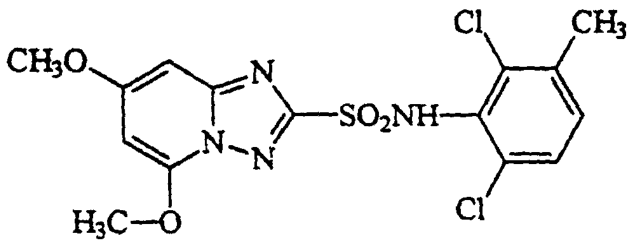

2',6'-Dichloro-5,7-dimethoxy-3'methyl[1,2,4]triazolo[1,5-α]pyrimidine-2-sulfoanilid Pesticide Manual, 10. Aufl. 1994, S.696-697;

B32a)Flupoxam

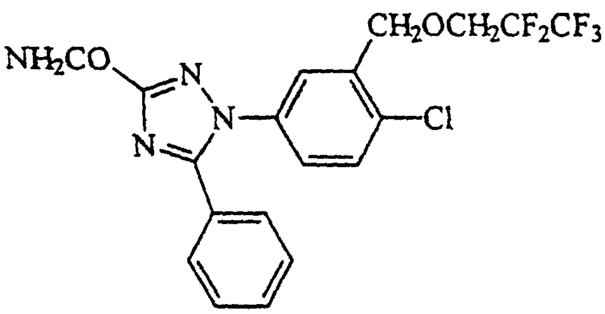

1-[4-Chloro-3-(2,2,3,3,3-pentafluoropropoxymethyl)phenyl]-5-phenyl-1*H*-1,2,4-triazol-3-carboxamid
Pesticide Manual, 10. Aufl. 1994, S.495-496; und/oder

B33)Prosulfocarb

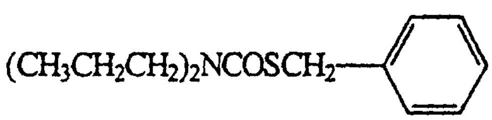

*S*-Benzyl dipropylthiocarbamat
Pesticide Manual, 10. Aufl. 1994, S.863-864.

Zu bevorzugten Vertretern gehört außerdem das herbizid wirksame Furanonderivat

B34)Flurtamone

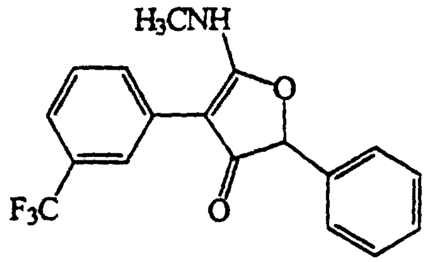

($RS$)-5-Methylamino-2-phenyl-4-(α,α,α-trifluoro-mtolyl) furan-3 (2$H$)-on
Pesticide Manual, 10. Aufl. 1994, S.509.

Ferner weisen die herbiziden Mittel der Erfindung in vorteilhafter Ausgestaltung als Komponente vom Typ B ein oder mehrere selektiv in Getreide gegen Gräser und Dikotyle wirksame Sulfonylharnstoffe auf, die von den Typ A Verbindungen verschiedenen sind. Besonders bevorzugt Sulfonylharnstoffe dieser Art u.a.

B35)Amidosulfuron

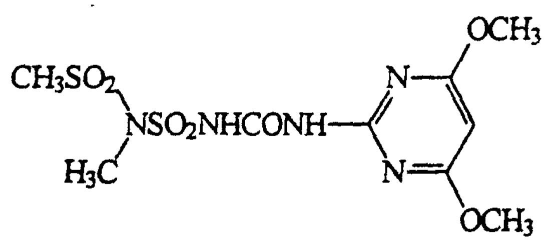

1-(4,6-Dimethoxypyrimidin-2-yl)-3-mesyl(methyl)sulfamoylharnstoff Pesticide Manual, 10. Aufl. 1994, S. 34-35,

B36)Metsulfuron

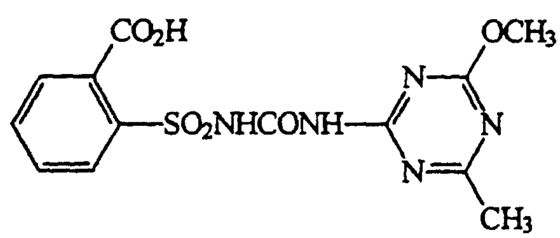

2-(4-Methoxy-6-methyl-1,3,5-triazin-2-ylcarbamoylsulfamoyl)benzoesäure,
üblicherweise eingesetzt als Metsulfuron-methyl,
Pesticide Manual, 10. Aufl. 1994, S.701-702,

B37)Tribenuron

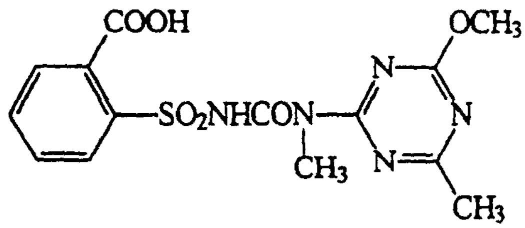

2-[4-Methoxy-6-methyl-1,3,5-triazin-2-yl(methyl)carbamoylsulfamoyl]benzoesäure, üblicherweise eingesetzt als Tribenuron-methyl Pesticide Manual, 10. Aufl. 1994, S.1010-1011,

B38)Thifensulfuron

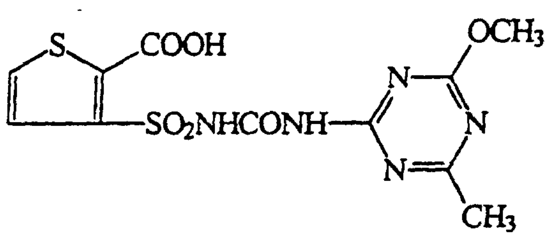

3-(4-Methoxy-6-methyl-1,3,5-triazin-2-ylcarbamoylsulfamoyl)thiophen-2-carbonsäure, meist verwendet als Thifensulfuron-methyl Pesticide Manual, 10. Aufl. 1994, S.976-978,

B39)Triasulfuron

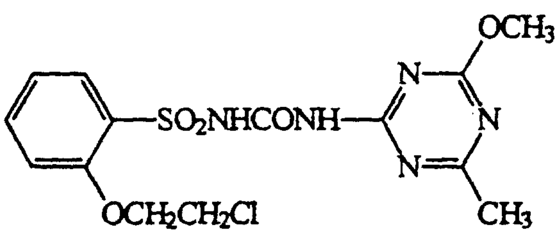

1-[2-(2-Chloroethoxy)phenylsulfonyl]-3-(4-methoxy-6-methyl-1,3,5-triazin-2-yl)harnstoff
Pesticide Manual, 10. Aufl. 1994, S.1005-1006,

B40)Chlorsulfuron

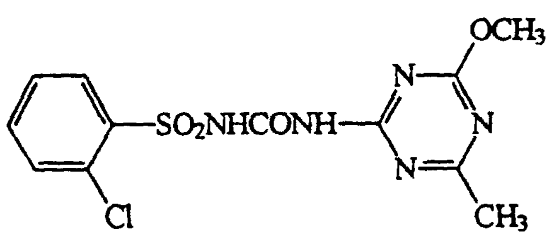

1-(2-Chlorphenylsulfonyl)-3-(4-methoxy-6-methyl-1,3,5-triazin-2-yl)harnstoff
Pesticide Manual, 10. Aufl. 1994, S.203-205,

B41)Sulfonylharnstoffe der allgemeinen Formel III

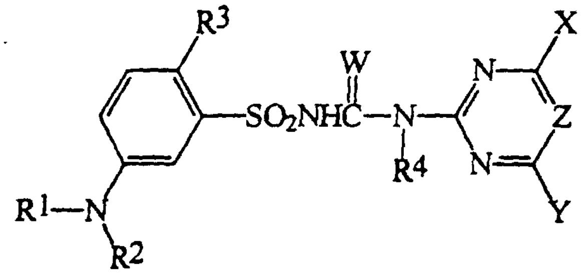

(III),

worin

| | |
|---|---|
| $R^1$ | $(C_1\text{-}C_4)$-Alkyl, $(C_2\text{-}C_4)$-Alkenyl oder $(C_2\text{-}C_4)$-Alkinyl, vorzugsweise $(C_1\text{-}C_4)$-Alkyl, Allyl oder Propargyl, |
| $R^2$ | $CO\text{-}R^5$, $COOR^6$, $CO\text{-}NR^8R^9$, $CS\text{-}NR^{10}R^{11}$, $SO_2R^{14}$ oder $SO_2NR^{15}R^{16}$ |
| $R^3$ | $COR^{17}$, $COOR^{18}$, $CONR^{19}R^{20}$ oder $CO\text{-}ON{=}CR^{22}R^{23}$, vorzugsweise $COOR^{18}$, |
| $R^4$ | Wasserstoff oder $(C_1\text{-}C_4)$-Alkyl, vorzugsweise Wasserstoff oder Methyl, |
| $R^5$ | Wasserstoff, $(C_1\text{-}C_6)$-Alkyl, das unsubstituiert oder durch einen oder mehrere Reste aus der Gruppe Halogen, $(C_1\text{-}C_4)$-Alkoxy, $(C_1\text{-}C_4)$-Alkylthio oder $NR^{31}R^{32}$ substituiert ist, oder $(C_3\text{-}C_6)$-Cycloalkyl, unsubstituiertes oder substituiertes Phenyl, unsubstituiertes oder substituiertes Benzyl oder unsubstituiertes oder substituiertes Heteroaryl, vorzugsweise H, $(C_1\text{-}C_6)$-Alkyl, $(C_1\text{-}C_4)$-Haoalkyl, Cyclopropyl, Cyclopentyl, Cyclohexyl, Phenyl oder Heteroaryl, wobei die letztgenannten zwei Reste unsubstituiert oder durch einen oder mehrere Reste aus der Gruppe $(C_1\text{-}C_4)$-Alkyl, $(C_1\text{-}C_4)$-Alkoxy und Halogen substituiert sind, |
| $R^6$ | $(C_1\text{-}C_6)$-Alkyl, $(C_2\text{-}C_6)$-Alkenyl, $(C_2\text{-}C_6)$-Alkinyl, $(C_1\text{-}C_6)$-Haloalkyl oder $(C_3\text{-}C_6)$-Cycloalkyl, vorzugsweise $(C_1\text{-}C_4)$-Alkyl, $(C_1\text{-}C_4)$-Haloalkyl, Allyl, Propargyl oder $(C_3\text{-}C_6)$-Cycloalkyl, |
| $R^7$ | $(C_1\text{-}C_4)$-Alkyl, |
| $R^8$ | Wasserstoff, $(C_1\text{-}C_6)$-Alkyl, $(C_1\text{-}C_4)$-Haloalkyl, $(C_1\text{-}C_4)$-Alkoxy oder $(C_1\text{-}C_4\text{-Alkoxy})$-carbonyl, |
| $R^9$ | Wasserstoff, $(C_1\text{-}C_6)$-Alkyl, das unsubstituiert oder durch einen oder mehrere Reste aus der Gruppe Halogen, $(C_1\text{-}C_4)$-Alkoxy und $NR^{31}R^{32}$ substituiert ist, oder $CO\text{-}R^{33}$, $CO\text{-}OR^{34}$ oder $CO\text{-}NR^{35}R^{36}$ oder |
| $R^8$ und $R^9$ | zusammengenommen einen bivalenten Rest der Formel $-(CH_2)_4-$, $-(CH_2)_5-$ oder $-CH_2CH_2-O-CH_2CH_2-$, |
| $R^{10}$ | analog $R^8$, |
| $R^{11}$ | analog $R^9$, |
| $R^{12}$ | analog $R^6$, |
| $R^{13}$ | analog $R^6$, |
| $R^{14}$ | $(C_1\text{-}C_6)$-Alkyl, $(C_1\text{-}C_6)$-Haloalkyl, vorzugsweise $(C_1\text{-}C_4)$-Alkyl oder $(C_1\text{-}C_4)$-Haloalkyl, |
| $R^{15}$, $R^{16}$ | unabhängig voneinander gleich oder verschieden Wasserstoff oder $(C_1\text{-}C_4)$-Alkyl, |
| $R^{17}$ | Wasserstoff, $(C_1\text{-}C_4)$-Alkyl, $(C_1\text{-}C_4)$-Haloalkyl, $(C_3\text{-}C_6)$-Cycloalkyl, Phenyl oder Heteroaryl, wobei die letztgenannten zwei Reste unsubstituiert oder substituiert sind, |
| $R^{18}$ | Wasserstoff, $(C_1\text{-}C_4)$-Alkyl, $(C_2\text{-}C_6)$-Alkenyl oder $(C_2\text{-}C_6)$-Alkinyl , wobei die letztgenannten drei Reste unsubstituiert oder durch einen oder mehrere Reste aus der Gruppe Halogen, $(C_1\text{-}C_4)$-Alkoxy, $(C_1\text{-}C_4)$-Alkylthio und $NR^{31}R^{32}$ substituiert sind, oder $(C_3\text{-}C_6)$-Cycloalkyl oder $(C_3\text{-}C_6)$-Cycloalkyl- $(C_1\text{-}C_3)$-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder $(C_1\text{-}C_2)$-Alkyl sind, |
| $R^{29}$ | Wasserstoff, Hydroxy, Amino, $NHCH_3$, $N(CH_3)_2$, $(C_1\text{-}C_4)$-Alkyl oder $(C_1\text{-}C_4)$-Alkoxy, |
| $R^{30}$ | Wasserstoff oder $(C_1\text{-}C_4)$-Alkyl, |
| die $R^{31}$ u. $R^{32}$ | unabhängig voneinander gleich oder verschieden Wasserstoff oder $(C_1\text{-}C_4)$-Alkyl, |
| $R^{33}$ | Wasserstoff, $(C_1\text{-}C_4)$-Alkyl, $(C_1\text{-}C_4)$-Haloalkyl, $(C_3\text{-}C_6)$-Cycloalkyl oder Phenyl, das unsubstituiert oder durch einen oder mehrere Reste aus der Gruppe Halogen, $(C_1\text{-}C_4)$-Alkyl und $(C_1\text{-}C_4)$-Alkoxy substituiert ist, |
| $R^{34}$ | $(C_1\text{-}C_4)$-Alkyl, Allyl, Propargyl oder Cycloalkyl, |
| $R^{35}$ u. $R^{36}$ | unabhängig voneinander gleich oder verschieden Wasserstoff oder $(C_1\text{-}C_4)$-Alkyl, |
| W | Sauerstoff oder Schwefel, |

X $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2$-alkyl)-amino, vorzugsweise Methyl, Ethyl, Methoxy, Ethoxy, Methylthio, Ethylthio, Chlor, $NHCH_3$ oder $N(CH_3)_2$,
Y $(C_1-C_4)$-Alkyl, $(C_1-C_4)$-Alkoxy, $(C_1-C_4)$-Haloalkyl oder $(C_1-C_4)$-Alkylthio, vorzugsweise Methyl, Ethyl, Methoxy, Ethoxy und
Z CH oder N

bedeutet,

wobei die Sulfonylharnstoffe der allgemeinen Formel III aus WO 94/10154 bekannt sind,
wobei von besonderem Interesse als Kombinationspartner B) Verbindungen der allgemeinen Formel III sind, worin

$R^1$ Methyl, Ethyl, n-Propyl, i-Propyl oder Allyl,
$R^2$ $CO-R^5$, $COOR^6$, $CO-NR^8R^9$, $CS-NR^{10}R^{11}$, $SO_2R^{14}$ oder $SO_2NR^{15}R^{16}$,
$R^3$ $COR^{17}$, $COOR^{18}$, $CONR^{19}R^{20}$ oder $CO-ON=CR^{22}R^{23}$ ist,
$R^4$ Wasserstoff oder $(C_1-C_4)$-Alkyl ist,
$R^5$ Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind,
$R^6$ $(C_1-C_4)$-Alkyl, Allyl, Propargyl oder Cyclopropyl ist,
$R^8$ Wasserstoff, $(C_1-C_4)$-Alkyl, $(C_1-C_4)$-Haloalkyl oder $(C_1-C_4$-Alkoxy)-carbonyl ist
$R^9$-$R^{11}$ unabhängig voneinander gleich oder verschieden H oder $(C_1-C_4)$-Alkyl sind,
$R^{14}$ $(C_1-C_4)$-Alkyl ist,
$R^{15}$ u. $R^{16}$ unabhängig voneinander gleich oder verschieden Wasserstoff oder $(C_1-C_4)$-Alkyl sind,
$R^{17}$ Wasserstoff, $(C_1-C_4)$-Alkyl, $(C_1-C_4)$-Haloalkyl, $(C_3-C_6)$-cycloalkyl, Phenyl oder Heteroaryl ist, wobei die letztgenannten zwei Reste unsubstituiert oder substituiert sind,
$R^{18}$ Wasserstoff, $(C_1-C_4)$-Alkyl, $(C_2-C_6)$-Alkenyl oder $(C_2-C_6)$-Alkinyl, wobei die letztgenannten drei Reste unsubstituiert oder durch einen oder mehrere Reste aus der Gruppe Halogen, $(C_1-C_4)$-Alkoxy, $(C_1-C_4)$ -Alkylthio und $NR^{31}R^{32}$ substituiert sind, oder $(C_3-C_6)$-Cycloalkyl oder $(C_3-C_6)$-Cycloalkyl- $(C_1-C_3)$-Alkyl,
$R^{19}$ analog $R^8$
$R^{20}$ analog $R^9$
$R^{22}$ u. $R^{23}$ unabhängig voneinander gleich oder verschieden Wasserstoff oder $(C_1-C_2)$-Alkyl sind,
$R^{31}$ u. $R^{32}$ unabhängig voneinander gleich oder verschieden Wasserstoff oder $(C_1-C_4)$-Alkyl sind,
W Sauerstoff oder Schwefel ist,
X $(C_1-C_4)$-Alkyl, $(C_1-C_4)$-Alkoxy, $(C_1-C_4)$-Haloalkyl, $(C_1-C_4)$-Alkylthio, Halogen oder Mono- oder Di-$(C_1-C_2$-alkyl) -amino ist,
Y $(C_1-C_4)$-Alkyl, $(C_1-C_4)$-Alkoxy, $(C_1-C_4)$-Haloalkyl oder $(C_1-C_4)$-Alkylthio ist, und
Z CH oder N

bedeutet,
wobei von ganz besonderem Interesse als Kombinationspartner B) auch Verbindungen der allgemeinen Formel III sind, worin

$R^1$ Methyl, Ethyl, n-Propyl, i-Propyl oder Allyl,
$R^2$ $CO-R^5$, $COOR^6$, $CO-NR^8R^9$, $CS-NR^{10}R^{11}$, $SO_2R^{14}$ oder $SO_2NR^{15}R^{16}$,
$R^5$ Wasserstoff, $(C_1-C_4)$-Alkyl, $(C_1-C_2)$-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind,
$R^6$ $(C_1-C_4)$-Alkyl, Allyl, Propargyl oder Cyclopropyl,
$R^8$ Wasserstoff, $(C_1-C_4)$-Alkyl, $(C_1-C_4)$-Habalkyl oder $(C_1-C_4$-Alkoxy)-carbonyl
$R^9$-$R^{11}$ unabhängig voneinander gleich oder verschieden H oder $(C_1-C_4)$-Alkyl,
$R^{14}$ $(C_1-C_4)$-Alkyl und
$R^{15}$ u. $R^{16}$ unabhängig voneinander gleich oder verschieden Wasserstoff oder $(C_1-C_4)$-Alkyl,

bedeutet,
wobei außerordentlich zweckmäßige Kombinationspartner B) Verbindungen der allgemeinen Formel III sind, worin

$R^5$ H, $CH_3$, $C_2H_5$, n- oder i-$C_3H_7$, n-, i-, t- oder 2-Butyl, n-Pentyl, $CF_3$, $CH_2Cl$, $CCl_3$, $CH_2Br$, $CH_2CCl_3$, Cyclopropyl, Phenyl, Thienyl, Furyl oder Pyridyl, wobei die letztgenannten vier Reste durch 1 bis 3 Halogenatome substituiert sein können,

bedeutet,

B42)Sulfonylharnstoffe der allgemeinen Formel IV und deren landwirtschaftlich verträglichen und akzeptierten Salze

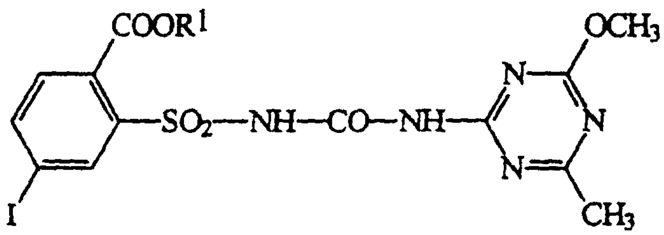

(IV),

worin

$R^1$ ($C_1$-$C_8$)-Alkyl, ($C_3$-$C_4$)-Alkenyl, ($C_3$-$C_4$)-Alkinyl oder ($C_1$-$C_4$)-Alkyl, das ein- bis vierfach durch Reste aus der Gruppe Halogen und ($C_1$-$C_2$)-Alkoxy substituiert ist, bedeutet,

wobei im Herbizid der Formel (IV) oder dessen Salz besonders bevorzugt

$R^1$ Methyl ist;

und wobei auch Salze besonders günstig Wirksamkeit zeigen, wobei das Salz des Herbizids der Formel (IV) durch Ersatz des Wasserstoffs der -$SO_2$-NH-CO-Gruppe durch ein Kation aus der Gruppe der Alkalimetalle, Erdalkalimetalle und Ammonium, bevorzugt Natrium, gebildet wird,

wobei die Verbindungen der allgemeinen Formel IV z. B. aus der WO 92/13845 bekannt sind,

B43)Flupyrsulfuron (DPX-KE459)

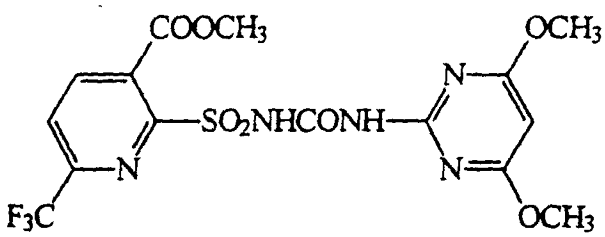

,

bevorzugt als Natriumsalz,
vorgestellt auf der Brighton Crop Protection Conference Weeds 1995,

B44)MON 48500
bevorzugt als Natriumsalz,
vorgestellt auf der Brighton Crop Protection Conference Weeds 1995,
und/oder

B45)Sulfosulfuron (MON37500)

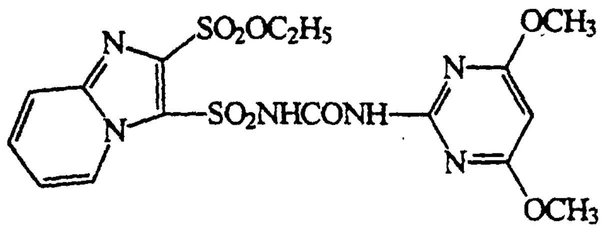
,

vorgestellt auf der Brighton Crop Protection Conference Weeds 1995.

Von den Typ B Verbindungen mit Selektivität in Getreide und Wirksamkeit gegen Gräser und Dikotyle {Untergruppe Bc) mit den herbiziden Wirkstoffen B31) - B45) sowie deren gebräuchlichen Abbkömmlingen} eignen sich Metsulfuron-methyl, Tribenuron-methyl, Sulfonylharnstoffe der allgemeinen Formel IV (B42)) und/oder Amidosulfuron ganz besonders als Bestandteil eines erfindungsgemäßen herbiziden Mittels.

Eine vierte Untergruppe von Verbindungen, deren Zumischung zu Verbindungen des Typs A die Erzielung von herbiziden Mitteln mit überadditiver Wirksamkeit gestattet, ist die Untergruppe Bd) der im Nichtkulturland nichtselektiven und/oder in transgenen Kulturen selektiven Herbizide mit Wirkung gegen Ungräser und Unkräuter. Typ B Substanzen die diese Beschreibung erfüllen sind u. a.

B46)Glufosinate, Glufosinate-P

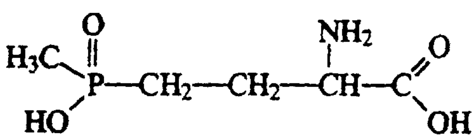
,
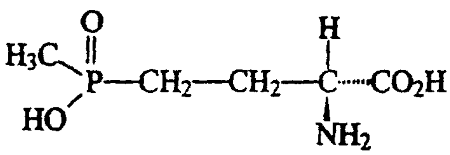

4-[Hydroxy(methyl)phosphinoyl]-DL-homoalanin,
4-[Hydroxy(methyl)phosphinoyl]-L-homoalanin,
die jeweils bevorzugt als Glufosinate-Ammonium oder Glufosinate-P-Ammonium verwendet werden,
Pesticide Manual, 10. Aufl. 1994, S.541-542 und/oder

B47)Glyphosate

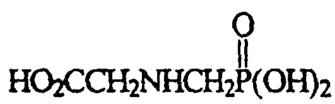

N-(Phosphonomethyl)glycin,
das bevorzugt als Glyphosate-isopropylammonium,
Glyphosate-sesquinatrium, Glyphosate-trimesium eingesetzt wird,
Pesticide Manual, 10. Aufl. 1994, S.542-544.

Kombinationen aus den Wirkstoffen A + B zeigen überadditive Effekte, d. h. bei gleicher Kontrolle der Schadpflanzen wird es durch die erfindungsgemäßen herbiziden Mittel möglich, die Aufwandmenge zu senken, einzelne Arten überhaupt zu kontrollieren und/oder die Sicherheitsmarge auf vor allem Getreidekulturen zu erhöhen. Beides ist sowohl ökonomisch als auch ökologisch sinnvoll. Die Wahl der von den Komponenten A + B einzusetzenden Mengen, das Verhältnis der Komponenten A : B und die zeitliche Reihenfolge der Ausbringung sind dabei ebenso wie beispielsweise die zu wählende Formulierung von einer ganzen Reihe von Faktoren abhängig. In diesem Zusammenhang nicht unbedeutend sind u. a. die Art der Mischungspartner, das Entwicklungsstadium der Unkräuter oder Ungräser, das zu bekämpfende Unkrautspektrum, Umweltfaktoren, Klimabedingungen, Bodenverhältnisse etc.

In ganz besonders bevorzugter erfindungsgemäßer Ausführungsform kennzeichnen sich erfindungsgemäße herbizide Mittel dadurch, daß sie einen synergistisch wirksamen Gehalt einer Kombination der Verbindungen der Formel I oder deren Salze (Typ-A-Verbindungen) mit Verbindungen aus der Gruppe B aufweisen. Dabei ist vor allem

hervorzuheben, daß selbst in Kombinationen mit Aufwandmengen oder Gewichtsverhältnissen von A:B, bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Aufwandmengen des Herbizids A liegen im allgemeinen zwischen 0,1 und 100 g ai/ha (ai = active ingredients, d.h. Aufwandmenge bezogen auf den aktiven Wirkstoff), bevorzugt zwischen 2 und 40 g ai/ha.

Die Aufwandmengen von Verbindungen des Typs B betragen in der Regel:

| Typ-B-Verbindungen | Aufwandmengen g ai/ha | |
|---|---|---|
| | Standard | bevorzugt |
| Ba)<br>Gräserherbizide<br>in Getreide<br>{z.B. B1) - B12)} | 10 bis 4000 | 50 bis 1000 |
| Bb)<br>Dikotylenherbizide<br>in Getreide<br>{z.B. B13) - B16)} | 50 bis 3000 | 100 bis 2000 |
| Bb)<br>Dikotylenherbizide<br>in Getreide<br>{z.B. B17)} | 50 bis 1000 | 100 bis 500 |
| Bb)<br>Dikotylenherbizide<br>in Getreide<br>{z.B. B18))} | 50 bis 300 | 50 bis 200 |
| Bb)<br>Dikotylenherbizide<br>in Getreide<br>{z.B. B19) u. B20)} | 50 bis 1000 | 100 bis 500 |
| Bb)<br>Dikotylenherbizide<br>in Getreide<br>{z.B. B21) bis B25)} | 5 bis 1000 | 20 bis 500 |

| Typ-B-Verbindungen | Aufwandmengen g ai/ha | |
|---|---|---|
| | Standard | bevorzugt |
| Bb)<br>Dikotylenherbizide<br>in Getreide<br>{z.B. B26 bis B28)} | 10 bis 60 | 20 bis 50 |
| Bb)<br>Dikotylenherbizide<br>in Getreide<br>{z.B. B29)} | 50 bis 500 | 100 bis 300 |
| Bb)<br>Dikotylenherbizide<br>in Getreide<br>{z.B. B30)} | 500 bis 2500 | 1000 bis 2000 |

(fortgesetzt)

| Typ-B-Verbindungen | Aufwandmengen g ai/ha | |
|---|---|---|
| | Standard | bevorzugt |
| Bc)<br>Gräser- u. Dikotylenherbizide in Getreide<br>{z.B. B31) - B34)} | 100 bis 5000 | 250 bis 2500 |
| Bc)<br>Gräser- u. Dikotylenherbizide in Getreide<br>{z.B. B35) - B45)} | 2 bis 80 | 5 bis 50 |
| Bd)<br>Nichtselektive oder nur in transgenen Kulturen selektive Breitbandherbizide<br>{z.B. B46) u. B47)} | 100 bis 3000 | 100 bis 1000 |

In den Kombinationen der Erfindung betragen die Aufwandmengen von Verbindungen des Typs A + Verbindungen des Typs B in der Regel:

| Typ-B-Verbindungen | Aufwandmengen g ai/ha | |
|---|---|---|
| | A + B | |
| Ba)<br>Gräserherbizide<br>in Getreide<br>{z.B. B1) - B12)} | 2 bis 40 | 50 bis 1000 |
| Bb)<br>Dikotylenherbizide<br>in Getreide<br>{z.B. B13) - B16)} | 2 bis 40 | 100 bis 3000 |
| Bb)<br>Dikotylenherbizide<br>in Getreide<br>{z.B. B17)} | 2 bis 40 | 50 bis 1000 |
| Bb)<br>Dikotylenherbizide<br>in Getreide<br>{z.B. B18))} | 2 bis 40 | 50 bis 2500 |
| Bb)<br>Dikotylenherbizide<br>in Getreide<br>{z.B. B19) u. B20)} | 2 bis 40 | 50 bis 1000 |
| Bb)<br>Dikotylenherbizide<br>in Getreide<br>{z.B. B21) bis B25)} | 2 bis 40 | 5 bis 1000 |

| Typ-B-Verbindungen | Aufwandmengen g ai/ha | |
|---|---|---|
| | A + B | |
| Bb)<br>Dikotylenherbizide<br>in Getreide<br>{z.B. B26 bis B28)} | 2 bis 40 | 3 bis 25 |
| Bb)<br>Dikotylenherbizide<br>in Getreide<br>{z.B. B29)} | 2 bis 40 | 50 bis 500 |
| Bb)<br>Dikotylenherbizide<br>in Getreide<br>{z.B. B30)} | 2 bis 40 | 50 bis 2500 |
| Bc)<br>Gräser- u. Dikotylenherbizide in Getreide<br>{z.B. B31) - B34)} | 2 bis 40 | 100 bis 5000 |
| Bc)<br>Gräser- u. Dikotylenherbizide in Getreide<br>{z.B. B35) - B45)} | 2 bis 40 | 2 bis 80 |
| Bd)<br>Nichtselektive oder nur in transgenen Kulturen selektive Breitbandherbizide<br>{z.B. B46) u. B47)} | 2 bis 40 | 100 bis 3000 |

Die Gewichtsverhältnisse A:B der kombinierten Herbizide können wie erwähnt ebenso wie deren Aufwandmengen innerhalb weiter Grenzen schwanken. Im Rahmen der Erfindung sind Mittel bevorzugt, welche Verbindungen der Formel I oder deren Salze (Typ-A-Verbindungen) und Verbindungen aus der Gruppe B in einem Gewichtsverhältnis von 1:2500 bis 20:1 enthalten.

Vorzugsweise werden folgende Gewichtsverhältnisse angewendet:

| Typ-B-Verbindungen | Mischungsverhältnisse A:B | |
|---|---|---|
| | bevorzugt | bes. bevorzugt |
| Ba)<br>Gräserherbizide<br>in Getreide<br>{z.B. B1) - B12)} | 1:500 bis 1:1 | 1:200 bis 1:2 |
| Bb)<br>Dikotylenherbizide<br>in Getreide<br>{z.B. B13) - B16)} | 1:1500 bis 1:1 | 1:500 bis 1:10 |
| Bb)<br>Dikotylenherbizide<br>in Getreide<br>{z.B. B17)} | 1:500 bis 1:1 | 1:300 bis 1:3 |
| Bb)<br>Dikotylenherbizide<br>in Getreide<br>{z.B. B18)} | 1:1200 bis 1:1 | 1:600 bis 1:3 |

(fortgesetzt)

| Typ-B-Verbindungen | Mischungsverhältnisse A:B | |
|---|---|---|
| | bevorzugt | bes. bevorzugt |
| Bb) Dikotylenherbizide in Getreide {z.B. B19) u. B20)} | 1:500 bis 1:1 | 1:200 bis 1:3 |
| Bb) Dikotylenherbizide in Getreide {z.B. B21) - B25)} | 1:500 bis 8:1 | 1:300 bis 2:1 |
| Bb) Dikotylenherbizide in Getreide {z.B. B26) - B28)} | 1:20 bis 20:1 | 1:10 bis 10:1 |

| Typ-B-Verbindungen | Mischungsverhältnisse A:B | |
|---|---|---|
| | bevorzugt | bes. bevorzugt |
| Bb) Dikotylenherbizide in Getreide {z.B. B29)} | 1:250 bis 1:1 | 1:100 bis 1:3 |
| Bb) Dikotylenherbizide in Getreide {z.B. B30)} | 1:1200 bis 1:1 | 1:600 bis 1:3 |
| Bc) Gräser- und Dikotylenherbizide in Getreide {z.B. B31 - B34)} | 1:2500 bis 1:2 | 1:2000 bis 1:4 |
| Bc) Gräser- u. Dikotylenherbizide in Getreide {z.B. B35) - B45)} | 1:40 bis 20:1 | 1:20 bis 10:1 |
| Bd) Nichtselektive oder nur in transgenen Kulturen selektive Breitbandherbizide {z.B. B46) u. B47)} | 1:1500 bis 1:2 | 1:1000 bis 1:10 |

Die erfindungsgemäßen Wirkstoffkombinationen können sowohl als Mischformulierungen der Komponenten vorliegen, die dann in üblicher Weise mit Wasser verdünnt zur Anwendung gebracht werden, oder auch als sogenannte Tankmischungen durch gemeinsame Verdünnung der getrennt formulierten Komponenten mit Wasser hergestellt werden.

Die Wirkstoffe der Typen A und B können auf verschiedene Art formuliert werden, je nachdem welche biologischen und/oder chemisch-physikalischen Parameter vorgegeben sind. Als Formulierungsmöglichkeiten kommen beispielsweise in Frage:

Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öloder Wasserbasis (SC), Suspoemulsionen, Suspensionskonzentrate, Stäubemittel (DP), ölmischbare Lösungen (OL), Beizmittel, Granulate (GR) in Form von Mikro-,

Sprüh-, Aufzugs- und Adsorptionsgranulaten, Granulate für die Boden- oder Streuapplikation, wasserlösliche Granulate (SG), wasserdispergierbare Granulate (WG), ULV-Formulierungen, Mikrokapseln und Wachse.

Bevorzugt sind hiervon wasserlösliche Spritzpulver (WP), wasserdispergierbare Granulate (WG), wasseremulgierbare Granulate (EC), Suspoemulsionen (SE) und Öl-Suspensionskonzentrate (SC).

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N. Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N. J.; H. v. Olphen "Introduction to Clay Colloid Chemistry", 2nd Ed., J. Wiley & Sons, N. Y.; Marsden "Solvents Guide, 2nd Ed., Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesellschaft, Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Herbiziden, Insektiziden, Fungiziden, sowie Antidots, Safenern, Düngemitteln und/oder Wachstumsregulatoren herstellen, z. B. in Form einer Fertigformulierung oder als Tankmix.

Besonders vorteilhaft werden die Herbizid-Kombinationen der Erfindung hergestellt, indem man die Verbindungen der Formel I oder deren Salze (Typ-A-Verbindungen) mit einer oder mehreren Verbindungen des Typs B analog einer üblichen Pflanzenschutzformulierung aus der Gruppe enthaltend wasserlösliche Spritzpulver (WP), wasserdispergierbare Granulate (WDG), wasseremulgierbare Granulate (WEG), Suspoemulsionen (SE) und Öl-Suspensionskonzentrate (SC) formuliert.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z. B. polyoxyethylierte Alkylphenole, polyoxyethylierte Fettalkohole und Fettamine, Fettalkoholpolyglykolethersulfate, Alkansulfonate oder Alkylarylsulfonate, ligninsulfonsaures Natrium, 2,2'dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes oder der Wirkstoffe in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z. B. Blockcopolymere), Alkylpolyether, Sorbitanfettsäureester, Polyoxyethylensorbitanfettsäureester oder andere Polyoxyethylensorbitanester.

Stäubemittel erhält man durch Vermahlen des Wirkstoffes oder der Wirkstoffe mit fein verteilten Stoffen, z. B. Talkum, natürlichen Tonen, wie Kaolin, Bentonit und Pyrophyllit, oder Diatomeenerde.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemitteigranulaten üblichen Weise - gewünschtenfalls in Mischung mit Düngemitteln - granuliert werden.

Die agrochemischen Zubereitungen gemäß der Erfindung enthalten in der Regel 0,1 bis 99 Gew.-%, insbesondere 2 bis 95 Gew.-%, Wirkstoffe der Typen A und B, neben üblichen Formulierungshilfsmitteln.

Die Konzentrationen der Wirkstoffe A + B können in den Formulierungen verschieden sein. In Spritzpulvern beträgt die Wirkstoffkonzentration z. B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% Wirkstoffe, versprühbare Lösungen etwa 0,2 bis 25 Gew.-%, vorzugsweise 2 bis 20 Gew.-% Wirkstoffe. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Aufgrund der relativ geringen Aufwandmenge der erfindungsgemäßen Kombinationen A + B ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs. Um die Verträglichkeit und/oder Selektivität der erfindungsgemäßen Herbizidkombinationen gewünschtenfalls noch zu steigern ist es allerdings von Vorteil, diese gemeinsam in Mischung oder zeitlich getrennt nacheinander zusammen mit Safenern oder Antidots anzuwenden. Als Safener oder Antidots für die erfindungsgemäßen Kombinationen in Frage kommenden Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91/08202) und PCT/EP 90/02020 (WO-91/078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

Günstigenfalls kennzeichnen sich die herbiziden Mischungen oder Anwendungskombinationen der Erfindung durch einen zusätzlichen Gehalt an

C)einer oder mehrerer Verbindungen der Formeln C1 und C2,

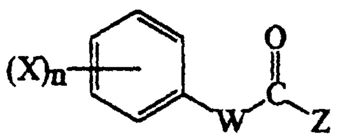

(C1)

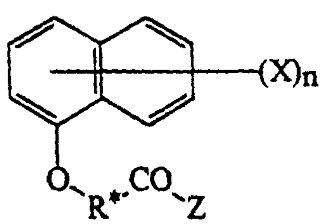

(C2)

worin

X Wasserstoff, Halogen, $(C_1-C_4)$-Alkyl, $(C_1-C_4)$-Alkoxy, Nitro oder $(C_1-C_4)$-Halogenalkyl bedeutet,

Z $OR^1$, $SR^1$, $NR^1R$, wobei R Wasserstoff, $(C_1-C_6)$-Alkyl, $(C_1-C_6)$-Alkoxy oder gegebenenfalls substituiertes Phenyl bedeutet, oder für einen gesättigten oder ungesättigten 3- bis 7-gliedrigen Heterozyklus mit mindestens einem N-Atom und bis zu drei Heteroatomen steht, der über das N-Atom mit der Carbonylgruppe verbunden ist und unsubstituiert oder durch Reste aus der Gruppe $(C_1-C_4)$-Alkyl, $(C_1-C_4)$-Alkoxy oder gegebenenfalls substituiertes Phenyl substituiert ist, vorzugsweise einen Rest der Formel $OR^1$, $NHR^1$ oder N $(CH_3)_2$, insbesondere $OR^1$,

R* eine$(C_1-C_2)$-Alkylenkette ( = $(C_1-C_2)$-Alkandiylkette), die noch mit ein oder zwei $(C_1-C_4)$ -Alkylresten oder mit $[(C_1-C_3)$-Alkoxy]carbonyl substituiert sein kann, vorzugsweise $-CH_2-$,

$R^1$ Wasserstoff, # $(C_1-C_{18})$-Alkyl, $(C_3-C_{12})$-Cycloalkyl, $(C_2-C_8)$-Alkenyl oder $(C_2-C_8)$-Alkinyl, wobei die vorstehenden C-haltigen Reste unsubstituiert oder ein- oder mehrfach, vorzgsweise bis zu dreifach, durch gleiche oder verschiedene Reste aus der Gruppe enthaltend Halogen, Hydroxy, $(C_1-C_8)$-Alkoxy, $(C_1-C_8)$-Alkylthio, $(C_2-C_8)$-Alkenylthio, $(C_2-C_8)$-Alkinylthio, $(C_2-C_8)$-Alkenyloxy, $(C_2-C_8)$-Alkinyloxy, $(C_3-C_7)$ -Cycloalkyl, $(C_3-C_7)$-Cycloalkoxy, Cyano, Mono- und Di-$(C_1-C_8)$-alkyl-amino, Carboxy, $(C_1-C_8)$-Alkoxy-carbonyl, $(C_2-C_8)$ -Alkenyloxy-carbonyl, $(C_1-C_8)$-Alkylthio-carbonyl, $(C_2-C_8)$-Alkinyloxy- carbonyl, $(C_1-C_8)$-Alkyl-carbonyl, $(C_2-C_8)$-Alkenyl-carbonyl, $(C_2-C_8)$-Alkinyl-carbonyl, 1-(Hydroxyimino)-$(C_1-C_6)$-alkyl, 1-$[(C_1-C_4)$-Alkylimino]-$(C_1-C_4)$-alkyl, 1-$[(C_1-C_4)$-Alkoxyimino]-$(C_1-C_6)$-alkyl, $(C_1-C_8)$-Alkylcarbonylamino, $(C_2-C_8)$-Alkenyl-carbonylamino, $(C_2-C_8)$-Alkinyl-carbonylamino, Aminocarbonyl, $(C_1-C_8)$ -Alkyl-aminocarbonyl, Di-$(C_1-C_6)$-alkylaminocarbonyl, $(C_2-C_6)$-Alkenyl-aminocarbonyl, $(C_2-C_6)$-Alkinyl-aminocarbonyl, $(C_1-C_8)$-Alkoxycarbonylamino, $(C_1-C_8)$-Alkyl-aminocarbonylamino, $(C_1-C_6)$-Alkylcarbonyloxy, das unsubstituiert oder durch Halogen, $NO_2$, $(C_1-C_4)$-Alkoxy oder gegebenenfalls substituiertes Phenyl substituiert ist, $(C_2-C_6)$-Alkenylcarbonyloxy, $(C_2-C_6)$-Alkinyl-carbonyloxy, $(C_1-C_8)$-Alkyl-sulfonyl, Phenyl, Phenyl-$(C_1-C_6)$-alkoxy, Phenyl-$(C_1-C_6)$-alkoxy-carbonyl, Phenoxy, Phenoxy-$(C_1-C_6)$-alkoxy, Phenoxy-$(C_1-C_6)$-alkoxy-car-

bonyl, Phenylcarbonyloxy, Phenylcarbonylamino, Phenyl-($C_1$-$C_6$)-alkylcarbonylamino, wobei die letztgenannten neun Reste im Phenylring unsubstituiert oder ein- oder mehrfach, vorzugsweise bis zu dreifach durch gleiche oder verschiedene Reste aus der Gruppe Halogen, ($C_1$-$C_4$)-Alkyl, ($C_1$-$C_4$)-Alkoxy, ($C_1$-$C_4$) -Halogenalkyl, ($C_1$-$C_4$)-Halogenalkoxy und Nitro substituiert sind, und Reste der Formeln $SiR'_3$, $-O-SiR'_3$, $R'_3Si$-($C_1$-$C_8$)-alkoxy, $-CO-O-NR'_2$, $-O-N=CR'_2$, $-N=CR'_2$, $-O-NR'_2$, $CH(OR')_2$ und $-O-(CH_2)_m-CH(OR'_2)_2$, worin die R' in den genannten Formeln unabhängig voneinander Wasserstoff, ($C_1$-$C_4$)-Alkyl, Phenyl, das unsubstituiert oder ein- oder mehrfach, vorzugsweise bis zu dreifach durch gleiche oder verschiedene Reste aus der Gruppe Halogen, ($C_1$-$C_4$)-Alkyl, ($C_1$-$C_4$)-Alkoxy, ($C_1$-$C_4$)-Halogenalkyl, ($C_1$-$C_4$)-Halogenalkoxy und Nitro substituiert ist, oder paarweise eine ($C_2$-$C_6$)-Alkylenkette und m= 0 bis 6 bedeuten, und ein Rest der Formel R"O-CHR'''(OR")-($C_1$-$C_6$)-alkoxy,
worin die Reste R" unabhängig voneinander ($C_1$-$C_4$)-Alkyl oder zusammen einen ($C_1$-$C_6$)-Alkylenrest und R''' Wasserstoff oder ($C_1$-$C_4$)-Alkyl bedeuten, substituiert sind,

R Wasserstoff, ($C_1$-$C_6$)-Alkyl, ($C_1$-$C_6$)-Alkoxy oder gegebenenfalls substituiertes Phenyl bedeutet,

n eine ganze Zahl von 1 bis 5, vorzugsweise 1 bis 3,

W ein divalenter heterozyklischer Rest mit 5 Ringatomen der Formeln W1 bis W4,

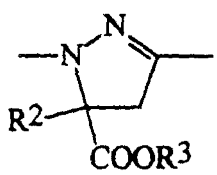

(W1)

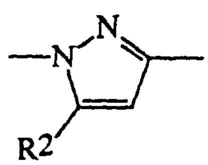

(W2)

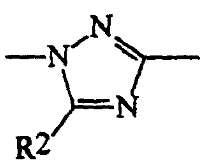

(W3)

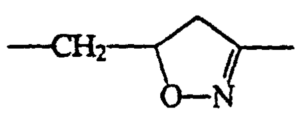

(W4)

,

worin

$R^2$ Wasserstoff, ($C_1$-$C_8$)-Alkyl, ($C_1$-$C_8$)-Halogenalkyl, ($C_3$-$C_{12}$) -Cycloalkyl oder gegebenenfalls substituiertes Phenyl und

$R^3$ Wasserstoff, ($C_1$-$C_8$)-Alkyl, ($C_1$-$C_8$)-Halogenaikyl, ($C_1$-$C_4$) -Alkoxy- ($C_1$-$C_4$)-alkyl, ($C_1$-$C_6$)-Hydroxyalkyl, ($C_3$-$C_{12}$)-Cycloalkyl oder Tri-($C_1$-$C_4$)-alkyl)-silyl sind,

bedeuten, oder die Salze der genannten Verbindungen.

Sofern es im einzelnen nicht anders definiert wird, gelten für die Reste in den in dieser Beschreibung verwendeten Formeln die folgenden Definitionen:

Alkyl, Alkenyl und Alkinyl sind geradkettig oder verzweigt und haben bis zu 8, vorzugsweise bis zu 4 C-Atome; entsprechendes gilt für den aliphatischen Teil substituierter Alkyl-, Alkenyl- und Alkinylreste oder davon abgeleitete Reste wie Haloalkyl (= Halogenalkyl), Hydroxyalkyl, Alkoxycarbonyl, Alkoxy, Alkanoyl, Halogenalkoxy etc.;

Alkyl bedeutet zum Beispiel Methyl, Ethyl, n-Propyl, Isopropyl, n-Butyl, i-Butyl, t-Butyl und 2-Butyl, Pentyle, insbesondere n-Pentyl und neo-Pentyl, Hexyle, wie n-Hexyl und i-Hexyl und 1,3-Dimethylbutyl, Heptyle, wie n-Heptyl,

1-Methylhexyl und 1,4-Dimethylpentyl Alkenyl bedeutet beispielsweise unter anderem Allyl, 1-Methylprop-2-en-1-yl, But-2-en-1-yl, But-3-en-1-yl, 1-Methyl-but-3-en und 1-Methyl-but-2-en; Alkinyl bedeutet unter anderem Propargyl, But-2-in-1-yl, But-3-in-1-yl, 1-Methyl-but-3-in;

Cycloalkyl hat vorzugsweise 3 bis 8 C-Atome und steht z. B. für Cyclobutyl, Cyclopentyl, Cyclohexyl oder Cycloheptyl. Cycloalkyl kann gegebenenfalls bis zu zwei ($C_1$-$C_4$)-Alkylreste als Substituenten tragen.

Halogen bedeutet Fluor, Chlor, Brom oder Jod, vorzugsweise Fluor, Chlor oder Brom, insbesondere Fluor oder Chlor; Halogenalkyl ( = Haloalkyl), -alkenyl und -alkinyl bedeuten durch Halogen mono-, di- oder polysubstituiertes Alkyl, Alkenyl beziehungsweise Alkinyl, zum Beispiel wie $CF_3$, $CHF_2$, $CH_2F$, $CF_3CF_2$, $CH_2FCHCl$, $CCl_3$, $CHCl_2$, $CH_2CH_2Cl$; Halogenalkoxy ( = Haloalkoxy) ist zum Beispiel unter anderem $OCF_3$, $OCHF_2$, $OCH_2F$, $CF_3CF_2O$, $CF_3CH_2O$;

Aryl weist vorzugsweise 6 bis 12 C-Atome auf und ist z. B. Phenyl, Naphthyl oder Biphenyl, vorzugsweise Phenyl.

Entsprechendes gilt für davon abgeleitete Reste wie Aryloxy, Aroyl, oder Aroylalkyl;

gegebenenfalls substituiertes Phenyl steht beispielsweise für Phenyl, das unsubstituiert ist oder ein- oder mehrfach, vorzugsweise ein-, zwei- oder dreifach, durch gleiche oder verschiedene Reste aus der Gruppe Halogen, ($C_1$-$C_4$)-Alkyl, ($C_1$-$C_4$)-Alkoxy, ($C_1$-$C_4$)-Halogenalkyl, ($C_1$-$C_4$)-Halogenalkoxy, ($C_1$-$C_4$)-Alkylthio, ($C_2$-$C_5$)-Alkoxycarbonyl, ($C_2$-$C_5$)-Alkylcarbonyloxy, Carbonamid, ($C_2$-$C_5$) -Alkylcarbonylamino, Di[($C_1$-$C_4$)-Alkyl]aminocarbonyl und Nitro substituiert ist, zum Beispiel o-, m- und p-Tolyl, Dimethylphenyle, 2-, 3-und 4-Chlorphenyl, 2-, 3- und 4-Trifluor- und -Trichlorphenyl, 2,4-, 3,5-, 2,5- und 2,3-Dichlorphenyl oder o-, m- und p-Methoxyphenyl. Entsprechendes gilt für gegebenenfalls substituiertes Aryl.

Von besonderem Interesse sind erfindungsgemäße herbizide Mittel, wobei in den Verbindungen der Formel C1 und C2,

$R^1$ Wasserstoff, ($C_1$-$C_8$)-Alkyl, ($C_3$-$C_7$)-Cycloalkyl, ($C_2$-$C_8$)-Alkenyl oder ($C_2$-$C_8$)-Alkinyl, wobei die vorstehenden C-haltigen Reste unsubstituiert oder ein- oder mehrfach durch Halogen oder ein- oder zweifach, vorzugsweise einfach Reste aus der Gruppe Hydroxy, ($C_1$-$C_4$)-Alkoxy, ($C_1$-$C_4$)-Alkylthio, ($C_2$-$C_4$)-Alkenyloxy, ($C_2$-$C_6$)-Alkinyloxy, Mono- und Di-(($C_1$-$C_2$)-alkyl) -amino, ($C_1$-$C_4$)-Alkoxy-carbonyl, ($C_2$-$C_4$) -Alkenyloxycarbonyl, ($C_2$-$C_4$) -Alkinyloxy-carbonyl, ($C_1$-$C_4$) -Alkyl-carbonyl, ($C_2$-$C_4$)-Alkenyl-carbonyl, ($C_2$-$C_4$)-Alkinyl-carbonyl, ($C_1$-$C_4$)-Alkylsulfonyl, Phenyl, Phenyl-($C_1$-$C_4$)-alkoxy-carbonyl, Phenoxy, Phenoxy-($C_1$-$C_4$)-alkoxy, Phenoxy- ($C_1$-$C_4$)-alkoxy-carbonyl, wobei die letztgenannten sechs Reste im Phenylring unsubstituiert oder ein- oder mehrfach durch Reste aus der Gruppe Halogen, ($C_1$-$C_2$)-Alkyl, ($C_1$-$C_2$)-Alkoxy, ($C_1$-$C_2$)-Halogenalkyl, ($C_1$-$C_2$) -Halogenalkoxy und Nitro substituiert sind, und Reste der Formeln $SiR'_3$, $-O-N=CR'_2$, $-N=CR'_2$ und $-O-NR'_2-CH(OR')_2$, worin die R' in den genannten Formeln unabhängig voneinander Wasserstoff, ($C_1$-$C_2$)-Alkyl, Phenyl, das unsubstituiert oder ein- oder mehrfach durch Reste aus der Gruppe Halogen, ($C_1$-$C_2$)-Alkyl, ($C_1$-$C_2$)-Alkoxy, ($C_1$-$C_2$)-Halogenalkyl, ($C_1$-$C_2$)-Halogenalkoxy und Nitro substituiert ist, oder paarweise eine ($C_4$-$C_5$)-Alkandiylkette bedeuten, substituiert sind,

$R^2$ Wasserstoff, ($C_1$-$C_8$)-Alkyl, ($C_1$-$C_6$)-Haloalkyl, ($C_3$-$C_7$)-Cycloalkyl oder Phenyl und

$R^3$ Wasserstoff, ($C_1$-$C_8$)-Alkyl, ($C_1$-$C_8$)-Haloalkyl, (($C_1$-$C_4$)-Alkoxy)-($C_1$-$C_4$)-alkyl, ($C_1$-$C_6$)-Hydroxyalkyl, ($C_3$-$C_7$)-Cycloalkyl oder Tri(($C_1$-$C_4$)-alkyl)-silyl

bedeutet.

Von besonderem Interesse sind auch erfindungsgemäße herbizide Mittel, wobei in den Verbindungen der Formeln C1 und C2,

X Wasserstoff, Halogen, Methyl, Ethyl, Methoxy, Ethoxy, ($C_1$-$C_2$)-Halogenalkyl, vorzugsweise Wasserstoff, Halogen oder ($C_1$-$C_2$)-Halogenalkyl

bedeutet.

Bevorzugt sind erfindungsgemäße herbizide Mittel, wobei in den Verbindungen der Formel C1,

X Wasserstoff, Halogen, Nitro oder ($C_1$-$C_4$)-Halogenalkyl,

Z ein Rest der Formel $OR^1$,

n eine ganze Zahl von 1 bis 3,

$R^1$ Wasserstoff, $(C_1-C_8)$-Alkyl, $(C_3-C_7)$-Cycloalkyl, wobei die vorstehenden C-haltigen Reste unsubstituiert sind oder ein- oder mehrfach durch Reste aus der Gruppe Halogen oder ein- oder zweifach, vorzugsweise unsubstituiert oder einfach, durch Reste aus der Gruppe Hydroxy, $(C_1-C_4)$-Alkoxy, $((C_1-C_4)$-Alkoxy)-carbonyl, $(C_2-C_6)$ -Alkenyloxy-carbonyl, $((C_2-C_6)$-Alkinyloxy)-carbonyl und Reste der Formeln $SiR'_3$, $-O-N=CR'_2$, $-N=CR'_2$, $-O-NR'_2$, worin die Reste R' in den genannten Formeln unabhängig voneinander Wasserstoff oder $(C_1-C_4)$-Alkyl oder paarweise eine $(C_4-C_5)$-Alkylenkette bedeuten, substituiert sind,

$R^2$ Wasserstoff, $(C_1-C_8)$-Alkyl, $(C_1-C_6)$-Haloalkyl, $(C_3-C_7)$-Cycloalkyl oder Phenyl und

$R^3$ Wasserstoff, $(C_1-C_8)$-Alkyl, $(C_1-C_8)$-Haloalkyl, $((C_1-C_4)$-Alkoxy)-$(C_1-C_4)$-alkyl, $(C_1-C_6)$-Hydroxyalkyl, $(C_3-C_7)$-Cycloalkyl oder Tri-$((C_1-C_4)$-alkyl)-silyl

bedeuten.

Bevorzugt sind auch erfindungsgemäße herbizide Mittel, wobei in den Verbindungen der Formel C2,

X Wasserstoff, Halogen oder $(C_1-C_4)$-Halogenalkyl und n eine ganze Zahl von 1 bis 3, vorzugsweise $(X)_n$ = 5-Cl,

Z ein Rest der Formel $OR^1$,

R* $CH_2$ und

$R^1$ Wasserstoff, $(C_1-C_8)$-Alkyl, $(C_1-C_8)$-Haloalkyl, $((C_1-C_4)$-Alkoxy)-$(C_1-C_4)$-alkyl oder $((C_1-C_4)$-Alkenyloxy)-$(C_1-C_4)$-alkyl, vorzugsweise $(C_1-C_8)$-Alkyl,

bedeuten.

Besonders bevorzugt sind erfindungsgemäße herbizide Mittel mit Verbindungen der Formel C1, worin

W W1

X Wasserstoff, Halogen oder $(C_1-C_2)$-Halogenalkyl und n = 1 - 3, insbesondere $(X)_n$= 2,4-$Cl_2$,

Z ein Rest der Formel $OR^1$,

$R^1$ Wasserstoff, $(C_1-C_8)$-Alkyl, $(C_1-C_4)$-Haloalkyl, $(C_1-C_4)$-Hydroxyalkyl, $(C_3-C_7)$ -Cycloalkyl, $((C_1-C_4)$-Alkoxy) -$(C_1-C_4)$-alkyl, Tri-$((C_1-C_2)$-alkyl)-silyl, vorzugsweise $(C_1-C_4)$-Alkyl,

$R^2$ Wasserstoff, $(C_1-C_8)$-Alkyl, $(C_1-C_4)$-Haloalkyl oder $(C_3-C_7)$-Cycloalkyl, vorzugsweise Wasserstoff oder $(C_1-C_4)$ -Alkyl und

$R^3$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$-Alkoxy) -$(C_1-C_4)$-alkyl oder Tri-$((C_1-C_2)$-alkyl)-silyl, vorzugsweise H oder $(C_1-C_4)$-Alkyl,

bedeuten.

Besonders bevorzugt sind auch erfindungsgemäße herbizide Mittel mit Verbindungen der Formel C1, worin

W W2

X Wasserstoff, Halogen oder $(C_1-C_2)$-Halogenalkyl und n= 1 - 3, insbesondere $(X)_n$ = 2,4-$Cl_2$,

Z ein Rest der Formel $OR^1$,

$R^1$ Wasserstoff, $(C_1-C_8)$-Alkyl, $(C_1-C_4)$-Haloalkyl, $(C_1-C_4)$-Hydroxyalkyl, $(C_3-C_7)$-Cycloalkyl, $((C_1-C_4)$-Alkoxy) -$(C_1-C_4)$-alkyl, Tri-$((C_1-C_2)$-alkyl)-silyl, vorzugsweise $(C_1-C_4)$-Alkyl, und

$R^2$ Wasserstoff, $(C_1-C_8)$-Alkyl, $(C_1-C_4)$-Haloalkyl, $(C_3-C_7)$-Cycloalkyl oder Phenyl, vorzugsweise Wasserstoff oder $(C_1-C_4)$-Alkyl,

bedeuten.

Besonders bevorzugt sind auch erfindungsgemäße herbizide Mittel mit Verbindungen der Formel C1, worin

W W3

X Wasserstoff, Halogen oder $(C_1-C_2)$-Halogenalkyl und n= 1 - 3, insbesondere $(X)_n$ = 2,4-$Cl_2$,

Z ein Rest der Formel $OR^1$,

$R^1$ Wasserstoff, $(C_1-C_8)$-Alkyl, $(C_1-C_4)$-Haloalkyl, $(C_1-C_4)$ -Hydroxyalkyl, $(C_3-C_7)$-Cycloalkyl, $((C_1-C_4)$-Alkoxy) -$(C_1-C_4)$-alkyl, Tri- $((C_1-C_2)$-alkyl)-silyl, vorzugsweise $(C_1-C_4)$-Alkyl, und

$R^2$ $(C_1-C_8)$-Alkyl oder $(C_1-C_4)$-Haloalkyl, vorzugsweise, $C_1$-Haloalkyl,

bedeuten.

Besonders bevorzugt sind auch erfindungsgemäße herbizide Mittel mit Verbindungen der Formel C1, worin

W W4
X Wasserstoff, Halogen, Nitro, ($C_1$-$C_4$)-Alkyl, ($C_1$-$C_4$)-Alkoxy oder ($C_1$-$C_2$)-Halogenalkyl und n= 1 - 3, vorzugsweise $CF_3$ oder ($C_1$-$C_4$)-Alkoxy,
Z ein Rest der Formel $OR^1$ und
$R^1$ Wasserstoff, ($C_1$-$C_4$)-Alkyl oder (($C_1$-$C_4$)-Alkoxy)-carbonyl-($C_1$-$C_4$)-alkyl, vorzugsweise (($C_1$-$C_4$)-Alkoxy) -CO-$CH_2$-, (($C_1$-$C_4$)-Alkoxy)-CO-C($CH_3$)H-, HO-CO-$CH_2$- oder HO-CO-C ($CH_3$)H-,

bedeuten.

Die Verbindungen der Formeln C1 sind aus EP-A-0 333 131, EP-A-0 269 806, EP-A-0 346 620, Internationale Patentanmeldung PCT/EP 90/01966 und Internationale Patentanmeldung PCT/EP 90/02020 und dort zitierter Literatur bekannt oder können nach oder analog den dort beschriebenen Verfahren hergestellt werden. Die Verbindungen der Formel C2 sind aus EP-A-0 086 750, EP-A-0 094 349 und EP-A-0 191 736 und dort zitierter Literatur bekannt oder können nach oder analog den dort beschriebenen Verfahren hergestellt werden. Sie werden ferner in der DE-A-40 41 121.4 vorgeschlagen.

Besonders bevorzugte Antidots oder Safener oder Gruppen von Verbindungen die sich als Safener oder Antidots für die vorbeschriebenen Produktkombinationen der Erfindung bewährt haben sind unter anderem:

a)Verbindungen vom Typ der Dichlorphenylpyrazolin-3-carbonsäure (d.h. der Formel C1, worin W = W1 und $(X)_n$ = 2,4-$Cl_2$), vorzugsweise Verbindungen wie 1-(2,4-Dichlorphenyl)-5-(ethoxycarbonyl)-5-methyl-2-pyrazolin-3-carbonsäureethylester (Verbindung C1-1) und verwandte Verbindungen, wie sie in der internationalen Anmeldung WO 91/07874 (PCT/EP 90/02020) beschrieben sind;

b)Derivate der Dichlorphenylpyrazolcarbonsäure (d. h. der Formel C1, worin W = W2 und $(X)_n$ = 2,4-$Cl_2$), vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)pyrazol-3-carbonsäureethylester (Verbindung C1-4), 1-(2,4-Dichlorphenyl)-5-phenyl-pyrazol-3-carbonsäureethylester (Verbindung C1-5) und verwandte Verbindungen, wie sie in EP-A-0 333 131 und EP-A-0 269 806 beschrieben sind;

c)Verbindungen vom Typ der Triazolcarbonsäuren (d. h. der Formel C1, worin W = W3 und $(X)_n$ = 2,4-$Cl_2$), vorzugsweise Verbindungen wie 1-(2,4-Dichlorphenyl)-5-trichlormethyl-(1H)-1,2,4-triazol-3-carbonsäureethylester (Verbindung C1-6, Fenchlorazol) und verwandte Verbindungen (siehe EP-A-0 174 562 und EP-A-0 346 620);

d) Verbindungen vom Typ der Dichlorbenzyl-2-isoxazolin-3-carbonsäure (d. h. der Formel C1, worin W = W4 und $(X)_n$ = 2,4-$Cl_2$), Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1-7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;

e) Verbindungen vom Typ der 8-Chinolinoxyessigsäure (d. h. der Formel C2, worin $(X)_n$ = 5-Cl, Wasserstoff, Z = $OR^1$, R* = $CH_2$),
vorzugsweise Verbindungen wie
(5-Chlor-8-chinolinoxy) -essigsäure-(1-methyl-hex-1-yl)ester (C2-1),
(5-Chlor-8-chinolinoxy)-essigsäure-(1,3-dimethyl-but-1-yl)-ester (C2-2),
(5-Chlor-8-chinolinoxy)-essigsäure-4-allyl-oxy-butylester (C2-3),
(5-Chlor-8-chinolinoxy)-essigsäure-1-allyl-oxy-prop-2-ylester (C2-4),
(5-Chlor-8-chinolinoxy)-essigsäureethylester (C2-5),
(5-Chlor-8-chinolinoxy)-essigsäuremethylester (C2-6),
(5-Chlor-8-chinolinoxy)-essigsäureallylester (C2-7),
(5-Chlor-8-chinolinoxy)-essigsäure-2-(2-prpylideniminoxy)-1-ethylester (C2-8),
(5-Chlor-8-chinolinoxy)-essigsäure-2-oxo-prop-1-ylester (C2-9)
und verwandte Verbindungen wie sie in EP-A-0 086 750, EP-A-0 094 349 und EP-A-0 191 736 oder EP-A-0 492 366 beschrieben sind;

f)Verbindungen vom Typ der (5-Chlor-8-chinolinoxy)-malonsäure, d. h. der Formel C2, worin $(X)_n$ = 5-Cl, Wasser-

stoff, Z = $OR^1$, R* = -CH(COO-Alkyl)-, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung P 40 41 121.4 beschrieben und vorgeschlagen worden sind;

g) sowie Wirkstoffe vom Typ der Phenoxyessig- bzw. - propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3, 6-Dichlor-2-methoxy-benzoesäure(ester) (Dicamba).

Die genannten Verbindungen sind außerdem zumindest teilweise in der EP-A-0 640 587 beschrieben, auf die hiermit zu Offenbarungszwecken bezug genommen wird.

Die Safener (Antidote) der vorstehenden Gruppen a) bis g) (insbesondere Verbindungen der Formeln C1 und C2) reduzieren oder unterbinden phytotoxische Effekte, die beim Einsatz der Produktkombinationen gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen Mischungen von Herbiziden ganz erheblich erweitert werden und insbesondere ist durch die Verwendung von Safenern der Einsatz von Kombinationen möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die herbiziden Mischungen gemäß der Erfindung und die erwähnten Safener können zusammen ( als fertige Formulierung oder im Tank-mix-Verfahren) oder in beliebiger Reihenfolge nacheinander ausgebracht werden. Das Gewichtsverhältnis Safener:Herbizid (Gruppe A, i.e. Verbindungen der Formel I) kann innerhalb weiter Grenzen variieren und ist vorzugsweise im Bereich von 1 : 10 bis 10 : 1, insbesondere von 1 : 10 bis 5 : 1. Die jeweils optimalen Mengen an Herbiziden (Typ-A- und Typ-B-Verbindungen) und Safener sind vom Typ der verwendeten Herbizidmischung und/oder vom verwendeten Safener sowie von der Art des zu behandelnden Pflanzenbestandes abhängig und lassen sich von Fall zu Fall durch entsprechende Vorversuche ermitteln.

Die Safener vom Typ C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verqwendetem Herbizid innerhalb weiter Grenzen schwanken und sind in der Regel im Bereich von 0,001 bis 1 kg, vorzugsweise 0,005 bis 0,2 kg Wirkstoff je Hektar.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Gegenstand der Erfindung ist auch ein Verfahren zur Bekämpfung von unerwünschten Pflanzen, welches dadurch gekennzeichnet ist, daß man auf diese oder die Anbaufläche eine herbizid wirksame Menge einer erfindungsgemäßen Kombination von Wirkstoffen A + B appliziert. Die Wirkstoffe können auf die Pflanzen, Pflanzenteile, Pflanzensamen oder die Anbaufläche ausgebracht werden. In bevorzugter Verfahrensvariante werden die Verbindungen der Formel (I) oder deren Salze (Typ-A-Verbindungen) in Aufwandmengen von 0,1 bis 100 g ai/ha, bevorzugt von 2 bis 40 g ai/ha ausgebracht, während die Aufwandmengen für die Verbindungen vom Typ B von 1 bis 5000 g ai/ha betragen. Bevorzugt ist die Ausbringung der Wirkstoffe der Typen A und B gleichzeitig oder zeitlich getrennt im Gewichtsverhältnis 1:2500 bis 20:1. Weiterhin besonders bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Da die Kulturverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Besonders günstig gestaltet sich das Verfahren zur selektiven Bekämpfung von Schadpflanzen bei Einsatz der Kombinationspartner vom Typ B) aus den Untergruppen Ba) bis Bc), wenn die herbiziden Mittel der Erfindung in Getreide-Nutzpflanzenkulturen, in Plantagenkulturen, auf Grün- oder Weideland eingesetzt werden. Der Einsatz in Mais oder anderen Nutzpflanzenkulturen, wie etwa Reis, ist jedoch nicht von vornherein ausgeschlossen.

Die Kombinationspartner vom Typ A bekämpfen alleine angewendet im Vorauflauf- wie im Nachauflaufverfahren in Getreide, in Nichtkulturland und Plantagenkulturen bereits ein recht breites Spektrum an annuellen und perenierenden Unkräutern, Ungräsern und Cyperaceen.

Das Wirkungsspektrum der Typ A Verbindungen wird durch die Kombination mit den in der Erfindung genannten Typ-B-Partnern noch weiter verbessert.

So ergänzen und verstärken die Verbindungen B1) bis B12) u. a. die Wirkung bei der Bekämpfung von Ungräsern in Getreide und teilweise auch die Wirkung gegen Unkräuter in Getreide, jeweils sowohl im Vorauflauf- als auch im Nachauflaufverfahren.

Die Wuchsstoffherbizide aus der Untergruppe Bb) (Verbindungen B13) bis B16)), d.h. insbesondere die Dichlorphenoxyessigsäure-, Dichlorphenoxypropionsäure-, Chlormethylphenoxyessigsäure- und Chlormethylphenoxypropionsäurederivate sowie das analoge Dicamba (B17)) und das ebenfalls verwandte Fluroxypyr (B18)) dienen im Sinne der Erfindung vor allem zur wirkungsvolleren Bekämpfung von annuellen und perenierenden Unkräutern vornehmlich im Nachauflaufverfahren in Getreide.

Die Verbindungen B19) und B20) (HBN's oder sog.
Bipyridilium-Derivate) sind herbizide Wirkstoffe, die vornehmlich die Wirksamkeit der Unkrautbekämpfung in Getreide verbessern. Sie werden hauptsächlich im Nachauflaufverfahren eingesetzt.
Die Nitrodiphenylether B21) bis B25) werden sowohl im Vorals auch Nachauflaufverfahren eingesetzt. Sie dienen zur Wirkungsverbesserung in Getreide.

Die Azole und Pyrazole aus der Untergruppe Bb) (z. B. B26) bis B28)) können besonders vorteilhaft mit vergleichsweise niedrigen Aufwandmengen im Nachauflaufverfahren zur Bekämpfung von dikotylen Unkräutern in Getreide eingesetzt werden.

B29) verbessert das Wirkungsspektrum der erfindungsgemäßen Kombinationen im Vor- und Nachauflaufverfahren bei der Bekämpfung von Unkräutern in Getreide und anderen Kulturarten, während B30) ein herbizider Wirkstoff ist, der in einer Vielzahl landwirtschaftlicher Kulturpflanzen im Nachauflaufverfahren zur Unkrautbekämpfung eingesetzt wird.

Die Triazine, Triazole, (Thio)carbamate und Furanone aus der Untergruppe Bc) (z.B. B31) bis B34)) sind weitverbreitete Wirkstoffe, die sowohl im Vorauflauf als auch im Nachauflauf zur Steigerung der Wirksamkeit der Typ-A-Verbindungen bei der Bekämpfung von Ungräsern und Unkräutern in Getreide, Nichtkulturlaund oder Plantagenkulturen eingesetzt werden können.

Die Verbindungen B35) bis B45) schließlich (Untergruppe Bc)) dienen in der Erfindung bevorzugt zur Bekämpfung von Unkraut - teilweise auch Ungras - in Getreide sowie in Kartoffeln, im Grünland oder im Nichtkulturland, gegebenenfalls in Plantagen oder Dauerkulturen, im Nachaber teilweise auch im Vorauflaufverfahren.

Je nach Natur des Kombinationspartners B können die erfindungsgemäßen herbiziden Kombinationen vorteilhaft zur Bekämpfung von unerwünschten Pflanzen auch im Nichtkulturland und/oder in transgenen Kulturen, wie Mais, Reis, Soja, Getreide u.a., eingesetzt werden. Hierfür eignen sich insbesondere die Partner aus der Gruppe Bd) (Verbindungen B46) und B47)).

Dabei umfaßt der Begriff Nichtkulturland nicht nur Wege, Plätze, Industrie- und Gleisanlagen, die regelmäßig von Unkraut freizuhalten sind, vielmehr fallen auch, selbst wenn nicht separat erwähnt, Plantagenkulturen im Rahmen der Erfindung unter diesen Oberbegriff. Demnach lassen sich die erfindungsgemäßen Kombinationen (vor allem mit den Kombinationspartnern aus der Untergruppe Bd)), die ein breites Unkrautspektrum erfassen, was von annuellen und perennierenden Unkräutern wie beispielsweise Agropyron, Paspalum, Cynodon, Imperata über Pennisetum, Convolvulus und Cirsium bis hin zu Rumex und anderen reicht, zur selektiven Bekämpfung von Schadpflanzen in Plantagenkulturen wie Ölpalme, Kokospalme, Gummibaum (Hevea brasiliensis), Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"- Verfahren eingesetzt werden. Sie können aber auch wie bereits erwähnt im eigentlichen Nichtkulturland, d.h. nichtselektiv auf Wegen, Plätzen etc. angewendet werden, um diese Flächen von unerwünschtem Pflanzenwuchs freizuhalten. Die an sich nichtselektiven Kombinationspartner der Gruppe Bd) werden aber nicht nur bei entsprechender Widerstandsfähigkeit der Kulturpflanzen zu selektiven Herbiziden, auch bei Einsatz in sogenannten transgenen Kulturen sind Kombinationen gemäß der Erfindung selektiv. Transgene Kulturen sind solche, in denen die Pflanzen durch genetische Manipulation oder Selektion gegen an sich nichtselektive Herbizide resistent gemacht werden. Dergestalt veränderte Kulturpflanzen, wie z.B. Mais, Getreide oder Soya lassen dann den selektiven Einsatz von Kombinationen mit B46) und/oder B47) zu.

Zusammenfassend kann gesagt werden, daß bei gemeinsamer Anwendung von N-[(4,6-Dimethoxypyrimidin-2-yl)aminocarbonyl]-5-methylsulfonamidomethyl-2-alkoxycarbonylbenzolsulfonamiden und/oder deren Salzen mit einem oder mehreren Wirkstoffen aus der Gruppe B, optional und besonders bevorzugt zusätzlich mit einem oder mehreren Safenern aus der Gruppe C, überadditive (= synergistische) Effekte auftreten. Dabei ist die Wirkung in den Kombinationen stärker als die der eingesetzten Einzelprodukte bei alleiniger Anwendung. Diese Effekte erlauben

- eine Reduzierung der Aufwandmenge,

- die Bekämpfung eines breiteren Spektrums von Unkräutern und Ungräsern,
- eine schnellere und sicherere Wirkung,
- eine längere Dauerwirkung,
- eine komplette Kontrolle der Schadpflanzen mit nur einer oder wenigen Applikationen, und
- eine Ausweitung des Anwendungszeitraumes der Wirkstoffe in Kombination.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen.
Darüberhinaus gestatten die erfindungsgemäßen Kombinationen in hervorragender Weise die Bekämpfung ansonsten resistenter Schadpflanzen.
Folgende Beispiele dienen zu Erläuterung der Erfindung:

1. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoffe A + B, 64 Gew.-Teile kaolinhaltigen Quarz als Inertstoff, 10 Gew.-Teile ligninsulfonsaures Kalium und 1 Gew. -Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile Wirkstoffe A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z. B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen Cyclohexanon als Lösemittel und 10 Gew. -Teilen oxethyliertes Nonylphenol als Emulgator.

e) Ein in Wasser dispergierbares Granulat wird erhalten, indem man

| | |
|---|---|
| 75 | Gew.-Teile Wirkstoffe A + B, |
| 10 | Gew.-Teile ligninsulfonsaures Calcium, |
| 5 | Gew.-Teile Natriumlaurylsulfat, |
| 3 | Gew.-Teile Polyvinylalkohol und |
| 7 | Gew.-Teile Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 | Gew.-Teile Wirkstoffe A + B |
| 5 | Gew.-Teile 2,2'-dinaphthylmethan-6,6'-disulfonsaures Natrium, |
| 2 | Gew.-Teile oleoylmethyltaurinsaures Natrium, |
| 1 | Gew.-Teil Polyvinylalkohol, |
| 17 | Gew.-Teile Calciumcarbonat und |
| 50 | Gew.-Teile Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

g) Ein Extruder-Granulat erhält man, indem man 20 Gew.-Teile der Wirkstoffe A + B, 3 Gewichtsteile ligninsulfonsaures Natrium, 1 Gewichtsteil Carboxymethylcellulose und 76 Gewichtsteile Kaolin vermischt, vermahlt

und mit Wasser anfeuchtet. Dieses Gemisch wird extrudiert und anschließend im Luftstrom getrocknet.

2. Biologische Beispiele

Die nachfolgend genannten Beispiele wurden im Gewächshaus und teilweise in Feldversuchen erarbeitet.

Feldversuche

Dabei wurden im Getreide nach natürlichem Auflaufen der Unkräuter die Herbizide bzw. die Kombinationen mit Parzellenspritzgeräten appliziert. Nach der Anwendung wurden die Effekte, wie Schädigung der Kulturpflanzen und Wirkung auf Unkräuter/Ungräser durch visuelle Bonituren bewertet. Die herbizide Wirkung wurde durch den Vergleich von unbehandelten zu behandelten Parzellen bzgl. der Beeinflußung des Pflanzenwachstums und chlorotischer und nekrotischer Effekte bis zum totalen Absterben der Unkräuter qualitativ und quantitativ bewertet (0-100%). Die Anwendung erfolgte im 2-4 Blattstadium der Kulturpflanzen und Unkräuter. Die Auswertung erfolgte ca. 4 Wochen nach Applikation.

Gewächshausversuche

In den Gewächshausversuchen wurden die Kulturpflanzen und Unkräuter/Ungräser in 13er Töpfen angezogen und im 2-4 Blattstadium behandelt. Anschließend wurden die Töpfe bei guten Wachstumsbedingungen (Temperatur, Luftfeuchtigkeit, Wasserversorgung) im Gewächshaus aufgestellt.

Die Auswertungen erfolgten vergleichbar denen in den Feldversuchen, d.h. visuelle Bonituren der behandelten Pflanzen im Vergleich zu unbehandelten Kontroll-Varianten. Diese Auswertungen wurden 3 Wochen nach der Applikation der Prüfpräparate und deren Kombinationen durchgeführt. Die Versuche waren mit zweifacher Wiederholung angelegt worden.

Bewertung der Kombinationseffekte in den Beispielen

Bei der Bewertung der Kombinationseffekte wurde die Wirkung der Einzelkomponenten addiert und mit der Wirksamkeit der dosierungsgleichen Mischungen verglichen. Oft zeigte sich, daß die Kombinationen höhere Wirkungsgrade als die Summe der Einzelwirkungen zeigte.

In Fällen mit weniger deutlichen Effekten wurde nach der COLBY-Formel der Erwartungswert errechnet und mit dem empirisch ermittelten Ergebnis verglichen. Der errechnete, theoretisch zu erwartende Wirkungsgrad einer Kombination wird ermittelt nach der Formel von S. R. Colby:

> "Calculation of synergistic and antagonistic responses of herbicide combinations", Weeds 15 (1967), Seiten 20 bis 22.

Die Formel lautet für Zweierkombinationen:

$$E = X + Y - \frac{X \cdot Y}{100}$$

und für die Kombination von drei herbiziden Wirkstoffen entsprechend:

$$E = X + Y + Z + \frac{X \cdot Y \cdot Z}{10000} - \frac{XY + XZ + YZ}{100}$$

wobei

X = % Schädigung durch Herbizid A bei x kg ai/ha Aufwandmege;
Y = % Schädigung durch Herbizid B bei y kg ai/ha Aufwandmenge;
Z = % Schädigung durch ein weiteres Herbizid C bei z kg ai/ha Aufwandmenge;
E = Erwartungswert, d.h. zu erwartende Schädigung durch die Herbizide A + B (oder A+B+C) bei x + y (oder x + y + z) kg ai/ha

Dabei konnte von synergistischen Effekten ausgegangen werden, wenn der empirische Wert grösser als der Erwartungswert war. Bei Kombinationen mit wirkstoffgleichen Einzelkomponenten konnten auch Vergleiche über die

Summenformel angestellt werden.

In der Mehrzahl der Fälle ist die synergistische Wirkungssteigerung jedoch so hoch, daß auf das Kriterium nach Colby verzichtet werden kann; die Wirkung der Kombination übersteigt dann deutlich die formale (zahlenmäßige) Summe der Wirkungen der Einzelstoffe.

Es sei besonders darauf hingewiesen, daß eine Beurteilung des Synergismus bei den hier eingesetzten Wirkstoffen die stark unterschiedlichen Aufwandmengen der Einzelwirkstoffe berücksichtigen muß. Es ist somit nicht sinnvoll, die Wirkungen der Wirkstoffkombinationen und die Einzelwirkstoffe jeweils bei gleichen Aufwandmengen zu vergleichen. Die erfindungsgemäß einzusparenden Wirkstoffmengen werden nur durch die überadditive Wirkungssteigerung bei Einsatz der kombinierten Aufwandmengen oder durch die Verringerung der Aufwandmengen beider Einzelwirkstoffe in den Kombinationen im Vergleich zu den Einzelwirkstoffen bei jeweils gleicher Wirkung erkennbar.

Tabelle 1

| Wirkstoff(e) | g ai/ha | LOLMU % Bekämpfung | TRZAW % Schäden |
|---|---|---|---|
| A)* | 5 | 8 | 0 |
| | 10 | 73 | 0 |
| | 20 | 97 | 0 |
| | 40 | 98 | 0 |
| | 80 | 99 | 0 |
| B1) | 18 | 0 | 0 |
| | 37 | 0 | 0 |
| | 75 | 8 | 0 |
| A)* + B1) | 5 + 18 | 75 ( 8+0) | 0 |
| | 5 + 37 | 85 ( 8+0) | 0 |
| | 10 + 18 | 95 ( 8+0) | 0 |
| | 10 + 37 | 96 ( 8+0) | 0 |
| | 20 + 18 | 99 (97+0) | 0 |
| | 20 + 37 | 100 (97+0) | 0 |

LOLMU = Lolium multiflorum

TRZAW = Triticum aestivum

A)* = Natriumsalz von

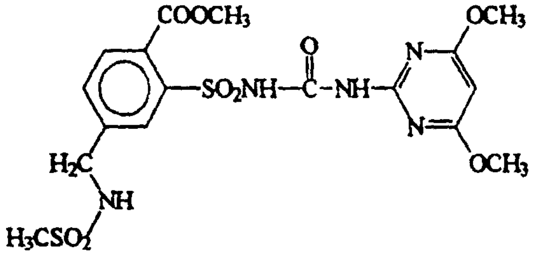

B1) = Puma S® = Mischung aus Fenoxaprop-P-ethyl und dem Safener Fenchlorazol-ethyl = 1-(2,4-Dichlorphenyl)-5-(trichloromethyl)-1*H*-1,2,4-triazol-3-carboxyethylester im Verhältnis 2:1

( + ) = Wirkung der Einzelsubstanzen (Additiv-Methode)

Tabelle 2

| Wirkstoff(e) | g ai/ha | AVEFA % Bekämpfung | TRZAW % Schäden |
|---|---|---|---|
| A) | 3,75 | 10 | 0 |
| | 7,5 | 60 | 0 |
| | 15 | 80 | 0 |
| | 30 | 95 | 0 |
| B2) | 750 | 15 | 0 |
| | 1500 | 60 | 0 |
| | 3000 | 85 | 0 |
| A) + B2) | 3,75 + 750 | 88 (10+15) | 0 |
| | 7,5 + 750 | 85 (60+15) | 0 |
| | 15 + 750 | 95 (80+15) | 0 |
| | 3,75 + 1500 | 96 (10+60) | 0 |
| | 7,5 + 1500 | 99 (84)$^{\varepsilon}$ | 0 |
| | 15 + 1500 | 100 (92)$^{\varepsilon}$ | 0 |

AVEFA = Avena fabtua

TRZAW = Triticum aestivum

A) =

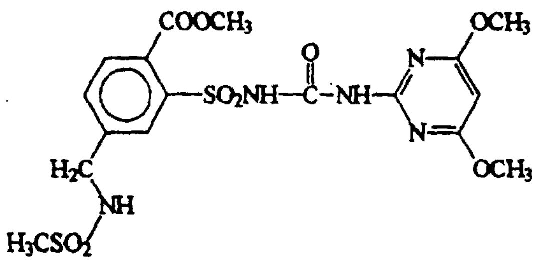

B2) = Isoproturon (Arelon®)

( + ) = Wirkung der Einzelsubstanzen

( )$^{\varepsilon}$ = Erwartungswert berechnet nach Colby

Tabelle 3

| Wirkstoff(e) | g ai/ha | GALAP % Bekämpfung | TRZAW % Schäden |
|---|---|---|---|
| A)* | 5 | 17 | 0 |
| | 10 | 22 | 0 |
| | 20 | 34 | 0 |
| | 40 | 45 | 0 |
| | 80 | 57 | 0 |
| B14) | 250 | 0 | 0 |
| | 500 | 0 | 0 |
| | 1000 | 5 | 0 |
| A)* + B14) | 5 + 1000 | 65 (17+5) | 0 |
| | 10 + 250 | 65 (22+0) | 0 |
| | 10 + 500 | 70 (22+0) | 0 |
| | 10 + 1000 | 80 (22+5) | 0 |
| | 20 + 250 | 75 (34+0) | 0 |
| | 20 + 500 | 80 (34+0) | 0 |
| | 20 + 1000 | 85 (34+5) | 0 |

GALAP = Galium aparine

TRZAW = Triticum aestivum

A)* = Natriumsalz von

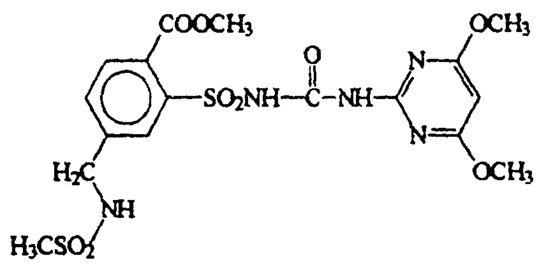

B14) = MCPA-Natriumsalz

( + ) = Wirkung der Einzelsubstanzen

Tabelle 4

| Wirkstoff(e) | g ai/ha | GALAP % Bekämpfung | TRZAW % Schäden |
|---|---|---|---|
| A)* | 5 | 17 | 0 |
| | 10 | 22 | 0 |
| | 20 | 34 | 0 |
| | 40 | 45 | 0 |
| | 80 | 57 | 0 |
| B19) | 63 | 0 | 0 |
| | 125 | 3 | 0 |
| | 250 | 10 | 0 |
| | 500 | 18 | 0 |
| A)* + B19) | 10 + 500 | 75 (22+18) | 0 |
| | 20 + 125 | 70 (34+ 3) | 0 |
| | 20 + 250 | 77 (34+10) | 0 |
| | 20 + 500 | 83 (34+18) | 0 |
| | 40 + 63 | 70 (45+ 0) | 0 |
| | 40 + 125 | 75 (45+ 3) | 0 |
| | 40 + 250 | 82 (45+10) | 0 |
| | 40 + 500 | 87 (45+18) | 0 |
| | 80 + 63 | 80 (57+ 0) | 0 |
| | 80 + 125 | 80 (57+ 3) | 0 |
| | 80 + 250 | 88 (57+10) | 0 |
| | 80 + 500 | 93 (57+18) | 0 |

GALAP = Galium aparine

TRZAW = Triticum aestivum

A)* = Natriumsalz von

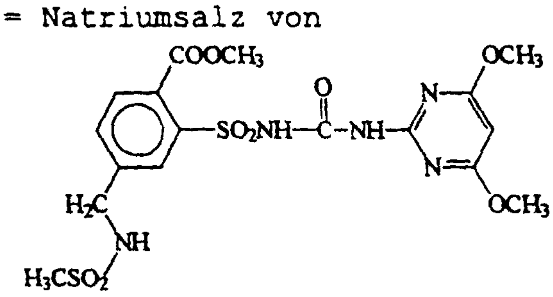

B19) = Ioxynil

( + ) = Wirkung der Einzelsubstanzen

Tabelle 5

| Wirkstoff(e) | g ai/ha | GALAP % Bekämpfung | TRZAW % Schäden |
|---|---|---|---|
| A)* | 5 | 17 | 0 |
| | 10 | 22 | 0 |
| | 20 | 34 | 0 |
| | 40 | 45 | 0 |
| | 80 | 57 | 0 |
| B22) | 4 | 0 | 0 |
| | 8 | 0 | 0 |
| | 15 | 8 | 0 |
| | 30 | 8 | 0 |
| A)* + B22) | 5 + 30 | 45 (17+ 8) | 0 |
| | 10 + 15 | 68 (22+ 8) | 0 |
| | 10 + 30 | 65 (22+ 8) | 0 |
| | 20 + 4 | 48 (34+ 0) | 0 |
| | 20 + 8 | 65 (34+ 0) | 0 |
| | 20 + 15 | 73 (34+ 8) | 0 |
| | 20 + 30 | 78 (34+ 8) | 0 |
| | 40 + 4 | 55 (45+ 0) | 0 |
| | 40 + 8 | 65 (45+ 0) | 0 |
| | 40 + 15 | 75 (45+ 8) | 0 |
| | 40 + 30 | 80 (45+ 8) | 0 |

GALAP = Galium aparine

TRZAW = Triticum aestivum

A)* = Natriumsalz von

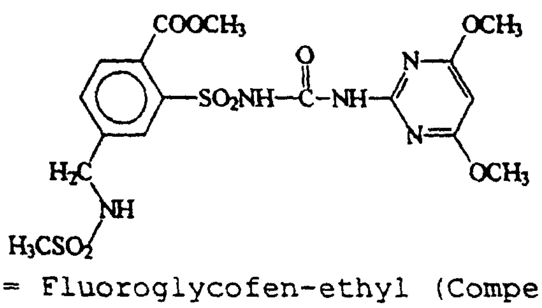

B22) = Fluoroglycofen-ethyl (Compete®)

( + ) = Wirkung der Einzelsubstanzen (Additiv-Methode)

Tabelle 6

| Wirkstoff(e) | g ai/ha | GALAP % Bekämpfung | TRZAW % Schäden |
|---|---|---|---|
| A)* | 5 | 17 | 0 |
| | 10 | 22 | 0 |
| | 20 | 34 | 0 |
| | 40 | 45 | 0 |
| | 80 | 57 | 0 |
| B29) | 13 | 0 | 0 |
| | 25 | 0 | 0 |
| | 50 | 5 | 0 |
| | 100 | 5 | 0 |
| A)* + B29) | 5 + 100 | 60 (17+ 5) | 0 |
| | 10 + 100 | 65 (22+ 5) | 0 |
| | 20 + 50 | 68 (22+ 5) | 0 |
| | 20 + 100 | 70 (34+ 5) | 0 |
| | 40 + 25 | 68 (45+ 0) | 0 |
| | 40 + 50 | 75 (45+ 5) | 0 |
| | 40 + 100 | 82 (45+ 5) | 0 |
| | 80 + 13 | 63 (57+ 0) | 0 |
| | 80 + 25 | 75 (57+ 0) | 0 |
| | 80 + 50 | 88 (57+ 5) | 0 |
| | 80 + 100 | 98 (57+ 5) | 0 |

GALAP = Galium aparine

TRZAW = Triticum aestivum

A)* = Natriumsalz von

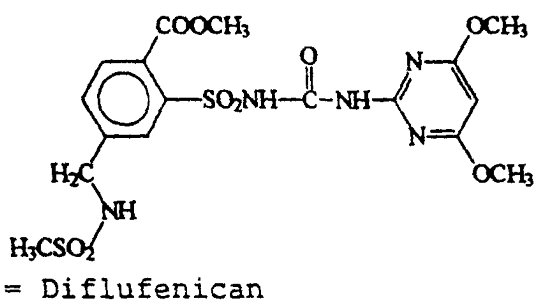

B29) = Diflufenican

( + ) = Wirkung der Einzelsubstanzen (Additiv-Methode)

Tabelle 7

| Wirkstoff(e) | g ai/ha | OXAPC % Bekämpfung | TRZAW % Schäden |
|---|---|---|---|
| A)* | 5 | 0 | 0 |
| | 10 | 7 | 0 |
| | 20 | 20 | 0 |
| B42) | 5 | 27 | 0 |
| | 10 | 59 | 0 |
| A)* + B42) | 5 + 5 | 93 ( 0+ 27) | 0 |
| | 5 + 10 | 94 ( 0+ 59) | 0 |
| | 10 + 5 | 100 ( 7+ 27) | 0 |

OXAPC = Oxalis pes-carprae

TRZAW = Triticum aestivum (Sommerweizen)

A)* = Natriumsalz von

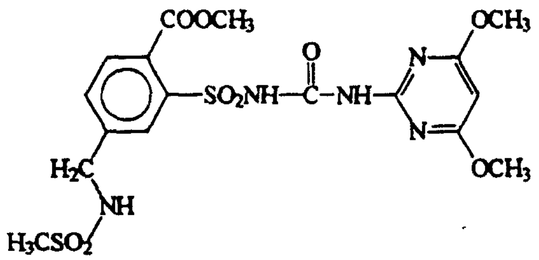

B42) = Natriumsalz des 4-Iodo-2-[3-(4-methoxy-6-methyl-1,3,5-triazin-2-yl)ureidosulfonyl]-benzoesäuremethylesters

( + ) = Wirkung der Einzelsubstanzen (Additiv-Methode)

Tabelle 7a

| Wirk-stoff(e) | g ai/ha | AVSSP % Bekämpfung | LOLSP % Bekämpfung | TRZAW % Schäden | TRZD % Schäden |
|---|---|---|---|---|---|
| A) | 10<br>20 | 70<br>87 | 29<br>69 | 4<br>11 | 3<br>6 |
| B42) | 5<br>10 | 29<br>31 | 46<br>88 | 2<br>3 | 2<br>3 |
| A)+B42) | 10 + 5 | 86 ( 78 )$^{E}$ | 81 (29+27) | 14 | 7 |

AVSSP = Avena ssp.

LOLSP = Lolium ssp.

TRZAW = Triticum aestivum (Sommerweizen)

TRZD = Triticum durum

A) =

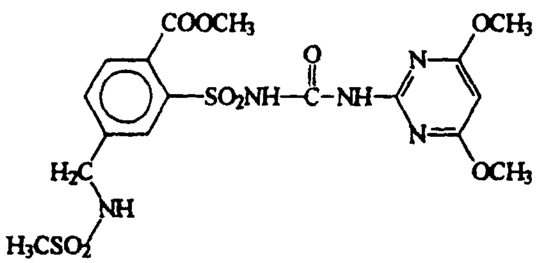

B42) = Natriumsalz des 4-Iodo-2-[3-(4-methoxy-6-methyl-1,3,5-triazin-2-yl)ureidosulfonyl]-benzoesäuremethylesters

( + ) = Wirkung der Einzelsubstanzen (Additiv-Methode)

( )$^{E}$ = Erwartungswert berechnet nach Colby

Tabelle 7b

| Wirk-stoff(e) | g ai/ha | APSV % Bekämpfung | GALAP % Bekämpfung | TRZAW % Schäden | TRZD % Schäden |
|---|---|---|---|---|---|
| A) | 10<br>20 | 68<br>78 | 10<br>13 | 4<br>11 | 3<br>6 |
| B42) | 5<br>10 | 0<br>5 | 90<br>98 | 2<br>3 | 2<br>3 |
| A)+B42) | 10 + 5 | 80 (68+0) | 100 ( 91 )$^E$ | 14 | 7 |

APSV = Apera spica venti

GALAP = Galium aparine

TRZAW = Triticum aestivum (Sommerweizen)

TRZD = Triticum durum

A) =

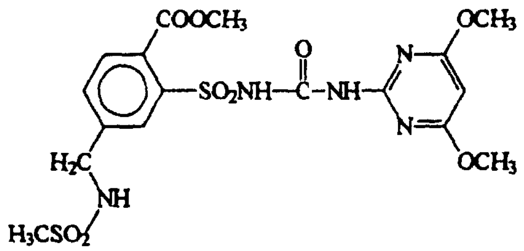

B42) = Natriumsalz des 4-Iodo-2-[3-(4-methoxy-6-methyl-1,3,5-triazin-2-yl)ureidosulfonyl]-benzoesäuremethylesters

( + ) = Wirkung der Einzelsubstanzen (Additiv-Methode)

( )$^E$ = Erwartungswert berechnet nach Colby

Tabelle 7c

| Wirk-stoff(e) | g ai/ha | POLGC % Bekämpfung | CHPA % Bekämpfung | TRZAW % Schäden | TRZD % Schäden |
|---|---|---|---|---|---|
| A) | 10 | 12 | 5 | 4 | 3 |
| | 20 | 24 | 50 | 11 | 6 |
| B42) | 5 | 65 | 0 | 2 | 2 |
| | 10 | 83 | 65 | 3 | 3 |
| A)+B42) | 10 + 5 | 90 (12+62) | 94 (5+0) | 14 | 7 |

POLGC = Polygonum conv.
CHPA = Chenopodium alb.
TRZAW = Triticum aestivum (Sommerweizen)
TRZD = Triticum durum
A) =

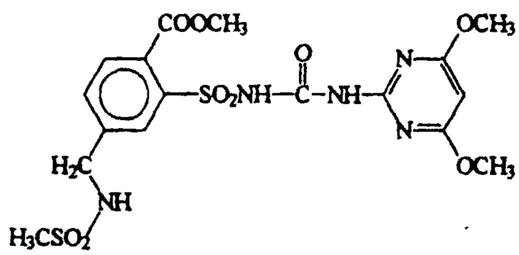

B42) = Natriumsalz des 4-Iodo-2-[3-(4-methoxy-6-methyl-1,3,5-triazin-2-yl)ureidosulfonyl]-benzoesäuremethylesters
( + ) = Wirkung der Einzelsubstanzen (Additiv-Methode)
( )$^E$ = Erwartungswert berechnet nach Colby

Tabelle 7d

| Wirk-stoff(e) | g ai/ha | PAPRH % Bekämpfung | PHYAN % Bekämpfung | TRZAW % Schäden | TRZD % Schäden |
|---|---|---|---|---|---|
| A) | 10 | 0 | 38 | 4 | 3 |
| | 20 | 50 | 50 | 11 | 6 |
| B42) | 5 | 0 | 0 | 2 | 2 |
| | 10 | 83 | 65 | 3 | 3 |
| A)+B42) | 10 + 5 | 88 (0 + 0) | 94 (5+0) | 14 | 7 |

PAPRH = Paphaver rhoeas

PHYAN = Physalis angulata

TRZAW = Triticum aestivum (Sommerweizen)

TRZD = Triticum durum

A) =

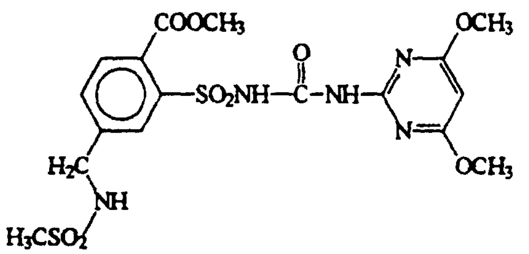

B42) = Natriumsalz des 4-Iodo-2-[3-(4-methoxy-6-methyl-1,3,5-triazin-2-yl)ureidosulfonyl]-benzoesäuremethylesters

( + ) = Wirkung der Einzelsubstanzen (Additiv-Methode)

( )$^{\varepsilon}$ = Erwartungswert berechnet nach Colby

Tabelle 7e

| Wirk-stoff(e) | g ai/ha | BRASN % Bekämpfung | LAMPU % Bekämpfung | TRZAW % Schäden | TRZD % Schäden |
|---|---|---|---|---|---|
| A) | 10 | 5 | 47 | 4 | 3 |
| | 20 | 50 | 48 | 11 | 6 |
| B42) | 5 | 0 | 80 | 2 | 2 |
| | 10 | 65 | 95 | 3 | 3 |
| A)+B42) | 10 + 5 | 94 (5 + 0) | 100 (90)$^E$ | 14 | 7 |
| Wirk-stoff(e) | g ai/ha | KOSC % Bekämpfung | STLMD % Bekämpfung | TRZAW % Schäden | TRZD % Schäden |
| A) | 10 | 58 | 80 | 4 | 3 |
| | 20 | 68 | 90 | 11 | 6 |
| B42) | 5 | 94 | 98 | 2 | 2 |
| | 10 | 98 | 100 | 3 | 3 |
| A)+B42) | 10 + 5 | 98 (97)$^E$ | 100 (99)$^E$ | 14 | 7 |

BRASN = Brassica napus
LAMPU = Lamicum purpureum
KOSC = Kochia scorpium
STLMD = Stellaria media
TRZAW = Triticum aestivum (Sommerweizen)
TRZD = Triticum durum
A) =

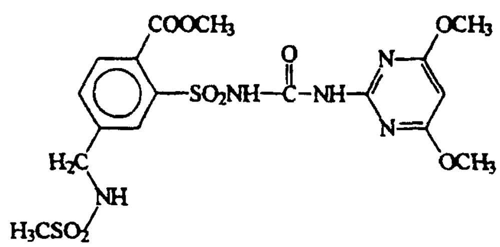

B42) = Natriumsalz des 4-Iodo-2-[3-(4-methoxy-6-methyl-1,3,5-triazin-2-yl)ureidosulfonyl]-benzoesäuremethylesters

( + ) = Wirkung der Einzelsubstanzen (Additiv-Methode)

( )$^E$ = Erwartungswert berechnet nach Colby

Tabelle 8.

| Wirkstoff(e) | g ai/ha | PHAMI | DESSO | CAPBP |
|---|---|---|---|---|
| | | % Bekämpfung | | % Schäden |
| A) | 10 | 30 | 80 | 0 |
| B46) | 270 | 25 | 0 | 15 |
| | 450 | 63 | 0 | 18 |
| A) + B46) | 10 + 270 | 68(30+25) | 99(80+ 0) | 73(0+15) |

PHAMI = Phalaris minor
DESSO = Descurainia richardssonii
CAPBP = Capsella bursa pastoris
A) =

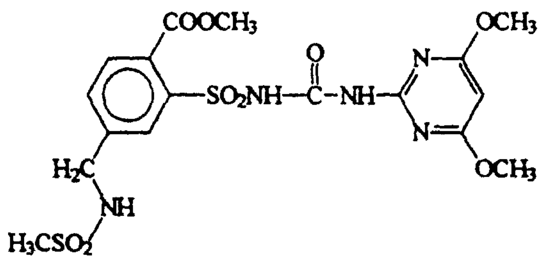

B46) = Glufosinate-ammonium
( + ) = % Wirkung der Einzelwirkstoffe (Addition)

Tabelle 9

| Wirkstoff(e) | g ai/ha | AVEFA % Wirkung Sensitiv | AVEFA % Wirkung Resistent |
|---|---|---|---|
| A) | 10<br>20 | 72<br>95 | 80<br>95 |
| B1) | 100 | 90 | 35 |
| A) + B1) | 10 + 100 | 98(97)[E] | 97(87)[E] |

AVEFA = Avena Fatua

sensitiv = AVEFA-Populationen, die keine Resistenz entwickelt haben

resistent = AVEFA-Populationen, die bereits eine Resistenz entwickelt haben

A) =

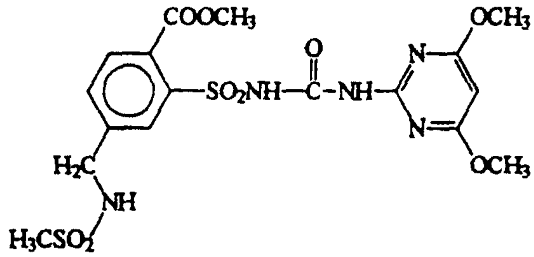

B1) = Puma S® = Mischung aus Fenoxaprop-P-ethyl und dem Safener Fenchlorazol-ethyl = 1-(2,4-Dichlorphenyl)-5-(trichloromethyl)-1*H*-1,2,4-triazol-3-carboxyethylester im Verhältnis 2:1

( )[E] = Erwartungswert berechnet nach Colby

Die Beispiele zeigen, daß durch die Einzelwirkstoffe einzelne Unkräuter nur in hohen Dosierungen gut bekämpft werden. Die Kombinationspartner in niedrigen Dosierungen appliziert, zeigen in der Regel nur geringe, bei weitem nicht die in der Praxis geforderte Wirksamkeit. Nur durch die gemeinsame Anwendung der Wirkstoffe lassen sich gute Effekte gegen alle geprüften Unkrautarten erzielen. Dabei wurde die additive Wirkung aus den Einzelkomponenten deutlich übertroffen, d. h., daß das geforderte Bekämpfungsniveau durch deutlich niedrigere Aufwandmengen erzielt wird. Durch diese Effekte wird das Wirkungsspektrum deutlich breiter. Auch Populationen von Schadpflanzen, die bereits Resistenzen gegen einzelne Herbizide entwickelt haben, werden durch die erfindungsgemäßen Kombinationen besser bekämpft (vgl. Tabelle 9).

Die Kulturverträglichkeit, in Form von Schädigungen bewertet, wird nicht negativ beeinflußt, d. h. daß die Kombinationen als voll selektiv bewertet werden können.

Weitere Vorteile und Ausführungsformen der Erfindung ergeben sich aus den nachfolgenden Patentansprüchen.

**Patentansprüche**

**1.** Herbizide Mittel, enthaltend

A) mindestens eine Verbindung aus der Gruppe der substituierten Phenylsulfonylharnstoffe der allgemeinen Formel I und deren landwirtschaftlich akzeptierten Salze

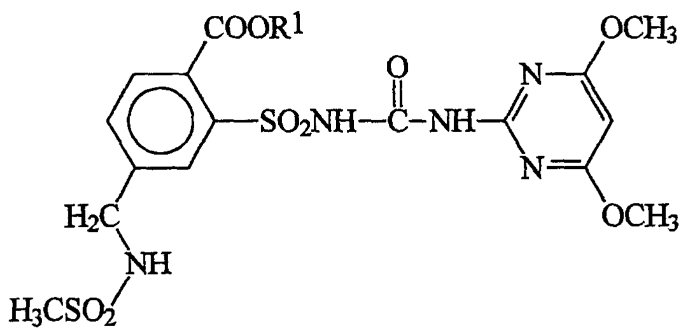

(I),

worin

$R^1$ $(C_1\text{-}C_8)$-Alkyl, $(C_3\text{-}C_4)$-Alkenyl, $(C_3\text{-}C_4)$-Alkinyl oder $(C_1\text{-}C_4)$-Alkyl, das ein- bis vierfach durch Reste aus der Gruppe Halogen und $(C_1\text{-}C_2)$-Alkoxy substituiert ist, bedeutet

und

B) mindestens eine herbizid wirksame Verbindung aus der Gruppe der Verbindungen, welche aus

Ba) selektiv in Getreide gegen Gräser wirksamen Herbiziden aus der Gruppe, die aus

B1) Fenoxaprop, Fenoxaprop-P

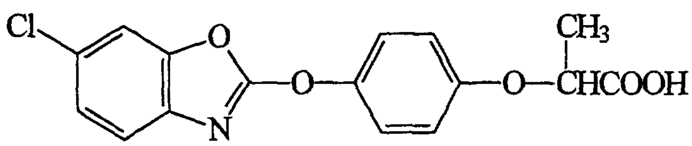

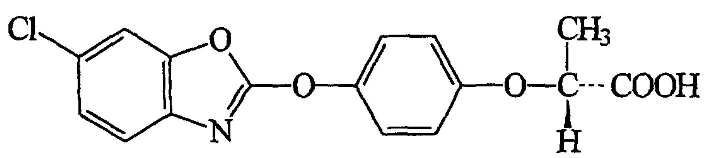

,

B2) Isoproturon

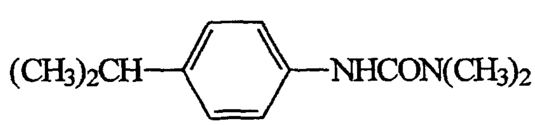

,

B3) Diclofop

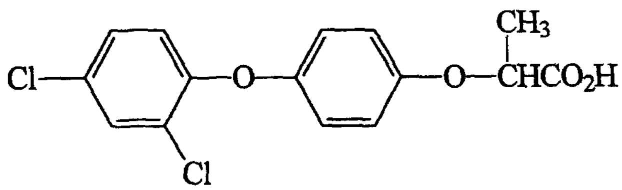

,

B4) Clodinafop

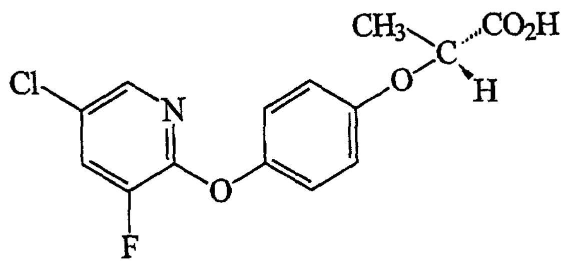

,

B5) Mischungen aus B4) und Cloquintocet

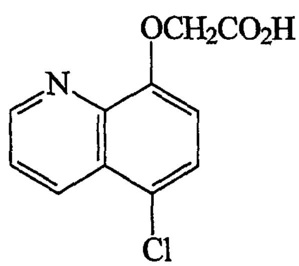

,

B6) Chlorotoluron

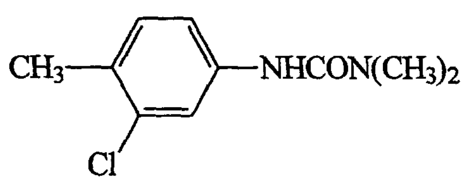

,

B7) Methabenzthiazuron

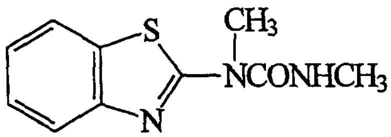

,

B8) Imazamethabenz

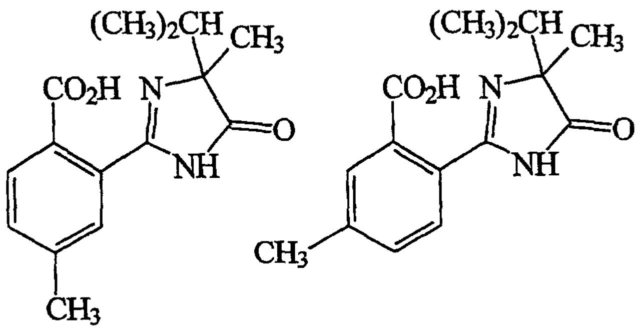

,

B9) Tralkoxydim

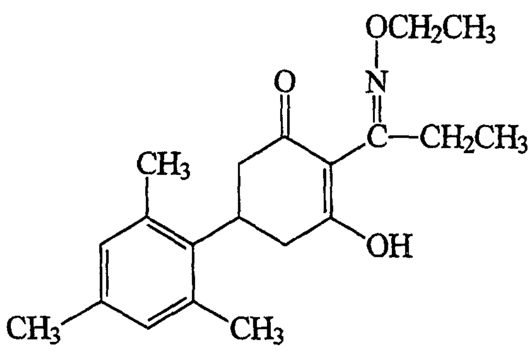

,

B10)Difenzoquat

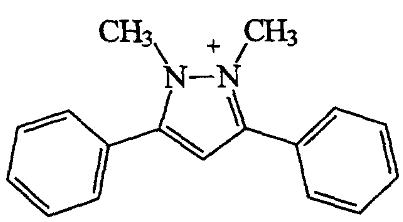

,

B11)Flamprop, Flamprop-M

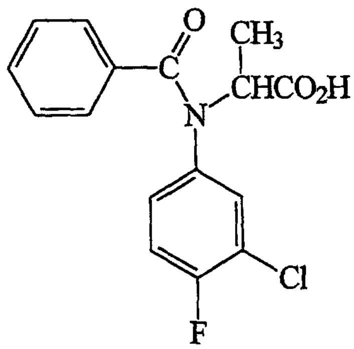
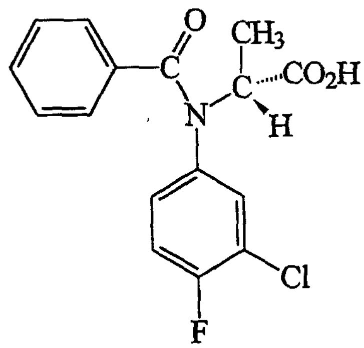

und

B12)Pendimethalin

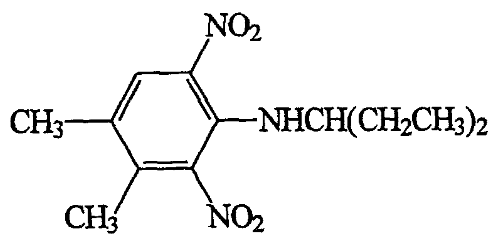

besteht,

Bb) selektiv in Getreide gegen Dikotyle wirksamen Herbiziden aus der Gruppe, die aus B13)Mecoprop, Mecoprop-P

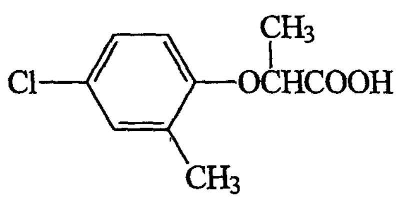
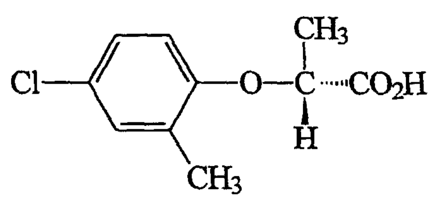

,

B14)MCPA

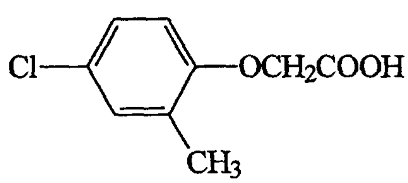

,

B15)Dichlorprop, Dichlorprop-P

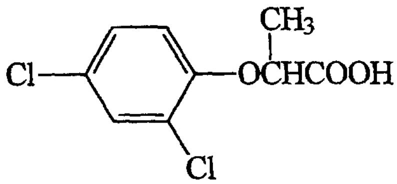 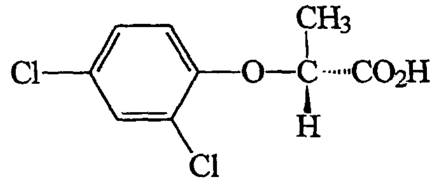

,

B16)2,4-D

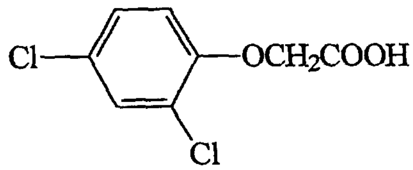

,

B17) Dicamba

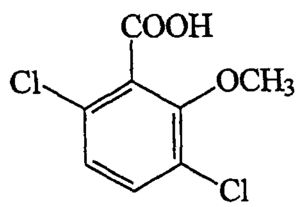

,

B18)Fluroxypyr

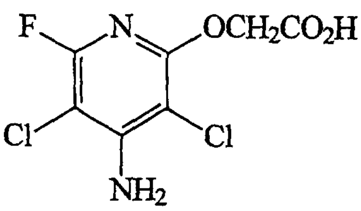

,

B19)Ioxynil

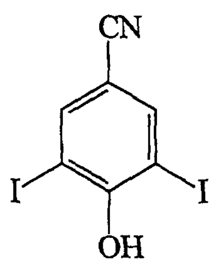

,

B20)Bromoxynil

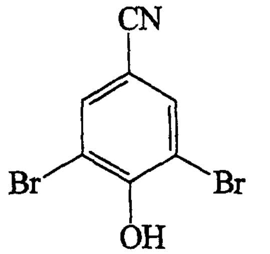

,

B21)Bifenox
Methyl-5-(2,4-Dichlorphenoxy)-2-nitrobenzoat

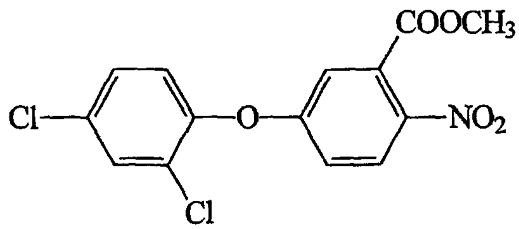

,

B22)Fluoroglycofen

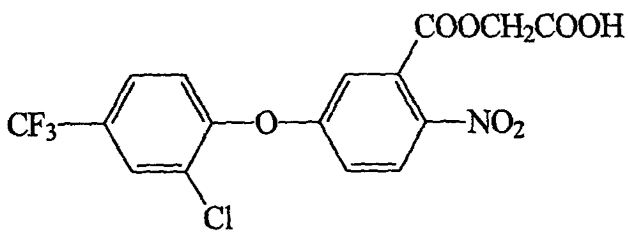

,

B23)Lactofen

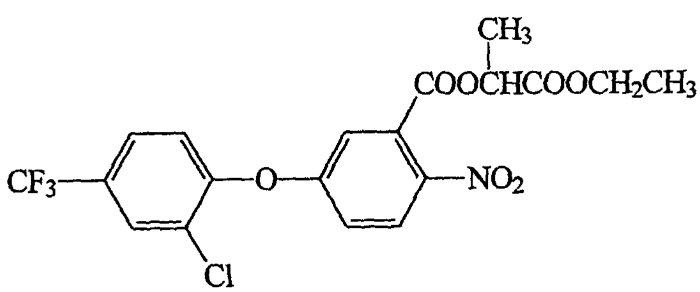

,

B24)Fomesafen

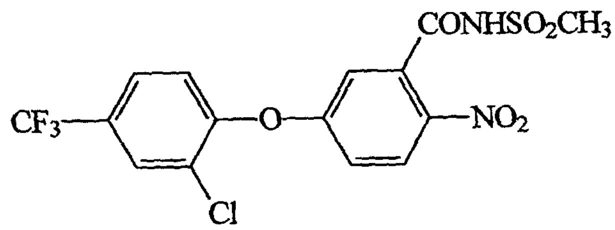

,

B25)Oxyfluorfen

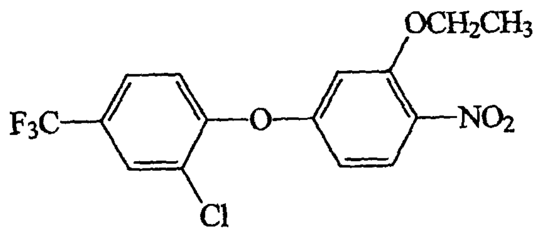

,

B26)ET-751

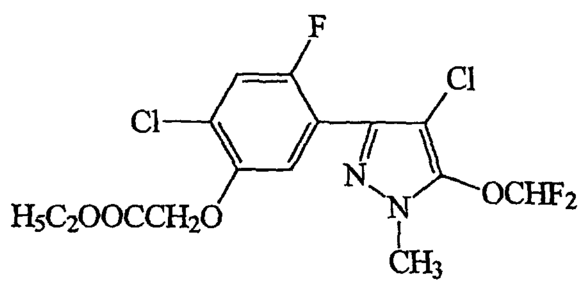

,

B27)Azolen der allgemeinen Formel II

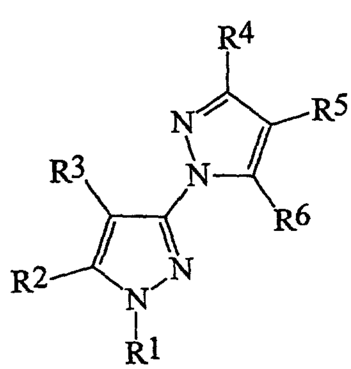

(II),

worin

$R^1$ $(C_1-C_4)$-Alkyl ist,

| | |
|---|---|
| $R^2$ | $(C_1-C_4)$-Alkyl, $(C_1-C_4)$-Alkylthio oder $(C_1-C_4)$-Alkoxy ist, von denen jeder Rest durch ein oder mehrere Halogenatome substituiert sein kann, oder |
| $R^1$ und $R^2$ | zusammen die Gruppe $(CH_2)_m$ bilden mit m = 3 oder 4, |
| $R^3$ | Wasserstoff oder Halogen ist, |
| $R^4$ | Wasserstoff oder $(C_1-C_4)$-Alkyl ist, |
| $R^5$ | Wasserstoff, Nitro, Cyano oder eine der Gruppen $-COOR^7$, $-C(=X)NR^7R^8$ oder $-C(=X)R^{10}$ ist, |
| $R^6$ | Wasserstoff, Halogen, Cyano, $(C_1-C_4)$-Alkyl, $(C_1-C_4)$-Alkylthio oder $-NR^{11}R^{12}$ ist, |
| $R^7$ und $R^8$ | gleich oder verschieden Wasserstoff oder $(C_1-C_4)$-Alkyl sind, oder |
| $R^7$ und $R^8$ | zusammen mit dem Stickstoff, an den sie gebunden sind einen gesättigten 5 oder 6 gliedrigen carbozyklischen Ring bilden, |
| $R^{10}$ | Wasserstoff oder $(C_1-C_4)$-Alkyl ist, wobei letztere gegebenenfalls mit einem oder mehreren Halogenatomen substituiert sein können, und |
| $R^{11}$ u. $R^{12}$ | gleich oder verschieden Wasserstoff, $(C_1-C_4)$-Alkyl oder $(C_1-C_4)$-Alkoxycarbonyl sind, wobei |
| $R^{11}$ u. $R^{12}$ | zusammen mit dem Stickstoff, an den sie gebunden sind, einen 3, 5 oder 6 gliedrigen carbozyklischen oder aromatischen Ring bilden können, in welchem ein C-Atom optionell durch ein O-Atom ersetzt sein kann; |

B28) F 8426

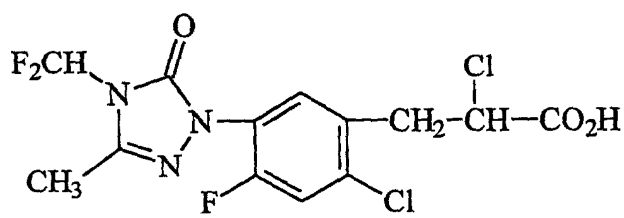

,

B29)Diflufenican

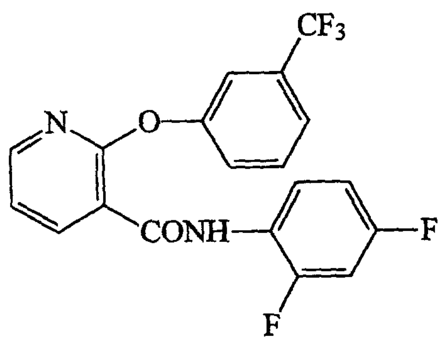

und

B30)Bentazon

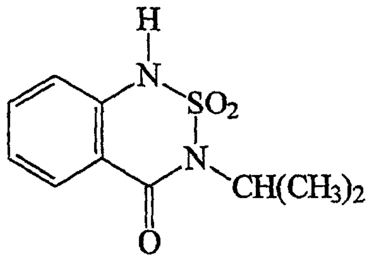

besteht,

Bc) selektiv in Getreide gegen Gräser und Dikotyle wirksamen Herbiziden aus der Gruppe, die aus

B31)Metribuzin

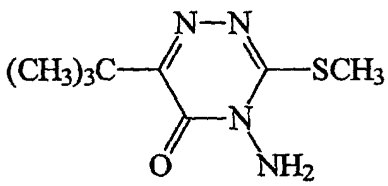

,

B32)Metosulam

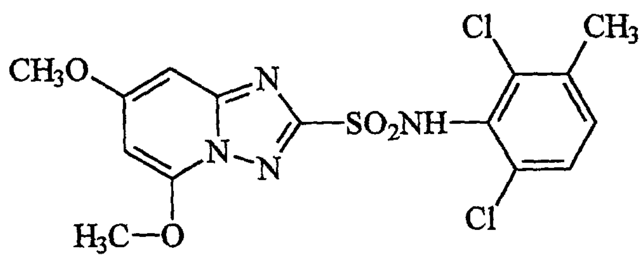

,

B32a)Flupoxam

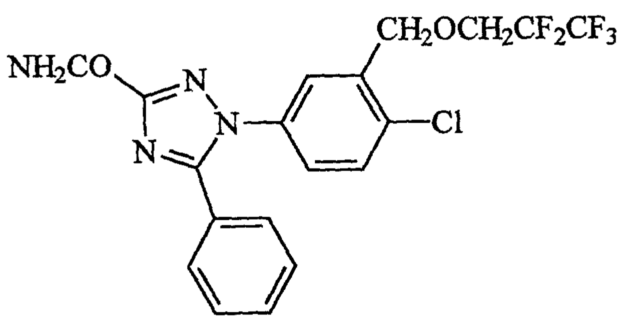

,

B33)Prosulfocarb

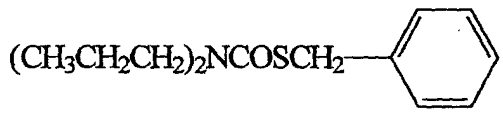

,

B34)Flurtamone

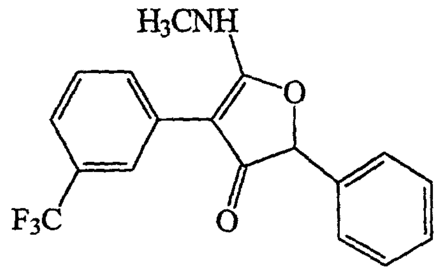

,

B35)Amidosulfuron

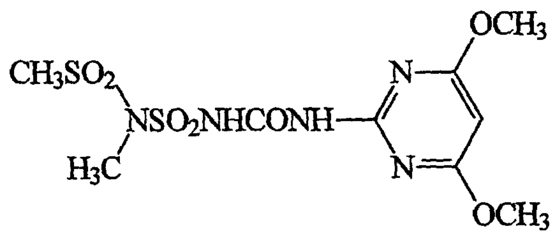

,

B36)Metsulfuron

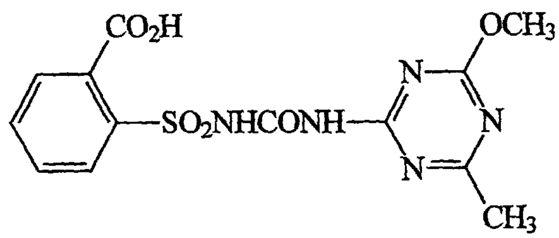

,

B37)Tribenuron

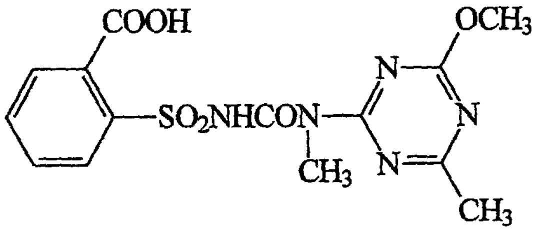

,

B38)Thifensulfuron

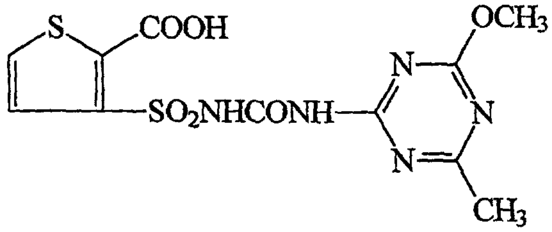

,

B39)Triasulfuron

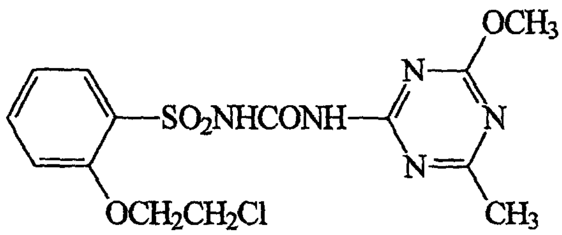

,

B40)Chlorsulfuron

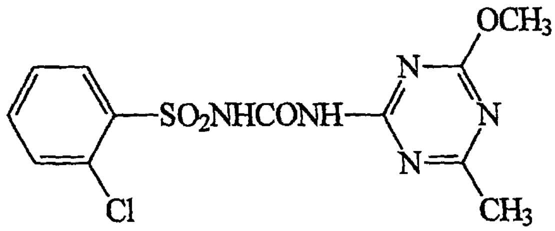

,

B41)Sulfonylharnstoffe der allgemeinen Formel III

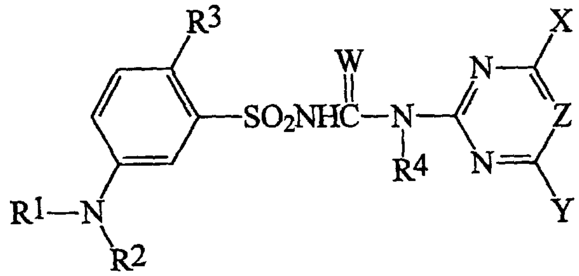

(III),

worin

| | |
|---|---|
| $R^1$ | Methyl, Ethyl, n-Propyl, i.Propyl oder Allyl ist, |
| $R^2$ | CO-$R^5$, COOR$^6$, CO-NR$^8$R$^9$, OS-NR$^{10}$R$^{11}$, $SO_2R^{14}$ oder $SO_2NR^{15}R^{16}$ |
| $R^3$ | COR$^{17}$, COOR$^{18}$, CONR$^{19}$R$^{20}$ oder CO-ON=CR$^{22}$R$^{23}$ ist, |
| $R^4$ | Wasserstoff oder ($C_1$-$C_4$)-Alkyl ist, |
| $R^5$ | Wasserstoff, ($C_1$-$C_4$)-Alkyl, ($C_1$-$C_2$)-Haloalkyl, Cyclopropyl, Phenyl, Benzyl oder Heteroaryl mit 5 oder 6 Ringatomen ist, wobei die letztgenannten 3 Reste unsubstituiert oder durch ein oder mehrere Halogenatome substituiert sind, |
| $R^6$ | ($C_1$-$C_4$)-Alkyl, Allyl, Propargyl oder Cyclopropyl ist, |
| $R^8$ | Wasserstoff, ($C_1$-$C_4$)-Alkyl, ($C_1$-$C_4$)-Haloalkyl oder ($C_1$-$C_4$-Alkoxy)-carbonyl ist |
| $R^9$-$R^{11}$ | unabhängig voneinander gleich oder verschieden H oder ($C_1$-$C_4$)-Alkyl sind, |
| $R^{14}$ | ($C_1$-$C_4$)-Alkyl ist, |
| $R^{15}$ u. $R^{16}$ | unabhängig voneinander gleich oder verschieden Wasserstoff oder ($C_1$-$C_4$)-Alkyl sind, |
| $R^{17}$ | Wasserstoff, ($C_1$-$C_4$)-Alkyl, ($C_1$-$C_4$)-Haloalkyl, ($C_3$-$C_6$)-Cycloalkyl, Phenyl oder Heteroaryl ist, wobei die letztgenannten zwei Reste unsubstituiert oder substituiert sind, |
| $R^{18}$ | Wasserstoff, ($C_1$-$C_4$)-Alkyl, ($C_2$-$C_6$)-Alkenyl oder ($C_2$-$C_6$)-Alkinyl, wobei die letztgenannten drei Reste unsubstituiert oder durch einen oder mehrere Reste aus der Gruppe Halogen, ($C_1$-$C_4$)-Alkoxy, ($C_1$-$C_4$)-Alkylthio und NR$^{31}$R$^{32}$ substituiert sind, oder ($C_3$-$C_6$) -Cycloalkyl oder ($C_3$-$C_6$) -Cycloalkyl-($C_1$-$C_3$)-Alkyl, |
| $R^{19}$ | analog $R^8$ |
| $R^{20}$ | analog $R^9$ |
| $R^{22}$ u. $R^{23}$ | unabhängig voneinander gleich oder verschieden Wasserstoff oder ($C_1$-$C_2$)-Alkyl sind, |
| $R^{31}$ u. $R^{32}$ | unabhängig voneinander gleich oder verschieden Wasserstoff oder ($C_1$-$C_4$)-Alkyl sind, |
| W | Sauerstoff oder Schwefel ist, |
| X | ($C_1$-$C_4$)-Alkyl, ($C_1$-$C_4$)-Alkoxy, ($C_1$-$C_4$)-Haloalkyl, ($C_1$-$C_4$)-Alkylthio, Halogen oder Mono- oder Di-($C_1$-$C_2$-alkyl)-amino ist, |
| Y | ($C_1$-$C_4$)-Alkyl, ($C_1$-$C_4$)-Alkoxy, ($C_1$-$C_4$)-Haloalkyl oder ($C_1$-$C_4$)-Alkylthio ist, und |
| Z | CH oder N |

bedeutet,

B42)Sulfonylharnstoffe der allgemeinen Formel IV und deren landwirtschaftlich verträglichen und akzeptierten Salze

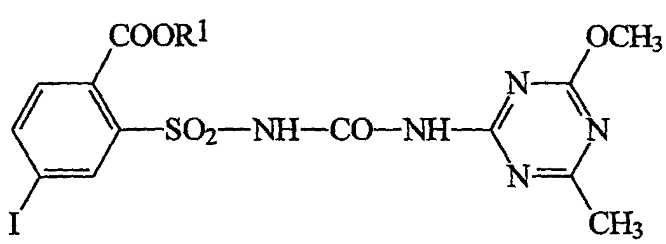

(IV),

worin

$R^1$ $(C_1\text{-}C_8)$-Alkyl, $(C_3\text{-}C_4)$-Alkenyl, $(C_3\text{-}C_4)$-Alkinyl oder $(C_1\text{-}C_4)$-Alkyl, das ein- bis vierfach durch Reste aus der Gruppe Halogen und $(C_1\text{-}C_2)$-Alkoxy substituiert ist, bedeutet,

wobei im Herbizid der Formel (IV) oder dessen Salz besonders bevorzugt

$R^1$ Methyl ist;

und wobei auch Salze besonders günstig Wirksamkeit zeigen, wobei das Salz des Herbizids der Formel (IV) durch Ersatz des Wasserstoffs der $-SO_2$-NH-CO-Gruppe durch ein Kation aus der Gruppe der Alkalimetalle, Erdalkalimetalle und Ammonium, bevorzugt Natrium, gebildet wird,
B43)Flupyrsulfuron (DPX-KE459)

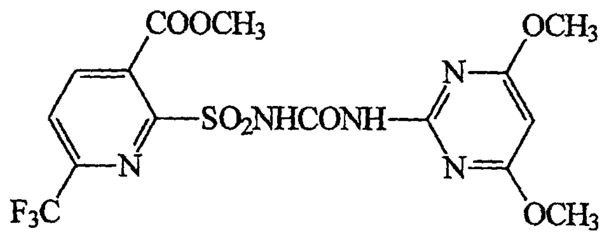

,

B44)MON 48500 und
B45)Sulfosulfuron (MON37500)

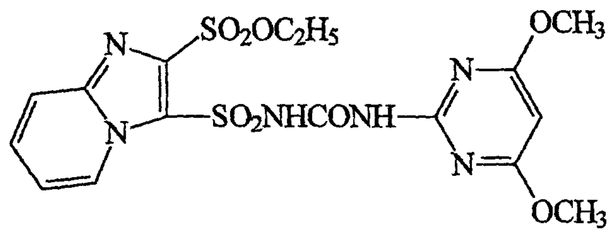

besteht,

und

Bd) im Nichtkulturland oder in Dauerkulturen (Plantagen) nichtselektiven und/oder in transgenen Kulturen selektiven Herbiziden mit Wirkung gegen Ungräser und Unkräuter aus der Gruppe, die aus

B46)Glufosinate, Glufosinate-P

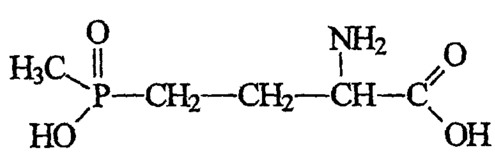

,

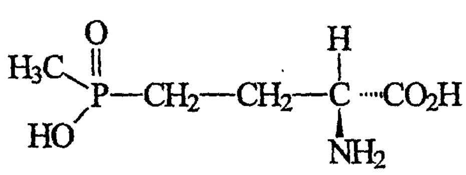

und
B47)Glyphosate

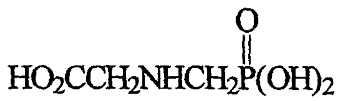

besteht,

besteht,
wobei sie die Verbindungen der Formel I oder deren Salze (Typ-A-Verbindungen) und die Verbindungen aus der Gruppe B in einem Gewichtsverhältnis von 1:2500 bis 20:1 in einer synergistisch wirksamen Menge enthalten.

**2.** Mittel nach Anspruch 1,
**dadurch gekennzeichnet,**
**daß** im Herbizid der Formel (I) oder dessen Salz

$R^1$ Methyl, Ethyl, n- oder Isopropyl, n-, tert.-, 2-Butyl oder Isobutyl, n-Pentyl, Isopentyl, n-Hexyl, Isohexyl, 1,3-Dimethylbutyl, n-Heptyl, 1-Methylhexyl oder 1,4-Dimethylpentyl bedeutet.

**3.** Mittel nach Anspruch 1 oder 2,
**dadurch gekennzeichnet,**
**daß** im Herbizid der Formel (I) oder dessen Salz $R^1$ Methyl bedeutet.

**4.** Mittel nach einem oder mehreren der vorhergehenden Ansprüche,
**dadurch gekennzeichnet,**
**daß** das Salz des Herbizids der Formel (I) durch Ersatz des Wasserstoffs der $-SO_2$-NH-CO-Gruppe durch ein Kation aus der Gruppe der Alkalimetalle, Erdalkalimetalle und Ammonium, bevorzugt Natrium, gebildet wird.

**5.** Mittel nach Anspruch 1,
**dadurch gekennzeichnet,**
**daß** es als Herbizid vom Typ B Glufosinate-Ammonium enthält.

**6.** Mittel nach einem oder mehreren der vorhergehenden Ansprüche,
**dadurch gekennzeichnet,**
**daß** sie 0,1 bis 99 Gew.-% der Wirkstoffe A und B neben üblichen Formulierungshilfsmitteln enthalten.

**7.** Verfahren zur Herstellung eines Mittels nach einem oder mehreren der vorhergehenden Ansprüche,
**dadurch gekennzeichnet,**
**daß** man die Verbindungen der Formel I oder deren Salze (Typ-A-Verbindungen) mit einer oder mehreren Verbindungen des Typs B und gegebenenfalls mit einer oder mehreren Safener-Verbindungen analog einer üblichen Pflanzenschutzformulierung aus der Gruppe enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

**8.** Verfahren zur Bekämpfung von unerwünschten Pflanzen,
**dadurch gekennzeichnet,**
**daß** man auf diese oder die Anbaufläche eine herbizid wirksame Menge einer der in einem oder mehreren der Ansprüche 1 bis 6 definierten Kombinationen von Wirkstoffen A + B appliziert.

**9.** Verfahren nach Anspruch 8,
**dadurch gekennzeichnet,**
**daß** die Aufwandmenge für die Verbindungen der Formel (I) oder deren Salze (Typ-A-Verbindungen) von 0,1 bis 100 g ai/ha, bevorzugt von 2 bis 40 g ai/ha, und die Aufwandmengen für die Verbindungen vom Typ B von 1 bis 5000 g ai/ha betragen.

**10.** Verfahren nach Anspruch 8 oder 9,
**dadurch gekennzeichnet,**
**daß** die Wirkstoffe der Typen A und B gleichzeitig oder zeitlich getrennt im Gewichtsverhältnis 1:2500 bis 20:1 appliziert werden.

**11.** Verfahren nach einem der Ansprüche 8 bis 10,
**dadurch gekennzeichnet,**
**daß** die Kombinationen zur selektiven Bekämpfung unerwünschter Pflanzen eingesetzt werden.

**12.** Verfahren nach Anspruch 11,
**dadurch gekennzeichnet,**
**daß** die Kombinationen in transgenen Kulturen eingesetzt werden.

**13.** Verfahren nach Anspruch 12,
**dadurch gekennzeichnet,**
**daß** die Kombinationen in Getreide, Mais, Reis, Zuckerrohr, Plantagenkulturen, Grün- oder Weideland eingesetzt werden.

**14.** Verfahren nach einem der Ansprüche 8 bis 10,
**dadurch gekennzeichnet,**
**daß** die Kombinationen in Nutzpflanzenkulturen eingesetzt werden.

**15.** Verfahren nach einem der Ansprüche 8 bis 10,
**dadurch gekennzeichnet,**
**daß** die Kombinationen auf Nichtkulturland eingesetzt werden.

**16.** Verfahren nach Anspruch 8,
**dadurch gekennzeichnet,**
**daß** ansonsten resistente Schadpflanzen bekämpft werden

## Claims

**1.** A herbicidal composition, comprising

A) at least one compound from the group of the substituted phenylsulfonylureas of the formula I and agriculturally acceptable salts thereof

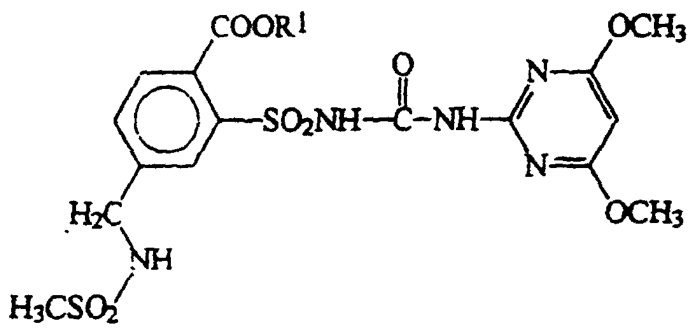

(I),

in which

$R^1$ is $(C_1\text{-}C_8)$-alkyl, $(C_3\text{-}C_4)$-alkenyl, $(C_3\text{-}C_4)$-alkynyl or $(C_1\text{-}C_4)$-alkyl which is mono- to tetrasubstituted by radicals selected from the group consisting of halogen and $(C_1\text{-}C_2)$-alkoxy,

and

B) at least one herbicidally active compound selected from the group of the compounds consisting of

Ba) herbicides which have selective activity against grasses in cereals and are selected from the group consisting of

B1) fenoxaprop, fenoxaprop-P

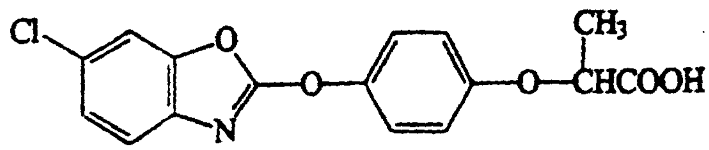

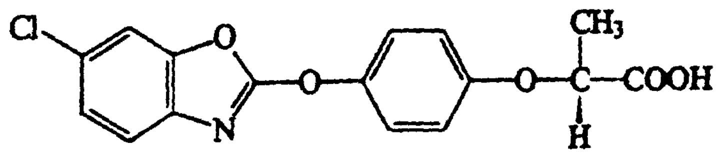

,

B2) isoproturon

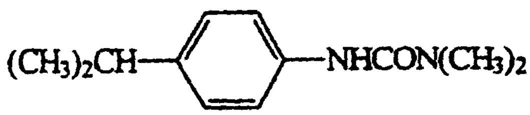

,

B3) diclofop

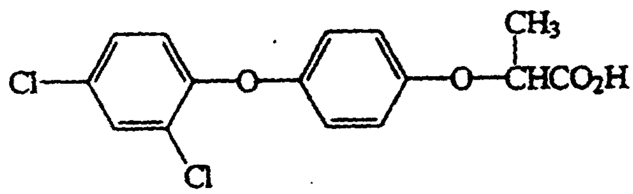

,

B4) clodinafop

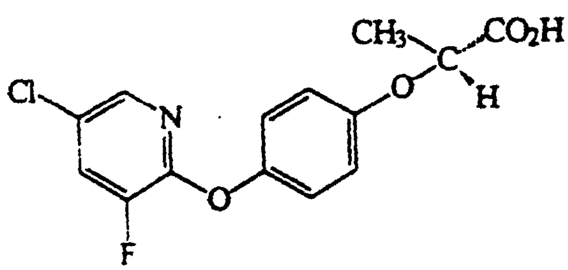

,

B5) mixtures of B4) and cloquintocet

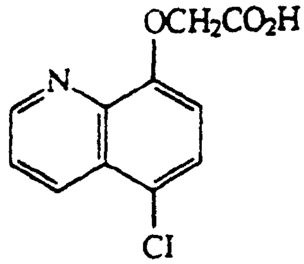

,

B6) chlorotoluron

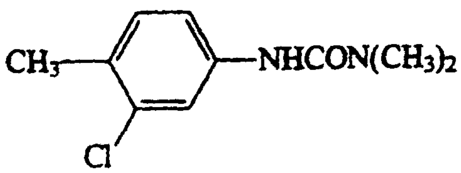

,

B7) methabenzthiazuron

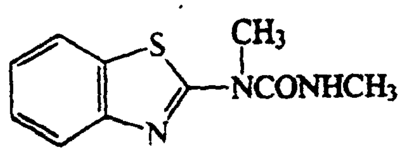

,

B8) imazamethabenz

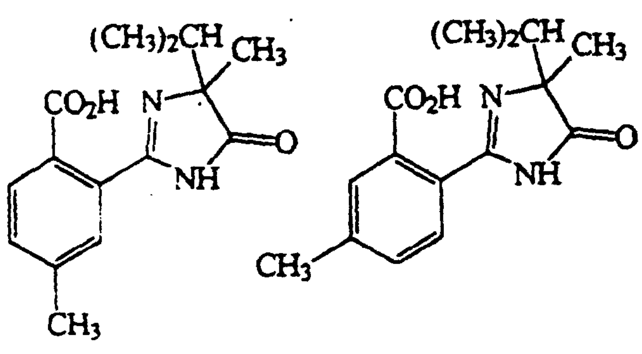

,

B9) tralkoxydim

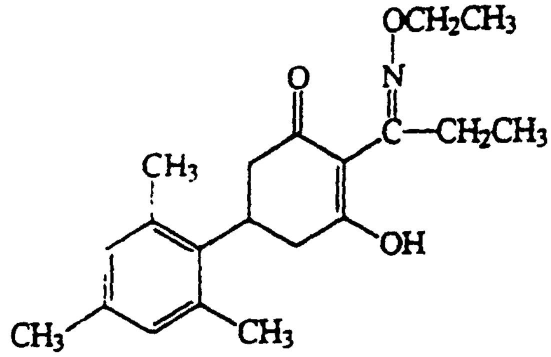

,

B10) difenzoquat

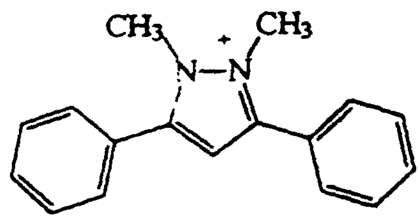

,

B11) flamprop, flamprop-M

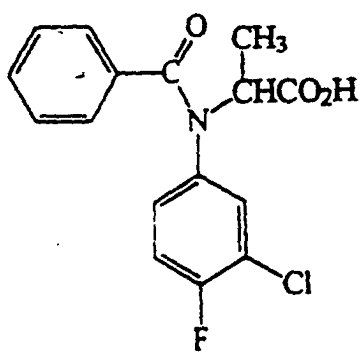

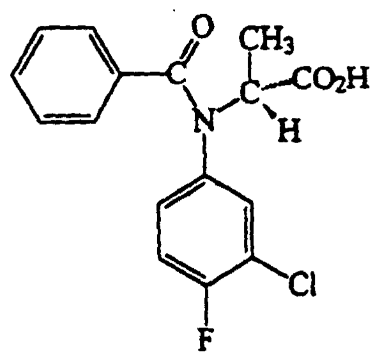

and

B12) pendimethalin

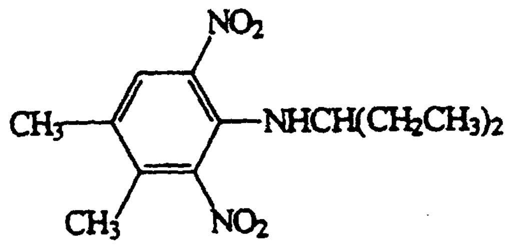

,

Bb) herbicides which have selective activity against dicotyledons in cereals and are selected from the group consisting of

B13) mecoprop, mecoprop-P

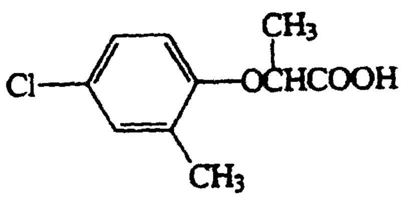

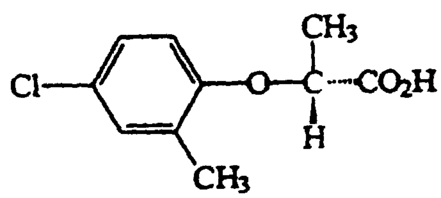

,

B14) MCPA

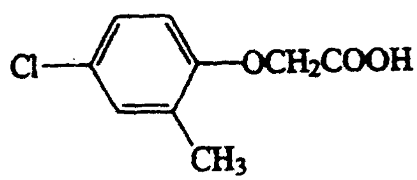

,

B15) dichlorprop, dichlorprop-P

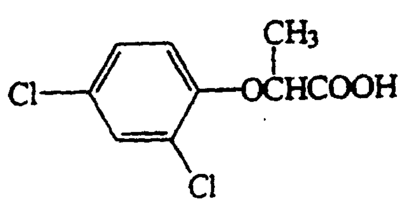

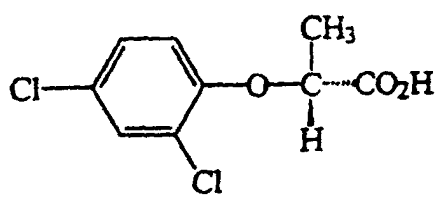

,

B16) 2,4-D

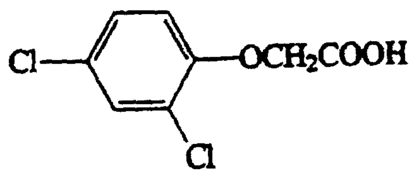

,

B17) dicamba

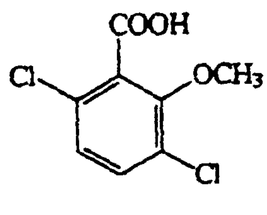

,

B18) fluroxypyr

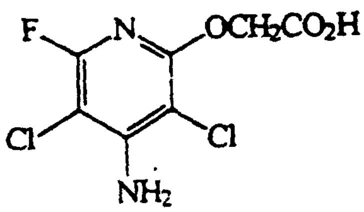

,

B19) ioxynil

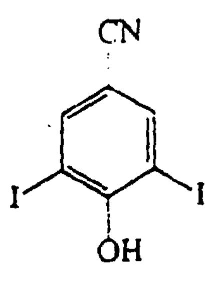

,

B20) bromoxynil

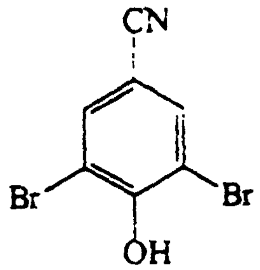

,

B21)bifenox
methyl 5-(2,4-dichlorophenoxy)-2-nitrobenzoate

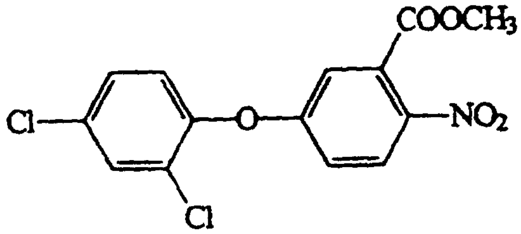

,

B22) fluoroglycofer

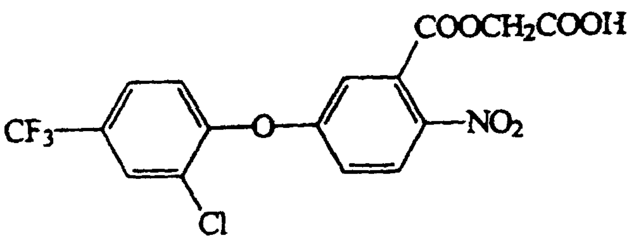

,

B23) lactofen

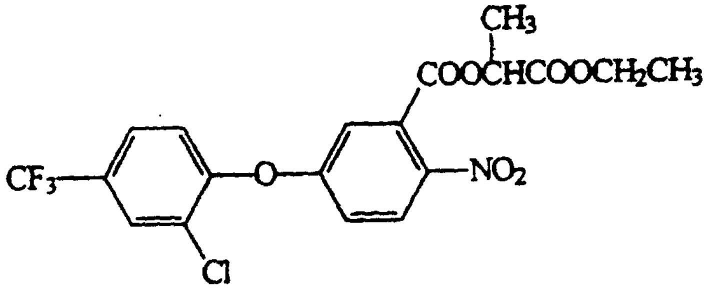

B24) fomesafen

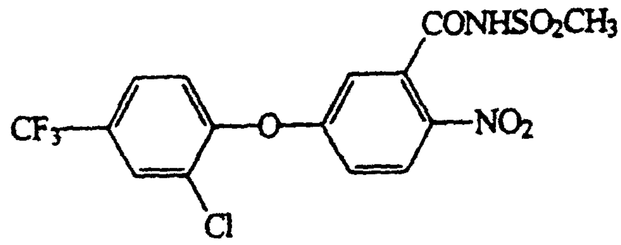

,

B25) oxyfluorfen

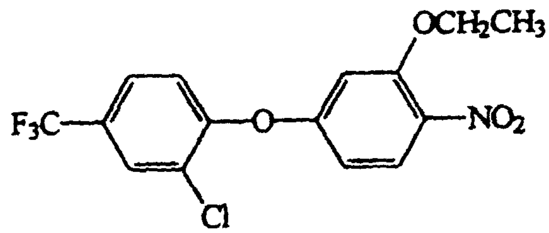

,

B26) ET 751

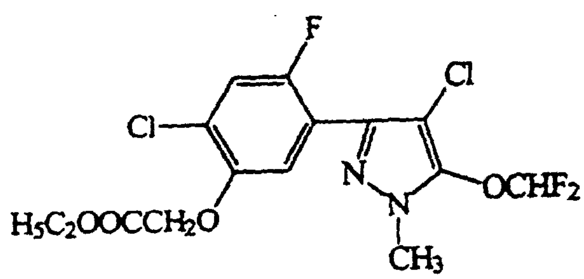

,

B27) azoles of the formula II

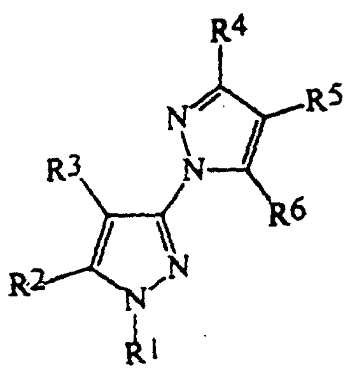

(II),

in which

| | |
|---|---|
| $R^1$ | is $(C_1\text{-}C_4)$-alkyl |
| $R^2$ | is $(C_1\text{-}C_4)$-alkyl, $(C_1\text{-}C_4)$-alkylthio or $(C_1\text{-}C_4)$-alkoxy, each of which may be substituted by one or more halogen atoms, or |
| $R^1$ and $R^2$ | together form the group $(CH_2)_m$ where m = 3 or 4, |
| $R^3$ | is hydrogen or halogen |
| $R^4$ | is hydrogen or $(C_1\text{-}C_4)$-alkyl, |
| $R^5$ | is hydrogen, nitro, cyano or one of the groups $-COOR^7$, $-C(=X)NR^7R^8$ or $-C(=X)R^{10}$, |
| $R^6$ | is hydrogen, halogen, cyano, $(C_1\text{-}C_4)$-alkyl, $(C_1\text{-}C_4)$-alkylthio or $-NR^{11}R^{12}$, |
| $R^7$ and $R^8$ | are identical or different and each is hydrogen or $(C_1\text{-}C_4)$-alkyl, or |
| $R^7$ and $R^8$ | join with the nitrogen to which they are attached to form a saturated 5- or 6-membered carbocyclic ring, |
| $R^{10}$ | is hydrogen or $(C_1\text{-}C_4)$-alkyl, the latter optionally being substituted by one or more halogen atoms, and |
| $R^{11}$ and $R^{12}$ | are identical or different and each is hydrogen, $(C_1\text{-}C_4)$-alkyl or $(C_1\text{-}C_4)$-alkoxycarbonyl, where |
| $R^{11}$ and $R^{12}$ | may join with the nitrogen to which they are attached to form a 3-, 5- or 6-membered carbocyclic or aromatic ring in which one carbon atom may be replaced by an oxygen atom; |

B28) F8426

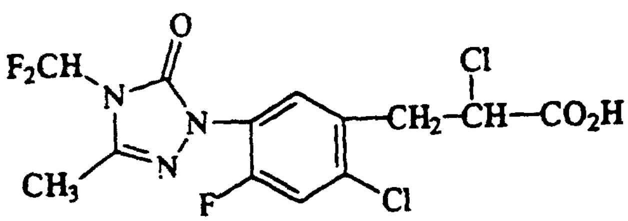

,

B29) diflufenican

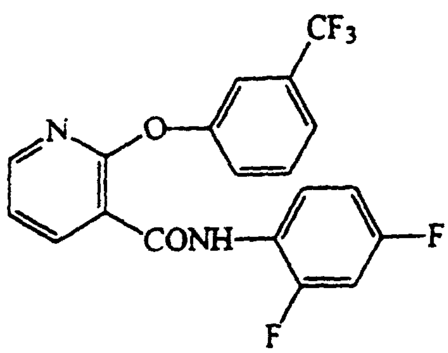

and
B30) bentazone

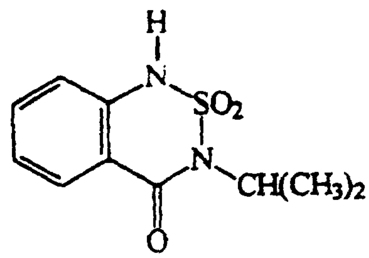

,

Bc) herbicides which have selective activity against grasses and dicotyledons in cereals and are selected from the group consisting of

B31) metribuzin

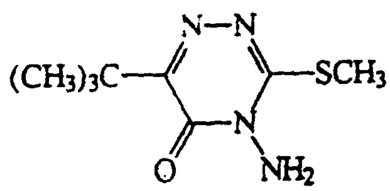

,

B32) metosulam

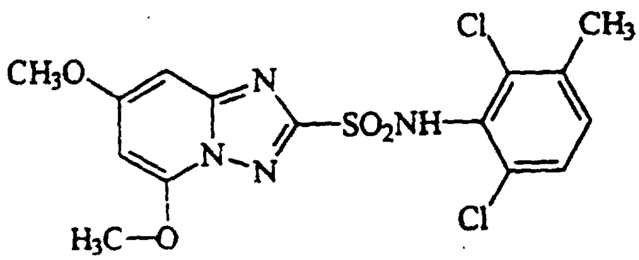

,

B32a) flupoxam

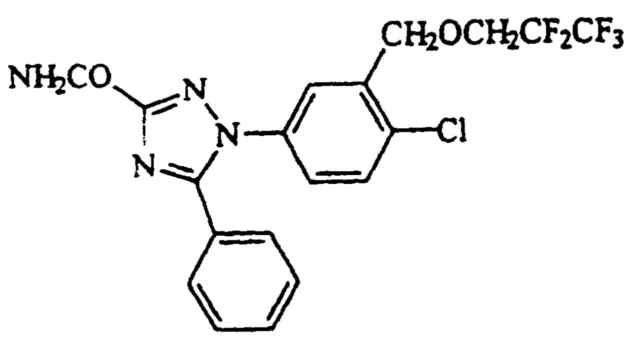

,

B33) prosulfocarb

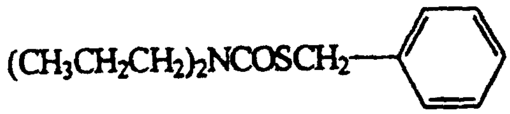

,

B34) flurtamone

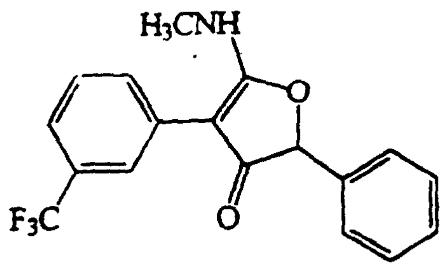

,

B35) amidosulfuron

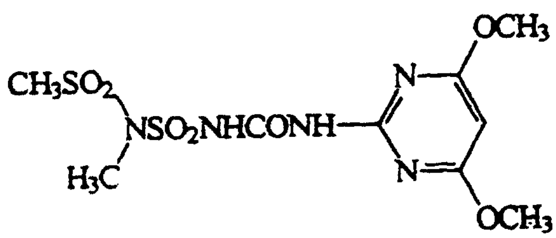

,

B36) metsulfuron

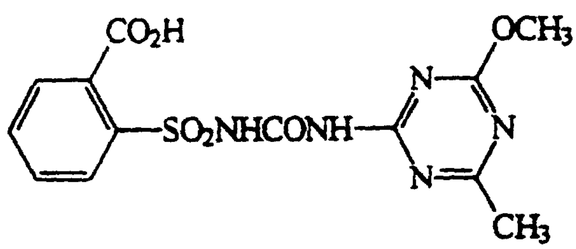

,

B37) tribenuron

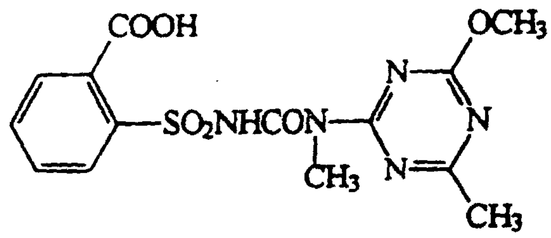

,

B38) thifensulfuron

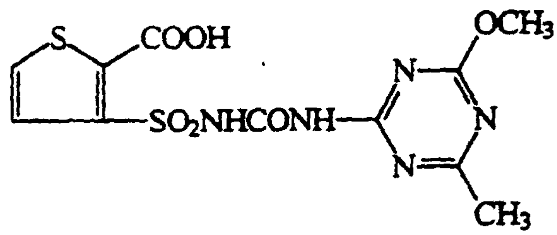

,

B39) triasulfuron

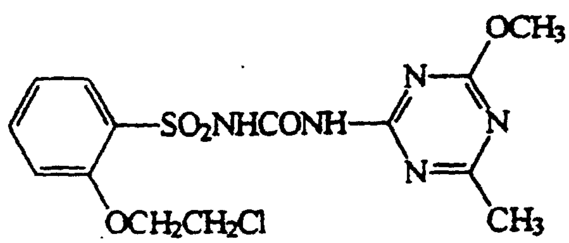

,

B40) chlorsulfuron

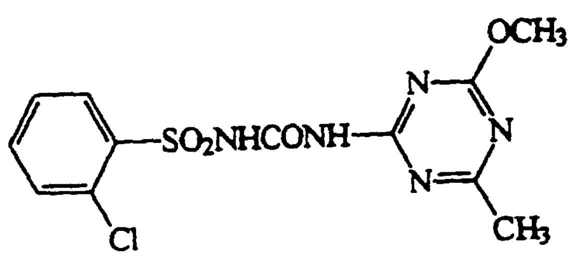

,

B41) sulfonylureas of the formula III

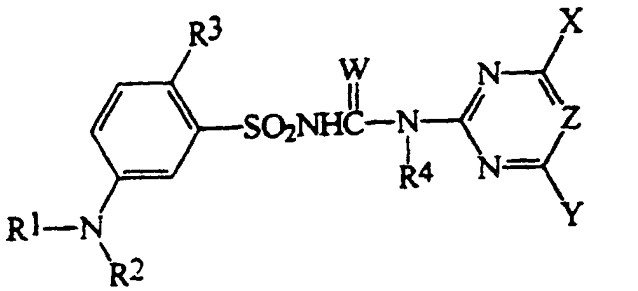

III),

in which

| | |
|---|---|
| $R^1$ | is methyl, ethyl, n-propyl, isopropyl or allyl, |
| $R^2$ | is $CO-R^5$, $COOR^6$, $CO-NR^8R^9$, $CS-NR^{10}R^{11}$, $SO_2R^{14}$ or $SO_2NR^{15}R^{16}$, |
| $R^3$ | is $COR^{17}$, $COOR^{18}$, $CONR^{19}R^{20}$ or $CO-ON=CR^{22}R^{23}$, $R^4$ is hydrogen or $(C_1-C_4)$-alkyl, |
| $R^5$ | is hydrogen, $(C_1-C_4)$-alkyl, $(C_1-C_2)$-haloalkyl, cyclopropyl, phenyl, benzyl or heteroaryl having 5 or 6 ring atoms, the last 3 radicals being unsubstituted or substituted by one or more halogen atoms, |
| $R^6$ | is $(C_1-C_4)$-alkyl, allyl, propargyl or cyclopropyl, |
| $R^8$ | is hydrogen, $(C_1-C_4)$-alkyl, $(C_1-C_4)$-haloalkyl or $(C_1-C_4$-alkoxy)-carbonyl, |
| $R^9$-$R^{11}$ | are independently of one another identical or different H or $(C_1-C_4)$-alkyl, |
| $R^{14}$ | is $(C_1-C_4)$-alkyl, |
| $R^{15}$ and $R^{16}$ | are independently of one another identical or different hydrogen or $(C_1-C_4)$-alkyl, |
| $R^{17}$ | is hydrogen, $(C_1-C_4)$-alkyl, $(C_1-C_4)$-haloalkyl, $(C_3-C_6)$-cycloalkyl, phenyl or heteroaryl, the last two radicals being unsubstituted or substituted, |
| $R^{18}$ | is hydrogen, $(C_1-C_4)$-alkyl, $(C_2-C_6)$-alkenyl or $(C_2-C_6)$-alkynyl, the last three radicals being unsubstituted or substituted by one or more radicals selected from the group consisting of halogen, $(C_1-C_4)$-alkoxy, $(C_1-C_4)$-alkylthio and $NR^{31}R^{32}$, or $(C_3-C_6)$-cycloalkyl or $(C_3-C_6)$-cycloalkyl-$(C_1-C_3)$-alkyl, |
| $R^{19}$ | is analogous to $R^8$, |
| $R^{20}$ | is analogous to $R^9$, |
| $R^{22}$ and $R^{23}$ | are independently of one another identical or different hydrogen or $(C_1-C_2)$-alkyl, |
| $R^{31}$ and $R^{32}$ | are independently of one another identical or different hydrogen or $(C_1-C_4)$-alkyl, |
| W | is oxygen or sulfur, |
| X | is $(C_1-C_4)$-alkyl, $(C_1-C_4)$-alkoxy, $(C_1-C_4)$-haloalkyl, $(C_1-C_4)$-alkylthio, halogen or mono- or di-$(C_1-C_2$-alkyl)-amino, |
| Y | is $(C_1-C_4)$-alkyl, $(C_1-C_4)$-alkoxy, $(C_1-C_4)$-haloalkyl or $(C_1-C_4)$-alkylthio, and |
| Z | is CH or N, |

B42) suffonytureas of the formula IV and agriculturally tolerable and acceptable salts thereof

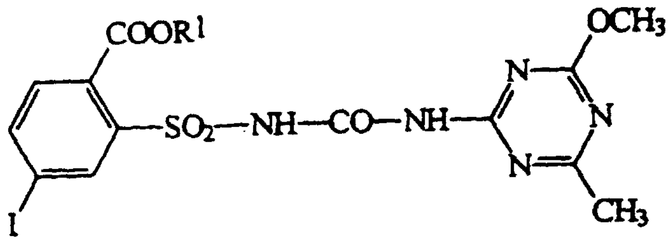

IV),

in which

$R^1$ is $(C_1-C_8)$-alkyl, $(C_3-C_4)$-alkenyl, $(C_3-C_4)$-alkynyl or $(C_1-C_4)$-alkyl which is mono- to tetrasubstituted by radicals selected from the group consisting of halogen and ($C_1$-$C_2$)-alkoxy, where in the herbicide of the formula (IV) or the salt thereof particularly preferably

$R^1$ is methyl;

and where likewise those salts have particularly favorable activity where the salt of the herbicide of the formula (IV) is formed by replacing the hydrogen of the -$SO_2$-NH-CO- group by a cation selected from the group of the alkali metals, alkaline earth metals and ammonium, preferably sodium,

B43) flupyrsulfuron (DPX-KE459)

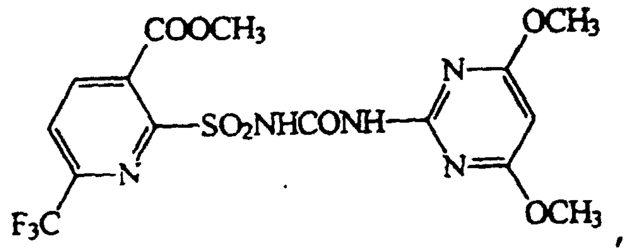

B44) MON 48500 and

B45) sulfosulfuron (MON37500)

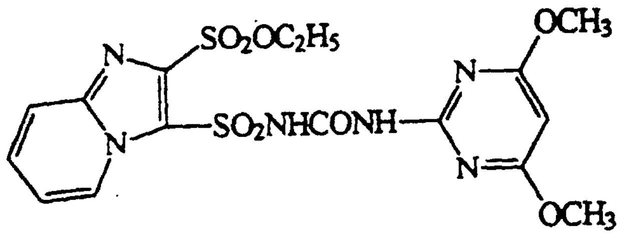

and

Bd) herbicides which are active against weed grasses and broadleaved weeds and which are nonselective in non-crop areas or perennial crops (plantations) and/or selective in transgenic crops and which are selected from the group consisting of

B46) glufosinate, glufosinate-P

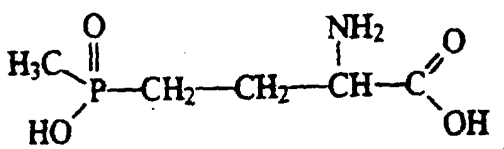

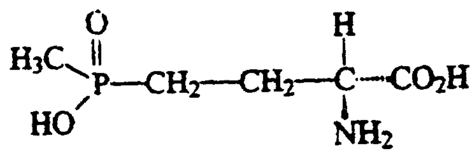

and

B47) glyphosate

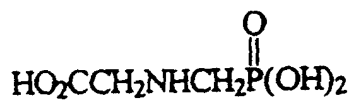

, where the composition comprises a synergistically effective amount of the compounds of the formula I or salts thereof (type A compounds) and the compounds selected from group B in a weight ratio of 1:2500 to 20:1.

**2.** The composition as claimed in claim 1,
wherein
in the herbicide of the formula (I) or the salt thereof

$R^1$ is methyl, ethyl, n- or isopropyl, n-, tert-, 2-butyl or isobutyl, n-pentyl, isopentyl, n-hexyl, isohexyl, 1,3-dimethylbutyl, n-heptyl, 1-methylhexyl or 1,4-dimethylpentyl.

**3.** The composition as claimed in claim 1 or 2,
wherein
in the herbicide of the formula (I) or the salt thereof $R^1$ is methyl.

**4.** The composition as claimed in one or more of the preceding claims,
wherein
the salt of the herbicide of the formula (I) is formed by replacing the hydrogen of the $-SO_2-NH-CO-$ group by a cation selected from the group of the alkali metals, alkaline earth metals and ammonium, preferably sodium.

**5.** The composition as claimed in claim 1,
which comprises
as herbicide of type B glufosinate-ammonium.

**6.** The composition as claimed in one or more of the preceding claims, which comprises
0.1 to 99% by weight of the active compounds A and B, in addition to customary formulation auxiliaries.

**7.** A process for preparing a composition as claimed in one or more of the preceding claims,
which comprises
formulating the compounds of the formula I or salts thereof (type A compounds) with one or more compounds of type B and, if appropriate, with one or more safener compounds similar to a customary crop protection formulation selected from the group consisting of wettable powders, emulsifiable concentrates, aqueous solutions, emulsions, sprayable solutions (tank-mix), oil- or water-based dispersions, suspoemulsions, dusts, seed dressings, granules for soil application or application by broadcasting, water-dispersible granules, ULV formulations, microcapsules and waxes.

**8.** A method for controlling undesirable plants, which comprises applying a herbicidally effective amount of one of the combinations of active compounds A + B defined in one or more of claims 1 to 6 onto the plants or the cultivated area.

**9.** The method as claimed in claim 8,

wherein
the application rate for the compounds of the formula (I) or salts thereof (type A compounds) is from 0.1 to 100 g of ai/ha, preferably from 2 to 40 g of al/ha, and the application rates for the compounds of type B are from 1 to 5000 g of ai/ha.

**10.** The method as claimed in claim 8 or 9,
wherein
the active compounds of types A and B are applied simultaneously or at different times in a weight ratio of 1:2500 to 20:1.

**11.** The method as claimed in any of claims 8 to 10,
wherein
the combinations are employed for the selective control of undesirable plants.

**12.** The method as claimed in claim 11,
wherein
the combinations are employed in transgenic crops.

**13.** The method as claimed in claim 12,
wherein
the combinations are employed in cereals, maize, rice, sugar cane, crop plantations, meadows or pasture land.

**14.** The method as claimed in any of claims 8 to 10,
wherein
the combinations are employed in crops of useful plants.

**15.** The method as claimed in any of claims 8 to 10,
wherein
the combinations are employed in non-crop areas.

**16.** The method as claimed in claim 8,
wherein
harmful plants which are usually resistant are controlled.

**Revendications**

**1.** Agents herbicides, contenant

A) au moins un composé du groupe des phénylsulfonylurées substituées de formule générale I et de leurs sels acceptés en agriculture

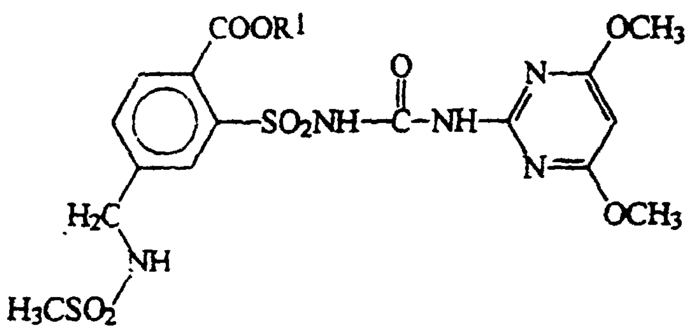

(I),

où

$R^1$ représente un groupe alkyle en $C_1$-$C_8$, alcényle en $C_3$-$C_4$, alcynyle en $C_3$-$C_4$ ou alkyle en $C_1$-$C_4$, qui est

substitué de une à quatre fois par des restes du groupe comprenant des halogènes et alkoxy en $C_1$-$C_2$,

et

B) au moins un composé efficace herbicide du groupe des composés, lequel est composé

Ba) des herbicides sélectivement efficaces contre les mauvaises herbes dans les céréales du groupe comprenant

B1) fénoxaprop, fénoxaprop-P

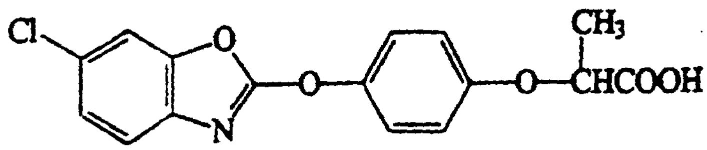

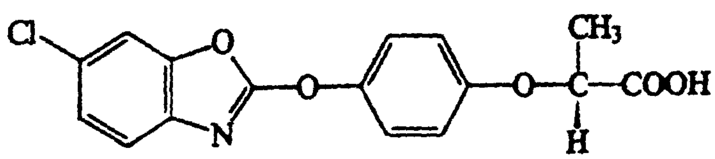

,

B2) isoproturon

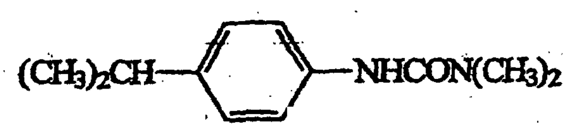

,

B3) diclofop

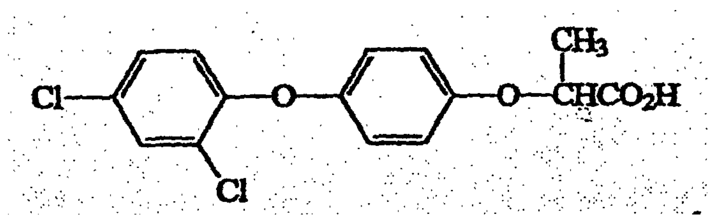

B4) clodinafop

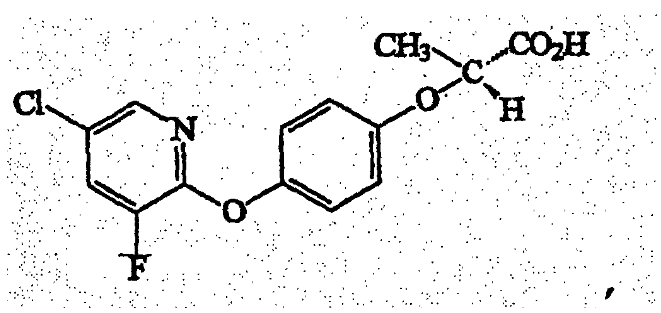

,

B5) mélanges de B4) et de cloquintocet

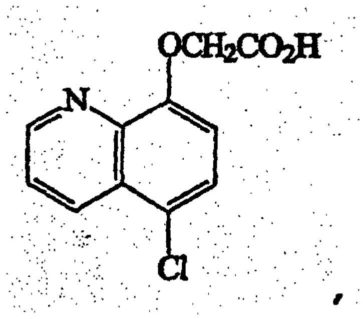

B6) chlortoluron

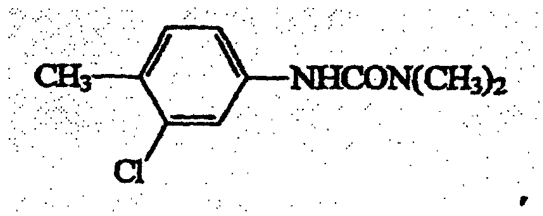

B7) methabenzthiazuron

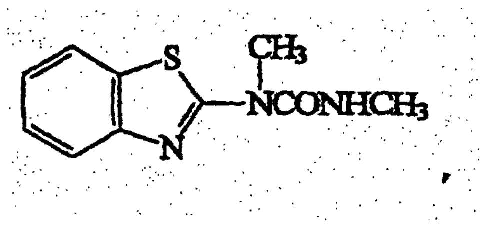

B8) imazamethabenz

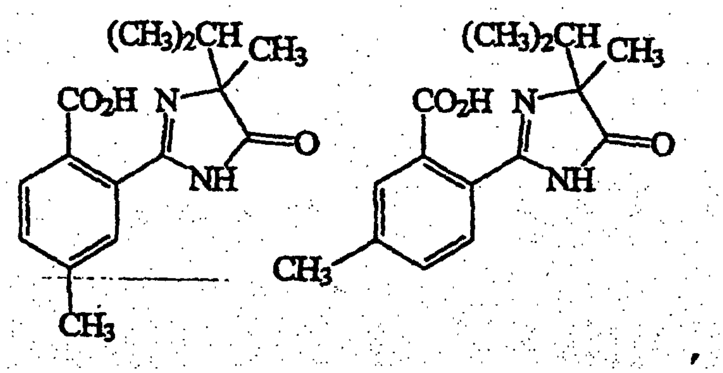

B9) tralkoxydim

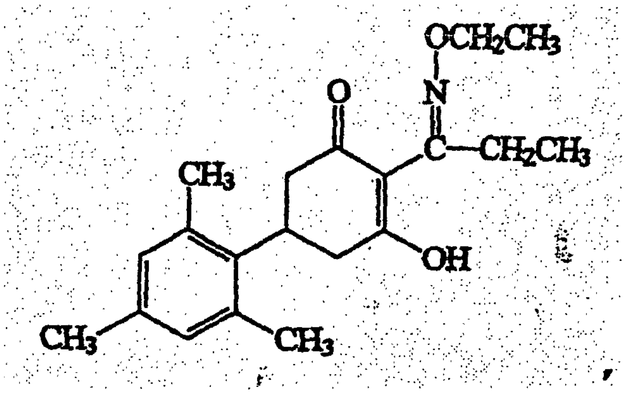

B10) difenzoquat

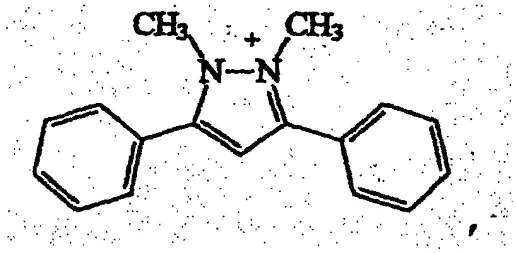

B11) flamprop, flamprop-M

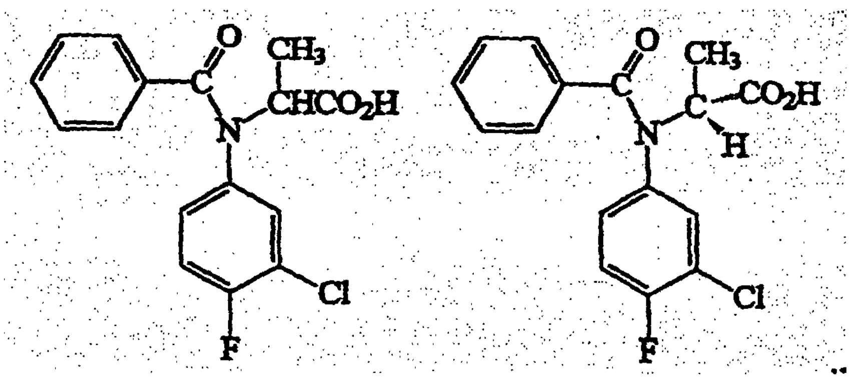

B12) pendimethalin

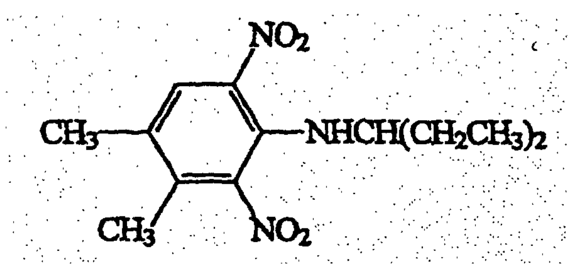

Bb) des herbicides sélectivement efficaces contre les dicotylédones dans les céréales du groupe comprenant

B13) mecoprop, mecoprop-P

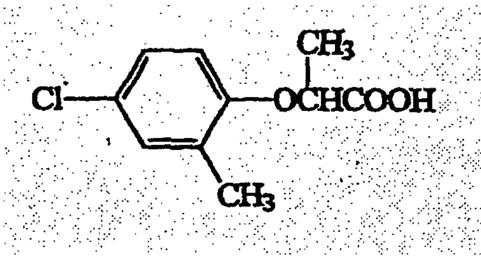
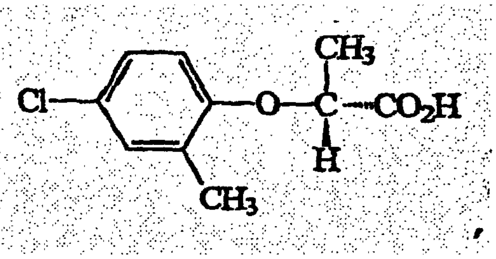

B14) MCPA

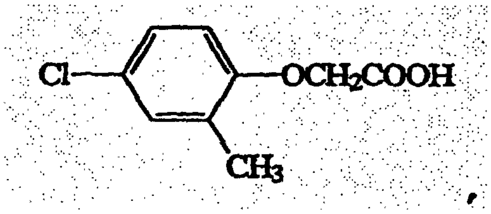

B15) dichlorprop, dichlorprop-P

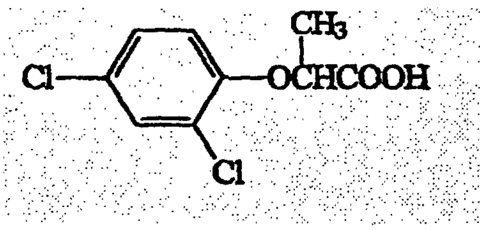
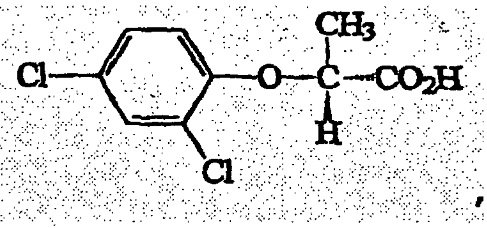

B16) 2,4-D

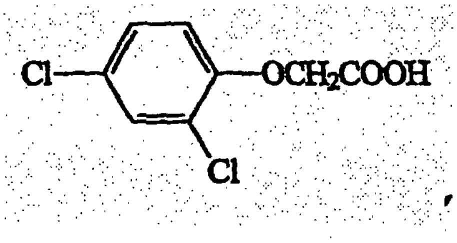

B17) dicamba

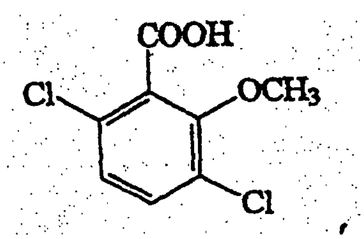

B18) fluoroxypyr

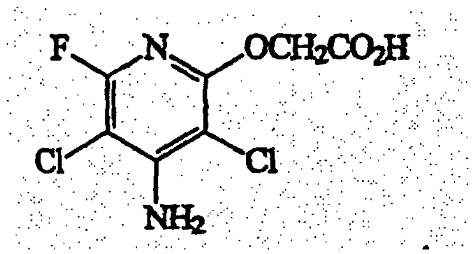

B19) ioxynil

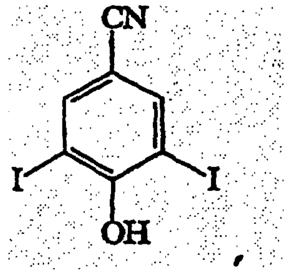

B20) bromoxynil

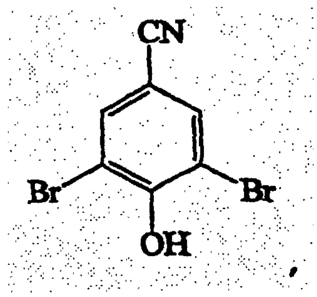

B21) bifenox
méthyl-5-(2,4-dichlorophénoxy)-2-nitrobenzoate

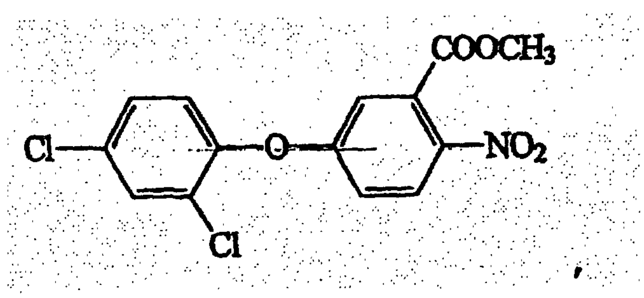

B22) fluoroglycofène

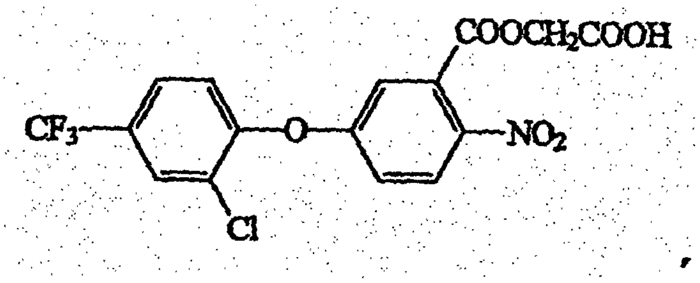

B23) lactofène

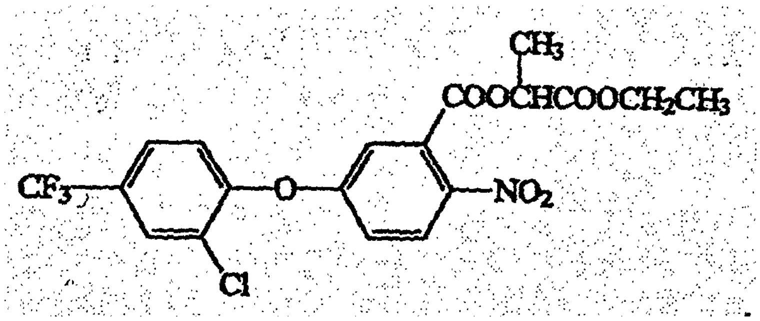

B24) fomesafen

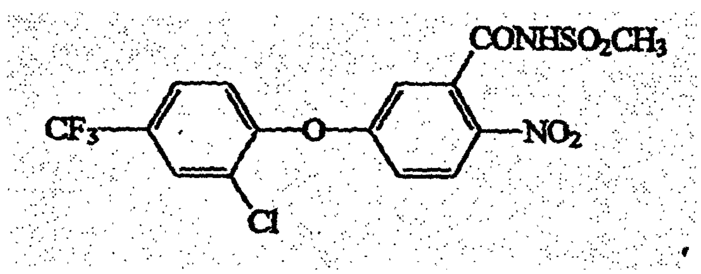

B25) oxyfluorfen

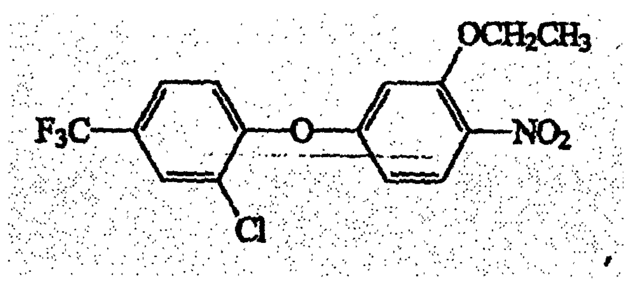

B26) ET-751

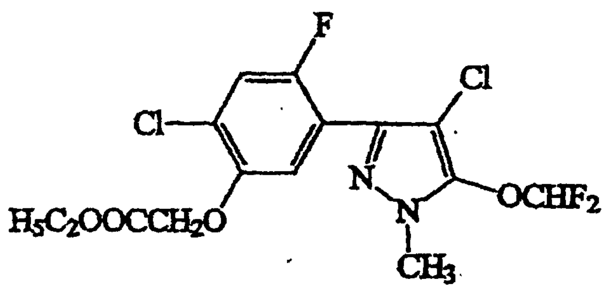

B27) azoles de formule générale II

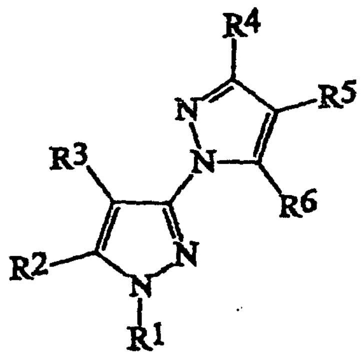

(II),

où

| | |
|---|---|
| $R^1$ | représente un groupe alkyle en $C_1$-$C_4$, |
| $R^2$ | représente un groupe alkyle en $C_1$-$C_4$, (alkyl en $C_1$-$C_4$)thio ou alkoxy en $C_1$-$C_4$, dont chaque reste peut être substitué par un ou plusieurs atomes d'halogène, ou |
| $R^1$ et $R^2$ | forment ensemble le groupe $(CH_2)_m$ avec m = 3 ou 4, |
| $R^3$ | représente un atome d'hydrogène ou d'halogène, |
| $R^4$ | représente un atome d'hydrogène ou un groupe alkyle en $C_1$-$C_4$, |
| $R^5$ | représente un atome d'hydrogène, un groupe nitro, cyano ou un des groupes $-COOR^7$, $-C(=X)NR^7R^8$ ou $-C(=X)R^{10}$, |
| $R^6$ | représente un atome d'hydrogène, un atome d'halogène, un groupe cyano, alkyle en $C_1$-$C_4$, (alkyl en $C_1$-$C_4$)thio ou $-NR^{11}R^{12}$, |
| $R^7$ et $R^8$ | représentent, identiques ou différents, un atome d'hydrogène ou un groupe alkyle en $C_1$-$C_4$, ou |
| $R^7$ et $R^8$ | forment ensemble avec l'atome d'azote auquel ils sont liés un noyau carbocyclique saturé à 5 ou 6 chaînons, |
| R10 | représente un atome d'hydrogène ou un groupe alkyle en $C_1$-$C_4$, où les derniers restes peuvent être éventuellement substitués avec un ou plusieurs atomes d'halogène, et |
| $R^{11}$ et $R^{12}$ | représentent, identiques ou différents, un atome d'hydrogène, un groupe alkyle en $C_1$-$C_4$ ou (alkoxy en $C_1$-$C_4$)carbonyle, où |
| $R^{11}$ et $R^{12}$ | peuvent former ensemble avec l'atome d'azote auquel ils sont liés, un carbocycle ou un cycle aromatique à 3, 5 ou 6 chaînons, dans lequel un atome de carbone peut facultativement être remplacé par un atome d'oxygène ; |

B28) F 8426

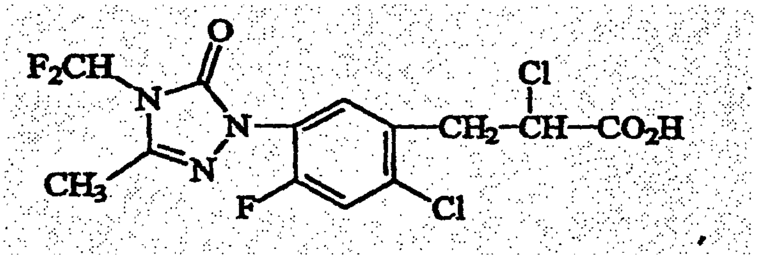

B29) diflufenican

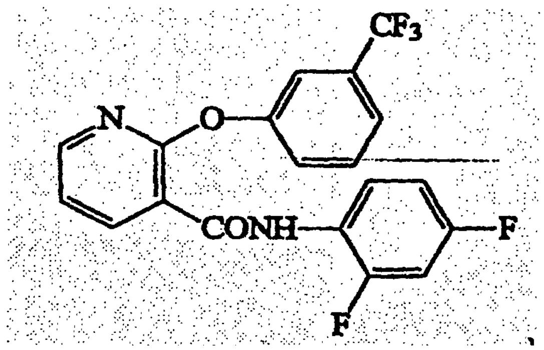

B30) bentazon

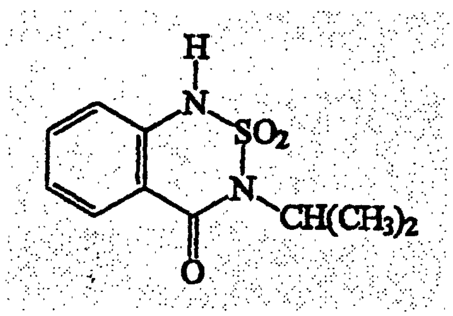

Bc) des herbicides sélectivement efficaces contre les mauvaises herbes et les dicotylédones dans les céréales du groupe comprenant

B31) metribuzin

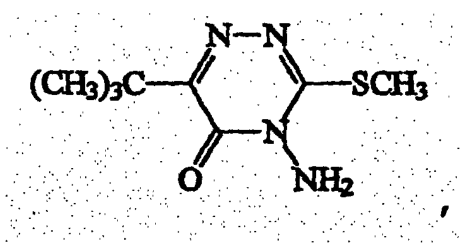

B32) metosulam

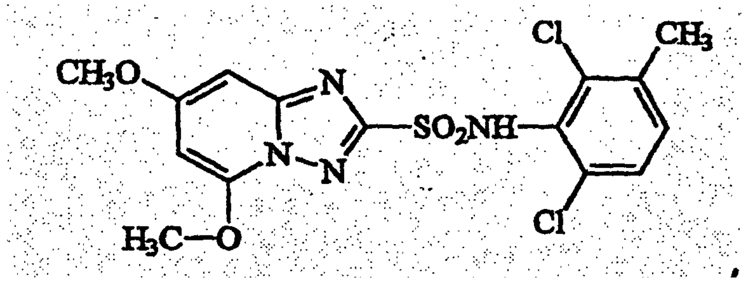

B32a) flupoxam

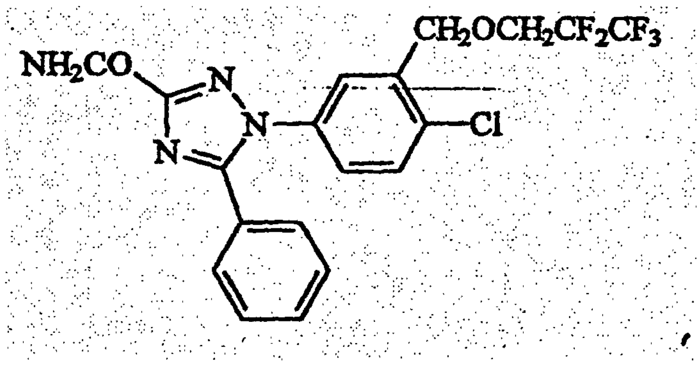

B33) prosulfocarb

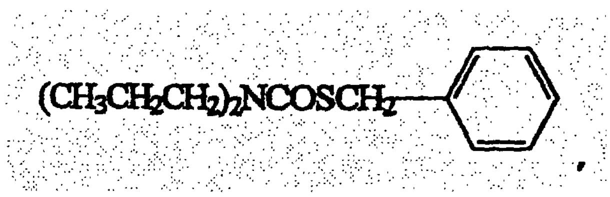

B34) flurtamone

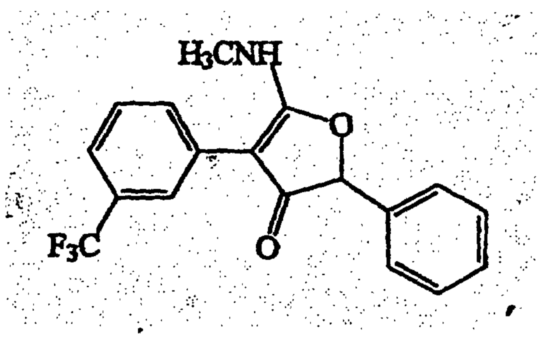

B35) amidosulfuron

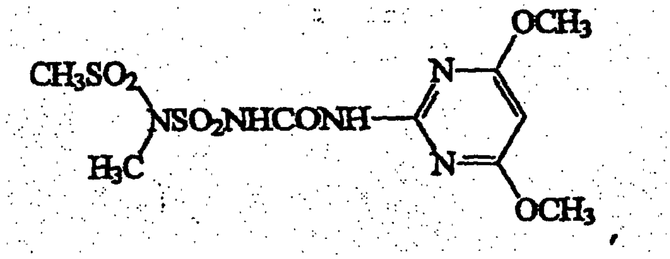

B36) metsulfuron

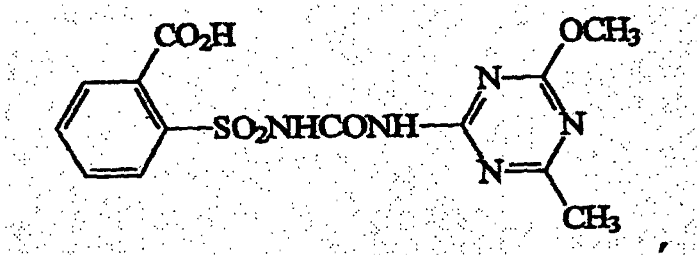

B37) tribenuron

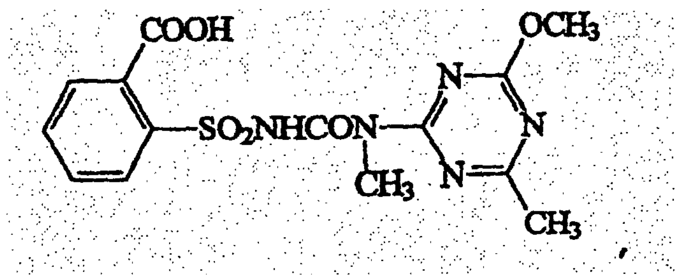

B38) thifensulfuron

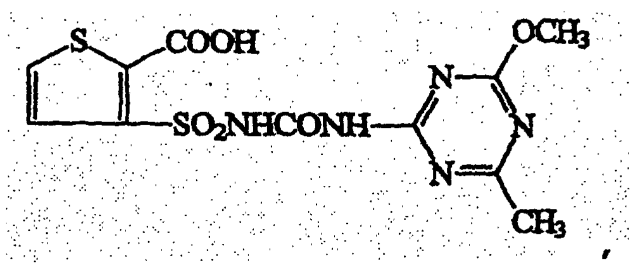

B39) triasulfuron

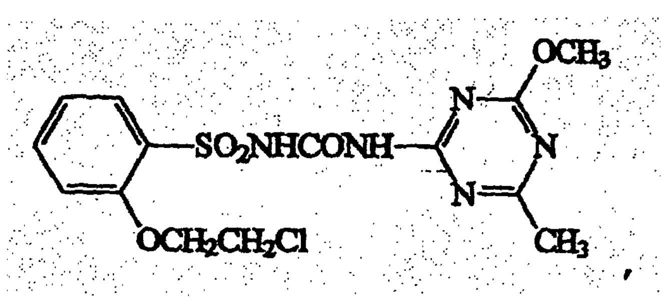

B40) chlorsulfuron

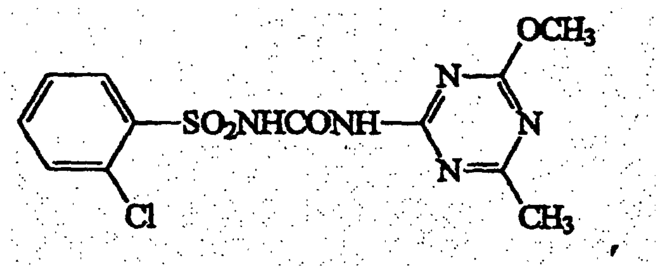

B41) sulfonylurées de formule générale III

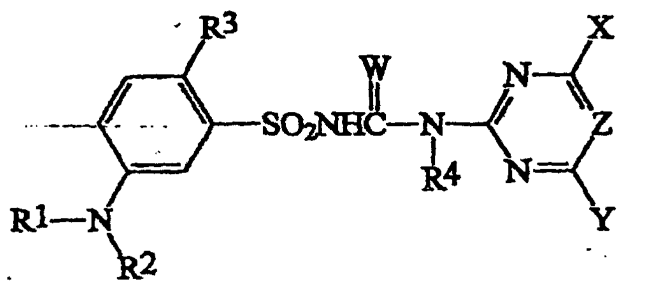 (III),

où

| | |
|---|---|
| $R^1$ | représente un groupe méthyle, éthyle, n-propyle, i-propyle ou allyle, |
| $R^2$ | représente un groupe CO-$R^5$, $COOR^6$, CO-$NR^8R^9$, CS-$NR^{10}R^{11}$, $SO_2R^{14}$ ou $SO_2NR^{15}R^{16}$ |
| $R^3$ | représente un groupe $COR^{17}$, $COOR^{18}$, $CONR^{19}R^{20}$ ou CO-ON=$CR^{22}R^{23}$, |
| $R^4$ | représente un atome d'hydrogène ou un groupe alkyle en $C_1$-$C_4$, |
| $R^5$ | représente un atome d'hydrogène, un groupe alkyle en $C_1$-$C_4$, haloalkyle en $C_1$-$C_2$, cyclopropyle, phényle, benzyle ou hétéroaryle avec 5 ou 6 atomes nucléaires, où les 3 derniers restes cités sont non substitués ou substitués par un ou plusieurs atomes d'halogène, |
| $R^6$ | représente un groupe alkyle en $C_1$-$C_4$, allyle, propargyle ou cyclopropyle, |
| $R^8$ | représente un atome d'hydrogène, un groupe alkyle en $C_1$-$C_4$, haloalkyle en $C_1$-$C_4$ ou (alkoxy en $C_1$-$C_4$)carbonyle |
| $R^9$-$R^{11}$ | représentent, indépendamment l'un de l'autre, identiques ou différents, un atome d'hydrogène ou un groupe alkyle en $C_1$-$C_4$, |
| $R^{14}$ | représente un groupe alkyle en $C_1$-$C_4$, |
| $R^{15}$ et $R^{16}$ | représentent, indépendamment l'un de l'autre, identiques ou différents, un atome d'hydrogène ou un groupe alkyle en $C_1$-$C_4$, |
| $R^{17}$ | représente un atome d'hydrogène, un groupe alkyle en $C_1$-$C_4$, haloalkyle en $C_1$-$C_4$, cycloalkyle en $C_3$-$C_6$, phényle ou hétéroaryle, où les 2 derniers restes cités sont non substitués ou substitués, |
| $R^{18}$ | représente un atome d'hydrogène, un groupe alkyle en $C_1$-$C_4$, alcényle en $C_2$-$C_6$ ou alcynyle en $C_2$-$C_6$, où les 3 derniers restes cités sont non substitués ou substitués par un ou plusieurs restes du groupe comprenant des halogènes, alkoxy en $C_1$-$C_4$, (alkyl en $C_1$-$C_4$)-thio et $NR^{31}R^{32}$, ou cycloalkyle en $C_3$-$C_6$ ou cycloalkyle en $C_3$-$C_6$-alkyle en $C_1$-$C_3$, |
| $R^{19}$ | est analogue à $R^8$ |
| $R^{20}$ | est analogue à $R^9$ |
| $R^{22}$ et $R^{23}$ | représentent, indépendamment l'un de l'autre, identiques ou différents, un atome d'hydrogène ou un groupe alkyle en $C_1$-$C_2$, |
| $R^{31}$ et $R^{32}$ | représentent, indépendamment l'un de l'autre, identiques ou différents, un atome d'hydrogène ou un groupe alkyle en $C_1$-$C_4$, |

W représente un atome d'oxygène ou de soufre,
X représente un groupe alkyle en $C_1$-$C_4$, alkoxy en $C_1$-$C_4$, haloalkyle en $C_1$-$C_4$, (alkyl en $C_1$-$C_4$)thio, un atome d'halogène ou un groupe mono- ou di- (alkyl en $C_1$-$C_2$)amino,
Y représente un groupe alkyle en $C_1$-$C_4$, alkoxy en $C_1$-$C_4$, haloalkyle en $C_1$-$C_4$ ou (alkyl en $C_1$-$C_4$)-thio, et
Z représente CH ou N,

B42) sulfonylurées de formule générale IV et leurs sels acceptables et acceptés en agriculture

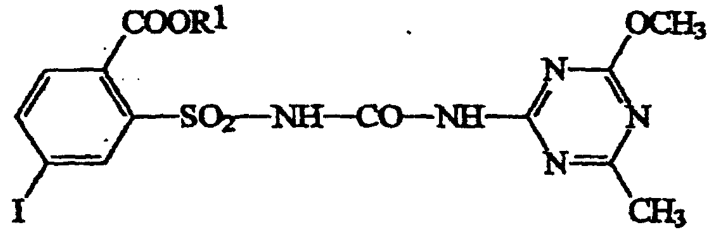
(IV),

où

$R^1$ représente un groupe alkyle en $C_1$-$C_8$, alcényle en $C_3$-$C_4$, alcynyle en $C_3$-$C_4$ ou alkyle en $C_1$-$C_4$ qui est substitué une à quatre fois par des restes du groupe compprenant des halogènes et alkoxy en $C_1$-$C_2$,

en préférant en particulier que dans l'herbicide de formule (IV) ou son sel

$R^1$ représente un groupe méthyle ;

et où aussi des sels montrent une efficacité particulièrement favorable, où le sel de l'herbicide de formule (IV) est formé par remplacement de l'atome d'hydrogène du groupe -$SO_2$-NH-CO- par un cation du groupe des métaux alcalins, des métaux alcalino-terreux et ammonium, de préférence un cation sodium,
B43) flupyrsulfuron (DPX-KE459)

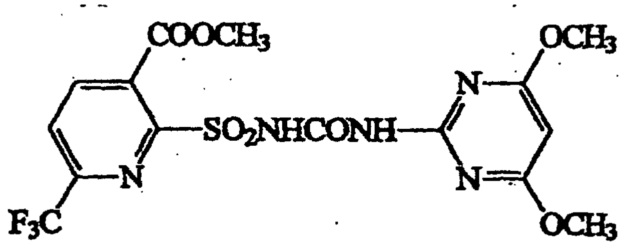
,

B44) MON 48500 et
B45) sulfosulfuron (MON37500)

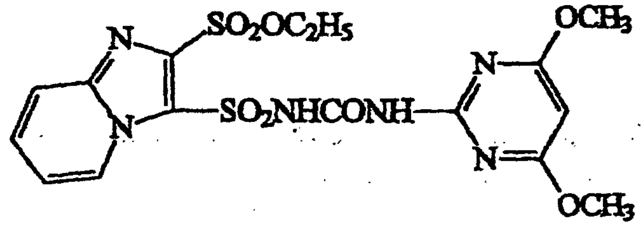

et

Bd) des herbicides non sélectifs dans les terres en friche ou dans des cultures pérennes (plantations) et/ou sélectifs dans des cultures transgéniques avec un effet contre les mauvaises herbes du groupe comprenant

B46) glufosinate, glufosinate-P

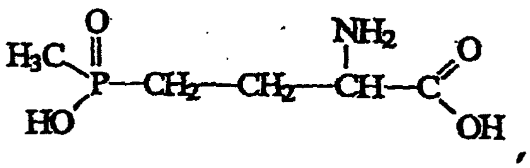

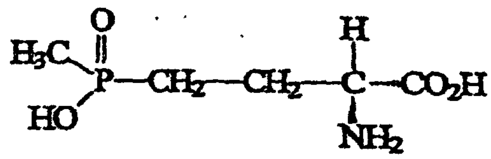

B47) glyphosate,

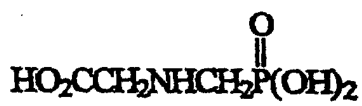

où ils contiennent les composés de formule I ou leurs sels (composés de type A) et les composés du groupe B dans un rapport en poids de 1:2500 à 20:1 dans une quantité efficace de façon synergique.

**2.** Agent selon la revendication 1,
**caractérisé en ce que**, dans l'herbicide de formule (I) ou son sel,

$R^1$ représente un groupe méthyle, éthyle, n- ou isopropyle, n-, tert.-, 2-butyle ou isobutyle, n-pentyle, isopentyle, n-hexyle, isohexyle, 1,3-diméthylbutyle, n-heptyle, 1-méthylhexyle ou 1,4-diméthylpentyle.

**3.** Agent selon la revendication 1 ou 2, **caractérisé en ce que**, dans l'herbicide de formule (I) ou son sel, $R^1$ représente un groupe méthyle.

**4.** Agent selon une ou plusieurs des revendications précédentes, **caractérisé en ce que** le sel de l'herbicide de formule (I) est formé par remplacement d'un atome d'hydrogène du groupe -SO2-NH-CO- par un cation du groupe des métaux alcalins, des métaux alcalino-terreux et ammonium, de préférence ammonium, de préférence un cation sodium.

**5.** Agent selon la revendication 1, **caractérisé en ce qu'**il contient, en tant qu'herbicide du type B, ammonium-glufosinate.

**6.** Agents selon une ou plusieurs des revendications précédentes, **caractérisés en ce qu'**ils contiennent de 0,1 à 99% en poids des substances actives A et B au côté d'adjuvants de formulation courants.

**7.** Procédé pour la préparation d'un agent selon une ou plusieurs des revendications précédentes, **caractérisé en ce que** l'on formule les composés de formule I ou leurs sels (composés de type A) avec un ou plusieurs composés du type B et éventuellement avec un ou plusieurs composés antidotes de façon analogue à une formulation phytosanitaire courante du groupe comprenant des poudres mouillables, concentrés émulsionnables, solutions aqueuses, émulsions, solutions pulvérisables (mélange extemporané), dispersions à base d'huile ou d'eau, suspoémulsions, agents pour poudrage, agents de désinfection, granulés pour l'application au sol ou par épandage, granulés

à disperser dans l'eau, formulations ULV, microcapsules et cires.

**8.** Procédé pour la lutte contre des plantes indésirables, **caractérisé en ce que** l'on applique sur celles-ci ou les surfaces cultivables une quantité efficace herbicide d'une des combinaisons définies dans une ou plusieurs des revendications 1 à 6 de substances actives A + B.

**9.** Procédé selon la revendication 8, **caractérisé en ce que** la concentration d'emploi pour les composés de formule (I) ou leurs sels (composés de type A) s'élève de 0,1 à 100 g m.a./ha, de préférence de 2 à 40 g m.a./ha, et les concentrations d'emploi pour les composés du type B s'élèvent de 1 à 5000 g m.a./ha.

**10.** Procédé selon la revendication 8 ou 9, **caractérisé en ce que** l'on applique les substances actives des types A et B, en même temps ou de façon séparée dans le temps, dans un rapport en poids de 1:2500 à 20:1.

**11.** Procédé selon l'une des revendications 8 à 10, **caractérisé en ce que** l'on emploie les combinaisons pour la lutte sélective contre des plantes indésirables.

**12.** Procédé selon la revendication 11, **caractérisé en ce que** l'on emploie les combinaisons dans des cultures transgéniques.

**13.** Procédé selon la revendication 12, **caractérisé en ce que** l'on emploie les combinaisons dans des cultures de céréales, de maïs, de riz, de betteraves à sucre, de plantations, dans des pâturages ou des herbages.

**14.** Procédé selon l'une des revendications 8 à 10, **caractérisé en ce que** l'on emploie les combinaisons dans des cultures de plantes utiles.

**15.** Procédé selon l'une des revendications 8 à 10, **caractérisé en ce que** l'on emploie les combinaisons sur des terres en friche.

**16.** Procédé selon la revendication 8, **caractérisé en ce que**, sinon, on lutte contre des plantes nuisibles résistantes.